# EUROPEAN PATENT APPLICATION

(11) **EP 4 819 695 A2**
(43) Date of publication of application: **07.10.2026**
(21) Application number: 26200503.6
(22) Date of filing: 18.01.2023
(51) Int. Cl.: H04W 48/12

(54) **INTER-USER-EQUIPMENT SIDELINK SCHEDULING**

(30) Priority: 14.02.2022 US 202263267972 P; 07.12.2022 US 202218062919
(62) Document number(s) of the earlier application(s) in accordance with Art. 76 EPC: 23706228.6 / 4 480 261
(71) Applicant: QUALCOMM Incorporated, San Diego, CA 92121-1714 (US)
(72) Inventor: LI, Qing, San Diego, CA 92121-1714 (US); LI, Junyi, San Diego, CA 92121-1714 (US); CHENG, Hong, San Diego, CA 92121-1714 (US)
(74) Representative: Bardehle Pagenberg Partnerschaft mbB Patentanwälte Rechtsanwälte

(57) **Abstract**

Various aspects of the present disclosure generally relate to wireless communication. In some aspects, a first user equipment (UE) may transmit, to a second UE, an inter-UE coordination (IUC) request, the IUC request indicating at least one of one or more sidelink carriers, one or more sidelink bandwidth parts (BWPs), or one or more sidelink resource pools. The first UE may receive, from the second UE, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools. Numerous other aspects are described.

## Description

### CROSS-REFERENCE TO RELATED APPLICATIONS

This Patent Application claims priority to U.S. Provisional Patent Application No. 63/267,972, filed on February 14, 2022, entitled "INTER-USER-EQUIPMENT SIDELINK SCHEDULING," and U.S. Nonprovisional Patent Application No. 18/062,919, filed on December 7, 2022, entitled "INTER-USER-EQUIPMENT SIDELINK SCHEDULING," which are hereby expressly incorporated by reference herein.

### FIELD OF THE DISCLOSURE

Aspects of the present disclosure generally relate to wireless communication and to techniques and apparatuses for inter-user-equipment sidelink scheduling.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations (or network entities) that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

### SUMMARY

Some aspects described herein relate to a method of wireless communication performed by a first user equipment (UE). The method may include transmitting, to a second UE, an inter-UE coordination (IUC) request, where the IUC request indicates at least one of one or more sidelink carriers, one or more sidelink bandwidth parts (BWPs), or one or more sidelink resource pools. The method may include receiving, from the second UE, an IUC response that indicates at least one of: one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.

Some aspects described herein relate to a method of wireless communication performed by a first UE. The method may include receiving, from a second UE, an IUC request, where the IUC request indicates at least one of one or more sidelink carriers, one or more sidelink BWPs, or one or more sidelink resource pools. The method may include transmitting, to the second UE, an IUC response that indicates at least one of, one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.

Some aspects described herein relate to a method of wireless communication performed by a first UE. The method may include transmitting, to a second UE, a first IUC request. The method may include initiating an IUC request timer based at least in part on transmitting the first IUC request.

Some aspects described herein relate to a method of wireless communication performed by a first UE. The method may include receiving, from a second UE, a first IUC request. The method may include initiating an IUC request timer based at least in part on receiving the first IUC request.

Some aspects described herein relate to a method of wireless communication performed by a first UE. The method may include transmitting, to a second UE and as part of a sidelink connection establishment procedure, a first sidelink communication indicating at least one of, one or more supported sidelink carriers for the first UE, one or more supported sidelink BWPs for the first UE, or one or more supported sidelink resource pools for the first UE. The method may include receiving, from the second UE and as part of the sidelink connection establishment procedure, a second sidelink communication indicating at least one of, one or more supported sidelink carriers for the second UE, one or more supported sidelink BWPs for the second UE, or one or more supported sidelink resource pools for the second UE. The method may include receiving, from the second UE and as part of the sidelink connection establishment procedure, a third sidelink communication indicating at least one of, one or more preferred sidelink carriers for the second UE, one or more preferred sidelink BWPs for the second UE, or one or more preferred sidelink resource pools for the second UE. The method may include transmitting, to the second UE and as part of the sidelink connection establishment procedure, a fourth sidelink communication indicating at least one of, one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.

Some aspects described herein relate to a method of wireless communication performed by a first UE. The method may include receiving, from a second UE and as part of a sidelink connection establishment procedure, a first sidelink communication indicating at least one of, one or more supported sidelink carriers for the second UE, one or more supported sidelink BWPs for the second UE, or one or more supported sidelink resource pools for the second UE. The method may include transmitting, to the second UE and as part of the sidelink connection establishment procedure, a second sidelink communication indicating at least one of, one or more supported sidelink carriers for the first UE, one or more supported sidelink BWPs for the first UE, or one or more supported sidelink resource pools for the first UE. The method may include transmitting, to the second UE and as part of the sidelink connection establishment procedure, a third sidelink communication indicating at least one of, one or more preferred sidelink carriers for the first UE, one or more preferred sidelink BWPs for the first UE, or one or more preferred sidelink resource pools for the first UE. The method may include receiving, from the second UE and as part of the sidelink connection establishment procedure, a fourth sidelink communication indicating at least one of, one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.

Some aspects described herein relate to a method of wireless communication performed by a first UE. The method may include determining that an IUC response condition has been satisfied. The method may include transmitting, to a second UE and based at least in part on determining that the IUC response condition has been satisfied, an IUC response that indicates, at least one of one or more sidelink carriers, one or more sidelink BWPs, or one or more sidelink resource pools at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools.

Some aspects described herein relate to a first UE for wireless communication. The first UE may include a memory and one or more processors coupled to the memory. The one or more processors may be configured to transmit, to a second UE, an IUC request, wherein the IUC request indicates at least one of one or more sidelink carriers, one or more sidelink BWPs, or one or more sidelink resource pools. The one or more processors may be configured to receive, from the second UE, an IUC response that indicates at least one of one or more sidelink time domain resources associated with at least one of the one or more sidelink carriers, the one or more sidelink BWPs, or the one or more sidelink resource pools or one or more sidelink frequency domain resources associated with at least one of the one or more sidelink carriers, the one or more sidelink BWPs, or the one or more sidelink resource pools.

Some aspects described herein relate to a first UE for wireless communication. The first UE may include a memory and one or more processors coupled to the memory. The one or more processors may be configured to receive, from a second UE, an IUC request, wherein the IUC request indicates at least one of one or more sidelink carriers, one or more sidelink BWPs, or one or more sidelink resource pools. The one or more processors may be configured to transmit, to the second UE, an IUC response that indicates at least one of one or more sidelink time domain resources associated with at least one of the one or more sidelink carriers, the one or more sidelink BWPs, or the one or more sidelink resource pools or one or more sidelink frequency domain resources associated with at least one of the one or more sidelink carriers, the one or more sidelink BWPs, or the one or more sidelink resource pools.

Some aspects described herein relate to a first UE for wireless communication. The first UE may include a memory and one or more processors coupled to the memory. The one or more processors may be configured to transmit, to a second UE, a first IUC request. The one or more processors may be configured to initiate an IUC request timer based at least in part on transmitting the first IUC request.

Some aspects described herein relate to a first UE for wireless communication. The first UE may include a memory and one or more processors coupled to the memory. The one or more processors may be configured to receive, from a second UE, a first IUC request. The one or more processors may be configured to initiate an IUC request timer based at least in part on receiving the first IUC request.

Some aspects described herein relate to a first UE for wireless communication. The first UE may include a memory and one or more processors coupled to the memory. The one or more processors may be configured to transmit, to a second UE and as part of a sidelink connection establishment procedure, a first sidelink communication indicating at least one of one or more supported sidelink carriers for the first UE, one or more supported sidelink BWPs for the first UE, or one or more supported sidelink resource pools for the first UE. The one or more processors may be configured to receive, from the second UE and as part of the sidelink connection establishment procedure, a second sidelink communication indicating at least one of one or more supported sidelink carriers for the second UE, one or more supported sidelink BWPs for the second UE, or one or more supported sidelink resource pools for the second UE. The one or more processors may be configured to receive, from the second UE and as part of the sidelink connection establishment procedure, a third sidelink communication indicating at least one of one or more preferred sidelink carriers for the second UE, one or more preferred sidelink BWPs for the second UE, or one or more preferred sidelink resource pools for the second UE. The one or more processors may be configured to transmit, to the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.

Some aspects described herein relate to a first UE for wireless communication. The first UE may include a memory and one or more processors coupled to the memory. The one or more processors may be configured to receive, from a second UE and as part of a sidelink connection establishment procedure, a first sidelink communication indicating at least one of one or more supported sidelink carriers for the second UE, one or more supported sidelink BWPs for the second UE, or one or more supported sidelink resource pools for the second UE. The one or more processors may be configured to transmit, to the second UE and as part of the sidelink connection establishment procedure, a second sidelink communication indicating at least one of one or more supported sidelink carriers for the first UE, one or more supported sidelink BWPs for the first UE, or one or more supported sidelink resource pools for the first UE. The one or more processors may be configured to transmit, to the second UE and as part of the sidelink connection establishment procedure, a third sidelink communication indicating at least one of one or more preferred sidelink carriers for the first UE, one or more preferred sidelink BWPs for the first UE, or one or more preferred sidelink resource pools for the first UE. The one or more processors may be configured to receive, from the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.

Some aspects described herein relate to a first UE for wireless communication. The first UE may include a memory and one or more processors coupled to the memory. The one or more processors may be configured to determine that an IUC response condition has been satisfied. The one or more processors may be configured to transmit, to a second UE and based at least in part on determining that the IUC response condition has been satisfied, an IUC response that indicates at least one of one or more sidelink carriers, one or more sidelink BWPs, or one or more sidelink resource pools, and at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools.

Some aspects described herein relate to a non-transitory computer-readable medium storing a set of instructions for wireless communication. The set of instructions includes one or more instructions that, when executed by one or more processors of a first UE, cause the first UE to transmit, to a second UE, an IUC request, wherein the IUC request indicates at least one of one or more sidelink carriers, one or more sidelink BWPs, or one or more sidelink resource pools. The set of instructions includes one or more instructions that, when executed by one or more processors of a first UE, cause the first UE to receive, from the second UE, an IUC response that indicates at least one of one or more sidelink time domain resources associated with at least one of the one or more sidelink carriers, the one or more sidelink BWPs, or the one or more sidelink resource pools or one or more sidelink frequency domain resources associated with at least one of the one or more sidelink carriers, the one or more sidelink BWPs, or the one or more sidelink resource pools.

Some aspects described herein relate to a non-transitory computer-readable medium storing a set of instructions for wireless communication. The set of instructions includes one or more instructions that, when executed by one or more processors of a first UE, cause the first UE to receive, from a second UE, an IUC request, wherein the IUC request indicates at least one of one or more sidelink carriers, one or more sidelink BWPs, or one or more sidelink resource pools. The set of instructions includes one or more instructions that, when executed by one or more processors of a first UE, cause the first UE to transmit, to the second UE, an IUC response that indicates at least one of one or more sidelink time domain resources associated with at least one of the one or more sidelink carriers, the one or more sidelink BWPs, or the one or more sidelink resource pools or one or more sidelink frequency domain resources associated with at least one of the one or more sidelink carriers, the one or more sidelink BWPs, or the one or more sidelink resource pools.

Some aspects described herein relate to a non-transitory computer-readable medium storing a set of instructions for wireless communication. The set of instructions includes one or more instructions that, when executed by one or more processors of a first UE, cause the first UE to transmit, to a second UE, a first IUC request. The set of instructions includes one or more instructions that, when executed by one or more processors of a first UE, cause the first UE to initiate an IUC request timer based at least in part on transmitting the first IUC request.

Some aspects described herein relate to a non-transitory computer-readable medium storing a set of instructions for wireless communication. The set of instructions includes one or more instructions that, when executed by one or more processors of a first UE, cause the first UE to receive, from a second UE, a first IUC request. The set of instructions includes one or more instructions that, when executed by one or more processors of a first UE, cause the first UE to initiate an IUC request timer based at least in part on receiving the first IUC request.

Some aspects described herein relate to a non-transitory computer-readable medium storing a set of instructions for wireless communication. The set of instructions includes one or more instructions that, when executed by one or more processors of a first UE, cause the first UE to transmit, to a second UE and as part of a sidelink connection establishment procedure, a first sidelink communication indicating at least one of one or more supported sidelink carriers for the first UE, one or more supported sidelink BWPs for the first UE, or one or more supported sidelink resource pools for the first UE. The set of instructions includes one or more instructions that, when executed by one or more processors of a first UE, cause the first UE to receive, from the second UE and as part of the sidelink connection establishment procedure, a second sidelink communication indicating at least one of one or more supported sidelink carriers for the second UE, one or more supported sidelink BWPs for the second UE, or one or more supported sidelink resource pools for the second UE. The set of instructions includes one or more instructions that, when executed by one or more processors of a first UE, cause the first UE to receive, from the second UE and as part of the sidelink connection establishment procedure, a third sidelink communication indicating at least one of one or more preferred sidelink carriers for the second UE, one or more preferred sidelink BWPs for the second UE, or one or more preferred sidelink resource pools for the second UE. The set of instructions includes one or more instructions that, when executed by one or more processors of a first UE, cause the first UE to transmit, to the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.

Some aspects described herein relate to a non-transitory computer-readable medium storing a set of instructions for wireless communication. The set of instructions includes one or more instructions that, when executed by one or more processors of a first UE, cause the first UE to receive, from a second UE and as part of a sidelink connection establishment procedure, a first sidelink communication indicating at least one of one or more supported sidelink carriers for the second UE, one or more supported sidelink BWPs for the second UE, or one or more supported sidelink resource pools for the second UE. The set of instructions includes one or more instructions that, when executed by one or more processors of a first UE, cause the first UE to transmit, to the second UE and as part of the sidelink connection establishment procedure, a second sidelink communication indicating at least one of one or more supported sidelink carriers for the first UE, one or more supported sidelink BWPs for the first UE, or one or more supported sidelink resource pools for the first UE. The set of instructions includes one or more instructions that, when executed by one or more processors of a first UE, cause the first UE to transmit, to the second UE and as part of the sidelink connection establishment procedure, a third sidelink communication indicating at least one of one or more preferred sidelink carriers for the first UE, one or more preferred sidelink BWPs for the first UE, or one or more preferred sidelink resource pools for the first UE. The set of instructions includes one or more instructions that, when executed by one or more processors of a first UE, cause the first UE to receive, from the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.

Some aspects described herein relate to a first apparatus for wireless communication. The first apparatus includes means for transmitting, to a second apparatus, an IUC request, wherein the IUC request indicates at least one of one or more sidelink carriers, one or more sidelink BWPs, or one or more sidelink resource pools. The first apparatus includes means for receiving, from the second apparatus, an IUC response that indicates at least one of one or more sidelink time domain resources associated with at least one of the one or more sidelink carriers, the one or more sidelink BWPs, or the one or more sidelink resource pools or one or more sidelink frequency domain resources associated with at least one of the one or more sidelink carriers, the one or more sidelink BWPs, or the one or more sidelink resource pools.

Some aspects described herein relate to a first apparatus for wireless communication. The first apparatus includes means for receiving, from a second apparatus, an IUC request, wherein the IUC request indicates at least one of one or more sidelink carriers, one or more sidelink BWPs, or one or more sidelink resource pools. The first apparatus includes means for transmitting, to the second apparatus, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.

Some aspects described herein relate to a first apparatus for wireless communication. The first apparatus includes means for transmitting, to a second apparatus, a first IUC request. The first apparatus includes means for initiating an IUC request timer based at least in part on transmitting the first IUC request.

Some aspects described herein relate to a first apparatus for wireless communication. The first apparatus includes means for receiving, from a second apparatus, a first IUC request. The first apparatus includes means for initiating an IUC request timer based at least in part on receiving the first IUC request.

Some aspects described herein relate to a first apparatus for wireless communication. The first apparatus includes means for transmitting, to a second apparatus and as part of a sidelink connection establishment procedure, a first sidelink communication indicating at least one of one or more supported sidelink carriers for the first apparatus, one or more supported sidelink BWPs for the first apparatus, or one or more supported sidelink resource pools for the first apparatus. The first apparatus includes means for receiving, from the second apparatus and as part of the sidelink connection establishment procedure, a second sidelink communication indicating at least one of one or more supported sidelink carriers for the second apparatus, one or more supported sidelink BWPs for the second apparatus, or one or more supported sidelink resource pools for the second apparatus. The first apparatus includes means for receiving, from the second apparatus and as part of the sidelink connection establishment procedure, a third sidelink communication indicating at least one of one or more preferred sidelink carriers for the second apparatus, one or more preferred sidelink BWPs for the second apparatus, or one or more preferred sidelink resource pools for the second apparatus. The first apparatus includes means for transmitting, to the second apparatus and as part of the sidelink connection establishment procedure, a fourth sidelink communication indicating at least one of one or more determined sidelink carriers for sidelink communication between the first apparatus and the second apparatus, one or more determined sidelink BWPs for sidelink communication between the first apparatus and the second apparatus, or one or more determined sidelink resource pools for sidelink communication between the first apparatus and the second apparatus.

Some aspects described herein relate to a first apparatus for wireless communication. The first apparatus includes means for receiving, from a second apparatus and as part of a sidelink connection establishment procedure, a first sidelink communication indicating at least one of one or more supported sidelink carriers for the second apparatus, one or more supported sidelink BWPs for the second apparatus, or one or more supported sidelink resource pools for the second apparatus. The first apparatus includes means for transmitting, to the second apparatus and as part of the sidelink connection establishment procedure, a second sidelink communication indicating at least one of one or more supported sidelink carriers for the first apparatus, one or more supported sidelink BWPs for the first apparatus, or one or more supported sidelink resource pools for the first apparatus. The first apparatus includes means for transmitting, to the second apparatus and as part of the sidelink connection establishment procedure, a third sidelink communication indicating at least one of one or more preferred sidelink carriers for the first apparatus, one or more preferred sidelink BWPs for the first apparatus, or one or more preferred sidelink resource pools for the first apparatus. The first apparatus includes means for receiving, from the second apparatus and as part of the sidelink connection establishment procedure, a fourth sidelink communication indicating at least one of one or more determined sidelink carriers for sidelink communication between the first apparatus and the second apparatus, one or more determined sidelink BWPs for sidelink communication between the first apparatus and the second apparatus, or one or more determined sidelink resource pools for sidelink communication between the first apparatus and the second apparatus.

Aspects generally include a method, apparatus, system, computer program product, non-transitory computer-readable medium, user equipment, base station, network entity, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of sidelink communications, in accordance with the present disclosure.
Fig. 4 is a diagram illustrating an example of sidelink communications and access link communications, in accordance with the present disclosure.
Figs. 5A and 5B are diagrams illustrating examples associated with inter-UE coordination (IUC), in accordance with the present disclosure.
Figs. 6A and 6B are diagrams illustrating examples associated with IUC configuration, in accordance with the present disclosure.
Figs. 7A-10 are diagrams illustrating examples associated with inter-UE sidelink scheduling, in accordance with the present disclosure.
Figs. 11A and 11B are diagrams illustrating examples of medium access control (MAC) control element (MAC-CE) formats for an IUC request, in accordance with the present disclosure.
Fig. 12 is a diagram illustrating an example MAC-CE format for an IUC response, in accordance with the present disclosure.
Figs. 13-19 are diagrams illustrating example processes associated with inter-UE sidelink scheduling, in accordance with the present disclosure.
Fig. 20 is a diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

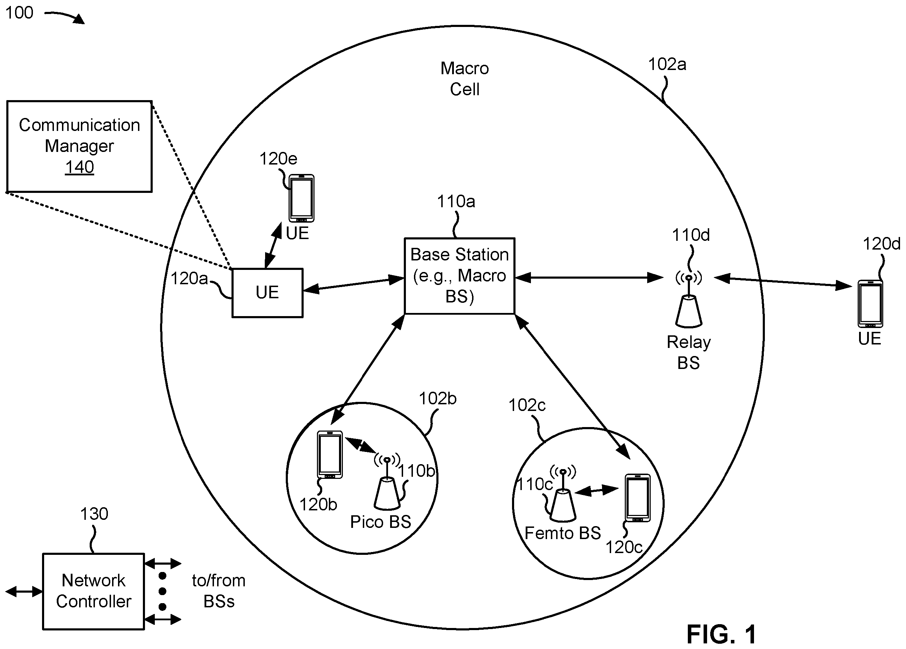

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network entities in the wireless network 100 through various types of backhaul interfaces, such as a direct physical connection or a virtual network, using any suitable transport network.

In some aspects, the term "base station" (e.g., the base station 110) or "network entity" may refer to an aggregated base station, a disaggregated base station, an integrated access and backhaul (IAB) node, a relay node, and/or one or more components thereof. For example, in some aspects, "base station" or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station" or "network entity" may refer to one device configured to perform one or more functions, such as those described herein in connection with the base station 110. In some aspects, the term "base station" or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station" or "network entity" may refer to any one or more of those different devices. In some aspects, the term "base station" or "network entity" may refer to one or more virtual base stations and/or one or more virtual base station functions. For example, in some aspects, two or more base station functions may be instantiated on a single device. In some aspects, the term "base station" or "network entity" may refer to one of the base station functions and not another. In this way, a single device may include more than one base station.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100 (e.g., under the network's coverage) or outside the wireless network 100 (e.g., out of the network's coverage), and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, a UE 120 may include a communication manager 140. As described in more detail elsewhere herein, the communication manager 140 may transmit, to another UE 120, an inter-UE coordination (IUC) request, where the IUC request indicates at least one of one or more sidelink carriers, one or more sidelink bandwidth parts (BWPs), or one or more sidelink resource pools. The communication manager 140 may receive, from the other UE 120, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools. Additionally, or alternatively, the communication manager 140 may perform one or more other operations described herein.

In some aspects, as described in more detail elsewhere herein, the communication manager 140 may receive, from another UE 120, an IUC request, where the IUC request indicates at least one of one or more sidelink carriers, one or more sidelink BWPs, or one or more sidelink resource pools. The communication manager 140 may transmit, to the the other UE 120, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools. Additionally, or alternatively, the communication manager 140 may perform one or more other operations described herein.

In some aspects, as described in more detail elsewhere herein, the communication manager 140 may transmit, to another UE 120, a first IUC request. The communication manager 140 may initiate an IUC request timer based at least in part on transmitting the first IUC request. Additionally, or alternatively, the communication manager 140 may perform one or more other operations described herein.

In some aspects, as described in more detail elsewhere herein, the communication manager 140 may receive, from another UE 120, a first IUC request. The communication manager 140 may initiate an IUC request timer based at least in part on receiving the first IUC request. Additionally, or alternatively, the communication manager 140 may perform one or more other operations described herein.

In some aspects, as described in more detail elsewhere herein, the communication manager 140 may transmit, to another UE 120 and as part of a sidelink connection establishment procedure, a first sidelink communication indicating at least one of one or more supported sidelink carriers for the UE 120, one or more supported sidelink BWPs for the UE 120, one or more supported sidelink resource pools for the UE 120, or one or more supported IUC parameters for the UE 120. The communication manager 140 may receive, from the other UE 120 and as part of the sidelink connection establishment procedure, a second sidelink communication indicating at least one of one or more supported sidelink carriers for the other UE 120, one or more supported sidelink BWPs for the other UE 120, one or more supported sidelink resource pools for the other UE 120, or one or more supported IUC parameters for the other UE 120. The communication manager 140 may receive, from the other UE 120 and as part of the sidelink connection establishment procedure, a third sidelink communication indicating at least one of one or more preferred sidelink carriers for the other UE 120, one or more preferred sidelink BWPs for the other UE 120, one or more preferred sidelink resource pools for the other UE 120, or one or more preferred IUC parameters for the other UE 120. The communication manager 140 may transmit, to the other UE 120 and as part of the sidelink connection establishment procedure, a fourth sidelink communication indicating at least one of one or more determined sidelink carriers for sidelink communication between the UE 120 and the other UE 120, one or more determined sidelink BWPs for sidelink communication between the UE 120 and the other UE 120, one or more determined sidelink resource pools for sidelink communication between the UE 120 and the other UE 120, or one or more determined IUC parameters for sidelink communication between the UE 120 and the other UE 120. Additionally, or alternatively, the communication manager 140 may perform one or more other operations described herein.

In some aspects, as described in more detail elsewhere herein, the communication manager 140 may receive, from another UE 120 and as part of a sidelink connection establishment procedure, a first sidelink communication indicating at least one of one or more supported sidelink carriers for the other UE 120, one or more supported sidelink BWPs for the other UE 120, one or more supported sidelink resource pools for the other UE 120, or one or more supported IUC parameters for the other UE 120. The communication manager 140 may transmit, to the other UE 120 and as part of the sidelink connection establishment procedure, a second sidelink communication indicating at least one of one or more supported sidelink carriers for the UE 120, one or more supported sidelink BWPs for the UE 120, one or more supported sidelink resource pools for the UE 120, or one or more supported IUC parameters for the UE 120. The communication manager 140 may transmit, to the other UE 120 and as part of the sidelink connection establishment procedure, a third sidelink communication indicating at least one of one or more preferred sidelink carriers for the UE 120, one or more preferred sidelink BWPs for the UE 120, one or more preferred sidelink resource pools for the UE 120, or one or more preferred IUC parameters for the UE 120. The communication manager 140 may receive, from the other UE 120 and as part of the sidelink connection establishment procedure, a fourth sidelink communication indicating at least one of one or more determined sidelink carriers for sidelink communication between the UE 120 and the other UE 120, one or more determined sidelink BWPs for sidelink communication between the UE 120 and the other UE 120, or one or more determined sidelink resource pools for sidelink communication between the UE 120 and the other UE 120, or one or more determined IUC parameters for sidelink communication between the UE 120 and the other UE 120. Additionally, or alternatively, the communication manager 140 may perform one or more other operations described herein.

In some aspects, as described in more detail elsewhere herein, the communication manager 140 may determine that an IUC response condition has been satisfied. The communication manager 140 may transmit, to another UE 120 and based at least in part on determining that the IUC response condition has been satisfied, an IUC indication that indicates at least one of one or more sidelink carriers, one or more sidelink BWPs, or one or more sidelink resource pools; and at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools. Additionally, or alternatively, the communication manager 140 may perform one or more other operations described herein.

As indicated above, Fig. 1 is provided as an example. Other examples may differ from what is described with regard to Fig. 1.

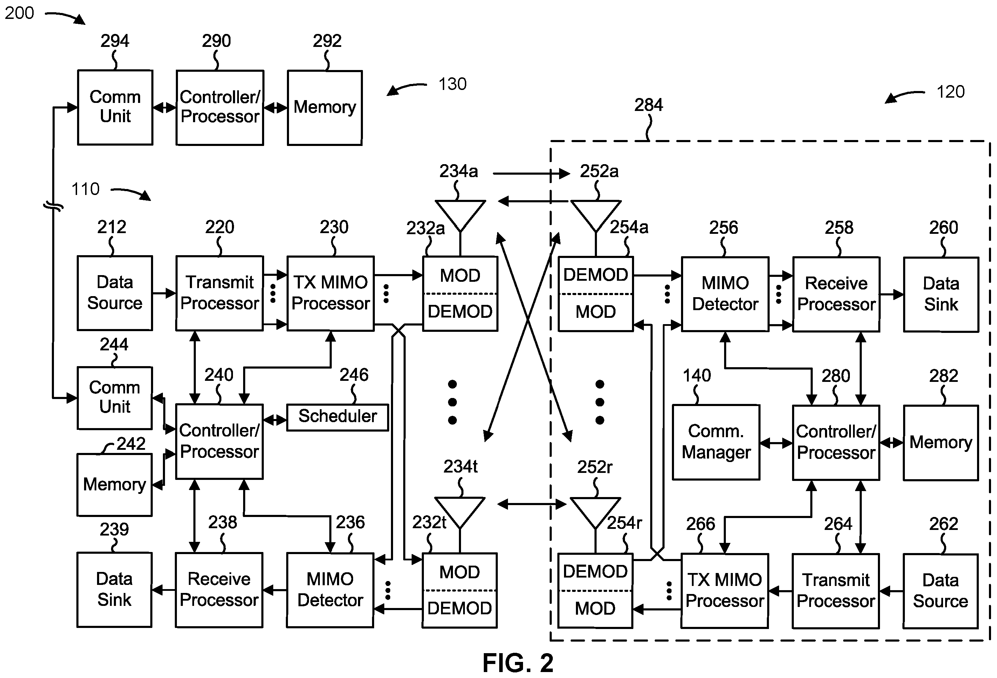

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

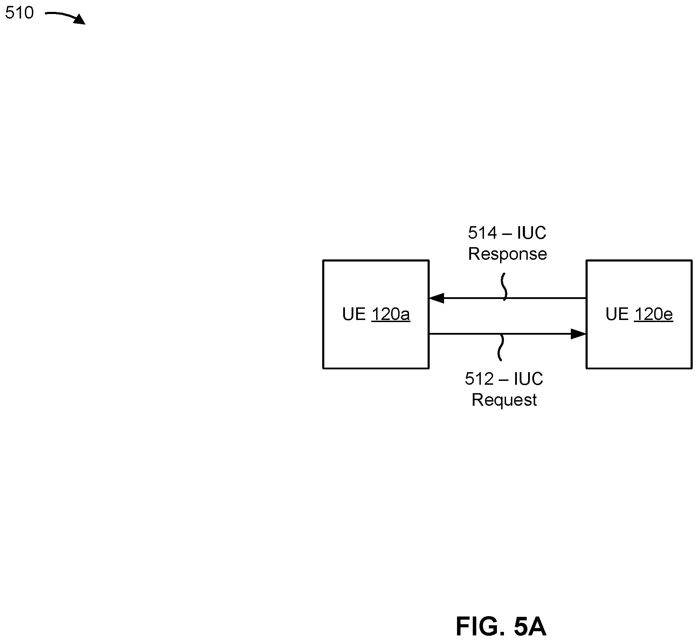

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 5A-12).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 5A-12).

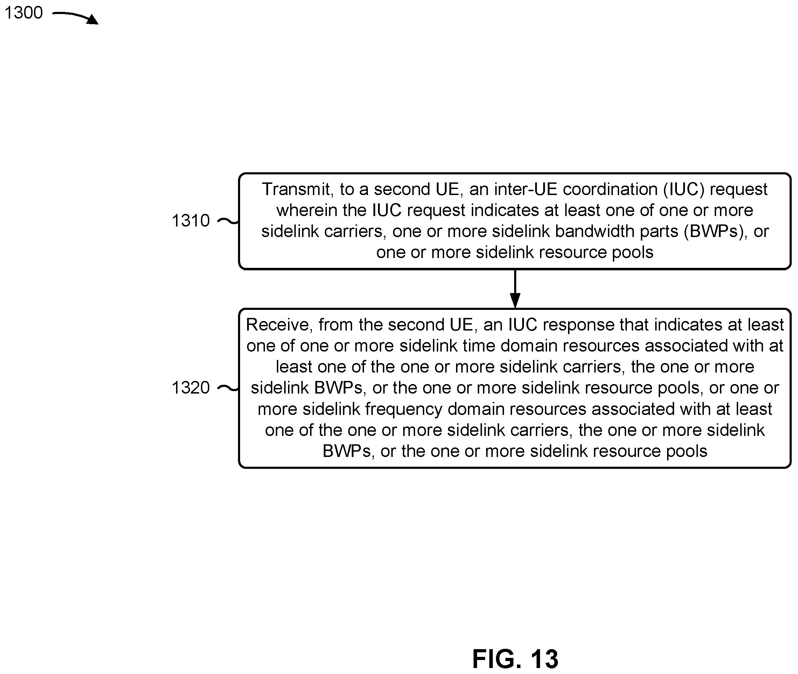

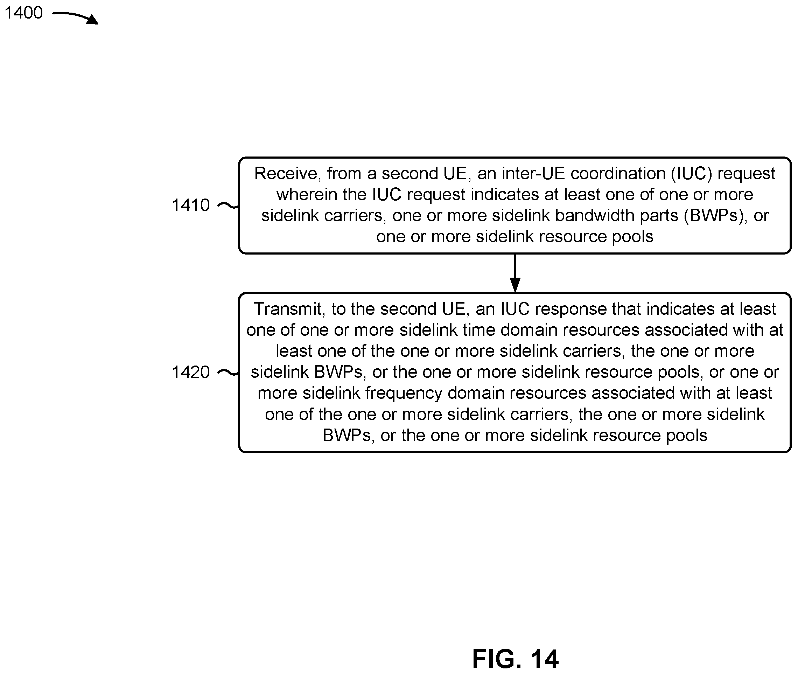

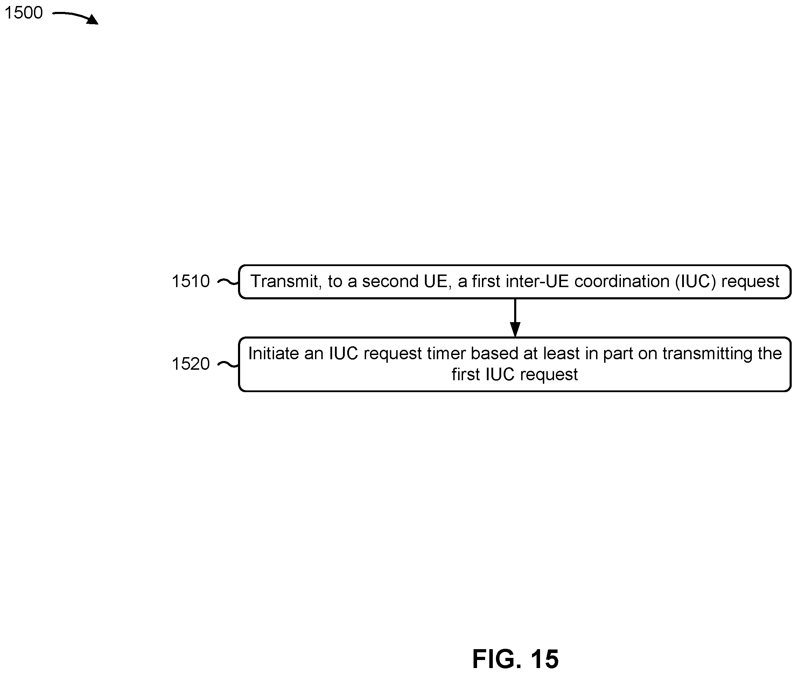

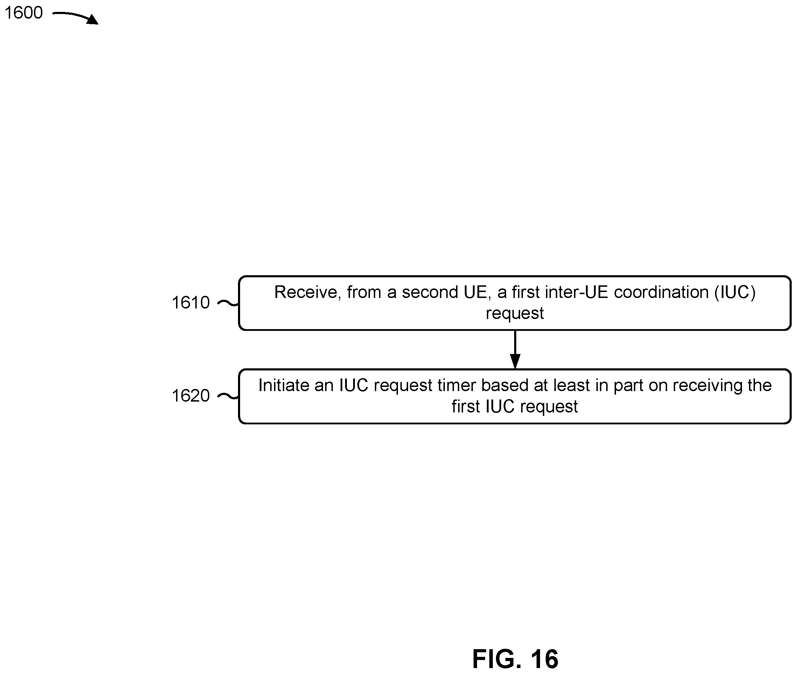

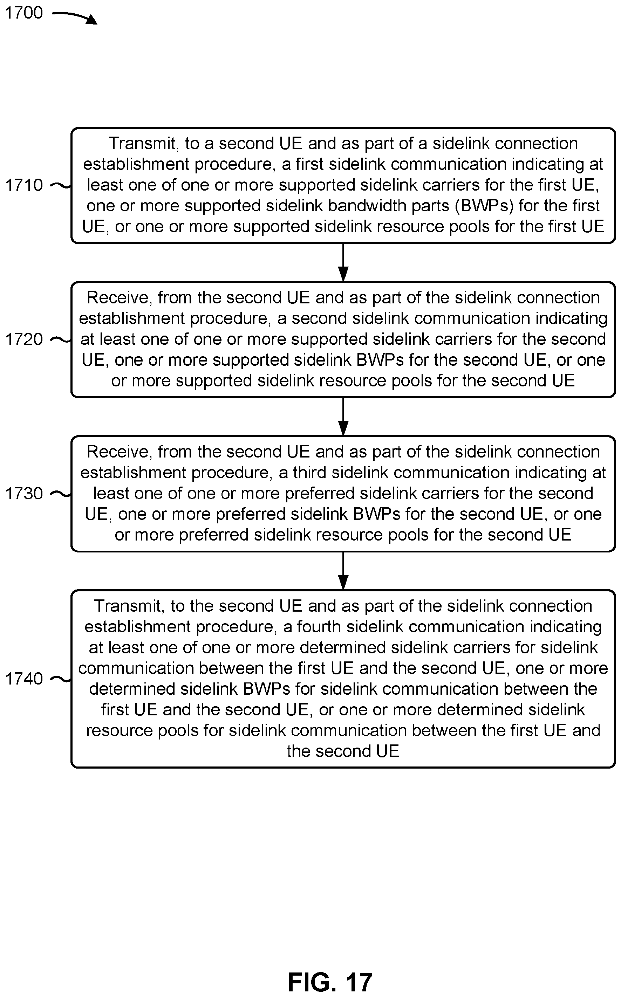

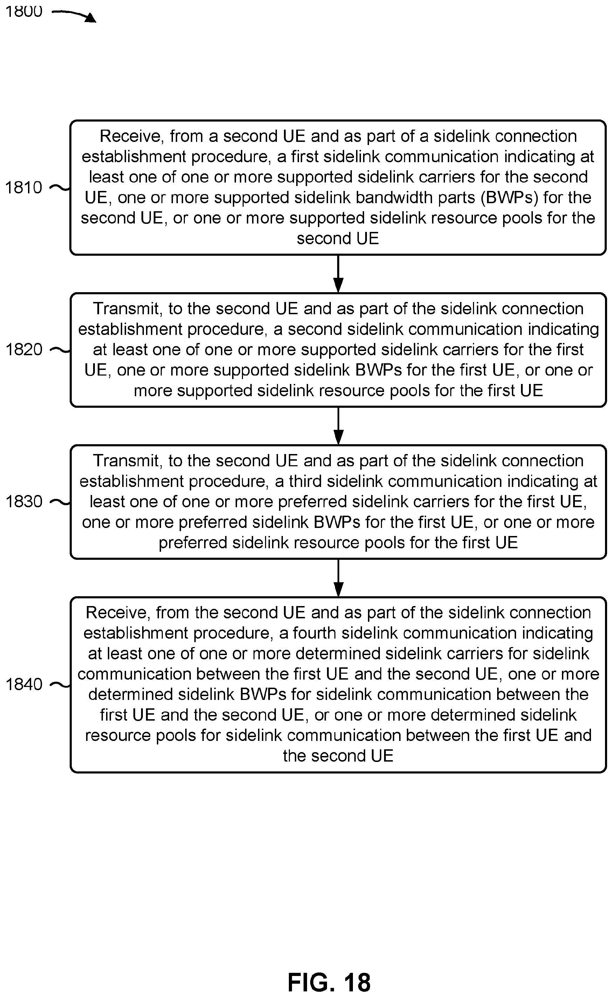

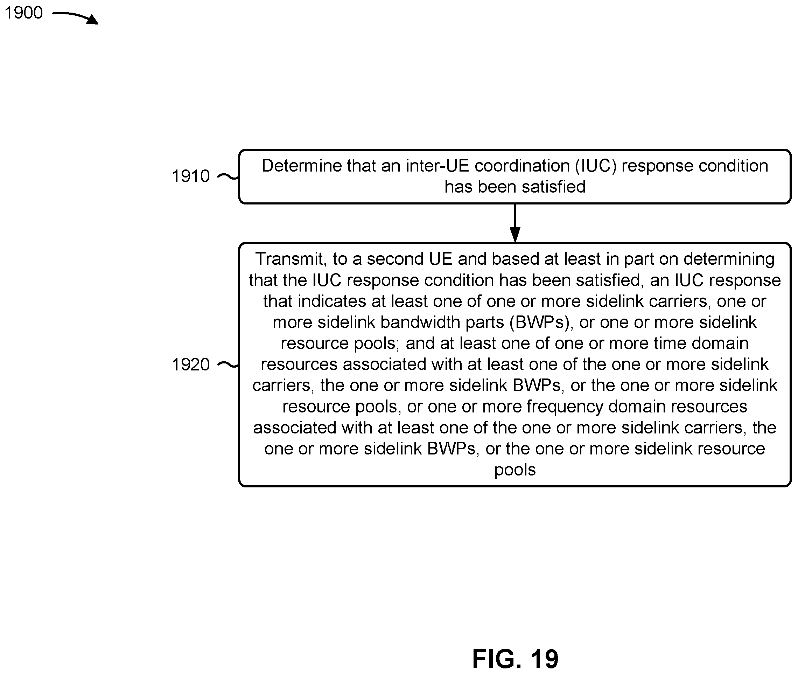

The controller/processor 240 of the base station 110, the controller/processor 280 of the UE 120, and/or any other component(s) of Fig. 2 may perform one or more techniques associated with inter-UE sidelink scheduling, as described in more detail elsewhere herein. For example, the controller/processor 240 of the base station 110, the controller/processor 280 of the UE 120, and/or any other component(s) of Fig. 2 may perform or direct operations of, for example, process 1300 of Fig. 13, process 1400 of Fig. 14, process 1500 of Fig. 15, process 1600 of Fig. 16, process 1700 of Fig. 17, process 1800 of Fig. 18, process 1900 of Fig. 19, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 1300 of Fig. 13, process 1400 of Fig. 14, process 1500 of Fig. 15, process 1600 of Fig. 16, process 1700 of Fig. 17, process 1800 of Fig. 18, process 1900 of Fig. 19, and/or other processes as described herein. In some examples, executing instructions may include running the instructions, converting the instructions, compiling the instructions, and/or interpreting the instructions, among other examples.

In some aspects, a first UE 120 includes means for transmitting, to a second UE 120, an IUC request, wherein the IUC request indicates at least one of one or more sidelink carriers, one or more sidelink BWPs, or one or more sidelink resource pools; and/or means for receiving, from the second UE 120, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a first UE 120 includes means for receiving, from a second UE 120, an IUC request, wherein the IUC request indicates at least one of one or more sidelink carriers, one or more sidelink BWPs, or one or more sidelink resource pools; and/or means for transmitting, to the second UE 120, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a first UE 120 includes means for transmitting, to a second UE 120, a first IUC request; and/or means for initiating an IUC request timer based at least in part on transmitting the first IUC request. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a first UE 120 includes means for receiving, from a second UE 120, a first IUC request; and/or means for initiating an IUC request timer based at least in part on receiving the first IUC request. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a first UE 120 includes means for transmitting, to a second UE 120 and as part of a sidelink connection establishment procedure, a first sidelink communication indicating at least one of one or more supported sidelink carriers for the first UE 120, one or more supported sidelink BWPs for the first UE 120, one or more supported sidelink resource pools for the first UE 120, or one or more supported IUC parameters for the first UE 120; means for receiving, from the second UE 120 and as part of the sidelink connection establishment procedure, a second sidelink communication indicating at least one of one or more supported sidelink carriers for the second UE 120, one or more supported sidelink BWPs for the second UE 120, one or more supported sidelink resource pools for the second UE 120, or one or more supported IUC parameters for the second UE 120; means for receiving, from the second UE 120 and as part of the sidelink connection establishment procedure, a third sidelink communication indicating at least one of one or more preferred sidelink carriers for the second UE 120, one or more preferred sidelink BWPs for the second UE 120, one or more preferred sidelink resource pools for the second UE 120, or one or more preferred IUC parameters for the second UE 120; and/or means for transmitting, to the second UE 120 and as part of the sidelink connection establishment procedure, a fourth sidelink communication indicating at least one of one or more determined sidelink carriers for sidelink communication between the first UE 120 and the second UE 120, one or more determined sidelink BWPs for sidelink communication between the first UE 120 and the second UE 120, one or more determined sidelink resource pools for sidelink communication between the first UE 120 and the second UE 120, or one or more determined IUC parameters for sidelink communication between the first UE 120 and the second UE 120. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a first UE includes means for receiving, from a second UE 120 and as part of a sidelink connection establishment procedure, a first sidelink communication indicating at least one of one or more supported sidelink carriers for the second UE 120, one or more supported sidelink BWPs for the second UE 120, one or more supported sidelink resource pools for the second UE 120, or one or more supported IUC parameters for the second UE 120; means for transmitting, to the second UE 120 and as part of the sidelink connection establishment procedure, a second sidelink communication indicating at least one of one or more supported sidelink carriers for the first UE 120, one or more supported sidelink BWPs for the first UE 120, one or more supported sidelink resource pools for the first UE 120, or one or more supported IUC parameters for the second UE 120; means for transmitting, to the second UE 120 and as part of the sidelink connection establishment procedure, a third sidelink communication indicating at least one of one or more preferred sidelink carriers for the first UE 120, one or more preferred sidelink BWPs for the first UE 120, one or more preferred sidelink resource pools for the first UE 120, or one or more preferred IUC parameters for the second UE 120; and/or means for receiving, from the second UE 120 and as part of the sidelink connection establishment procedure, a fourth sidelink communication indicating at least one of one or more determined sidelink carriers for sidelink communication between the first UE 120 and the second UE 120, one or more determined sidelink BWPs for sidelink communication between the first UE 120 and the second UE 120, one or more determined sidelink resource pools for sidelink communication between the first UE 120 and the second UE 120, or one or more determined IUC parameters for sidelink communication between the first UE 120 and the second UE 120. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a first UE 120 includes means for determining that an IUC indication condition has been satisfied; and/or means for transmitting, to a second UE 120 and based at least in part on determining that the IUC indication condition has been satisfied, an IUC indication that indicates at least one of one or more sidelink carriers, one or more sidelink BWPs, or one or more sidelink resource pools; and/or at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools. The means for the first UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

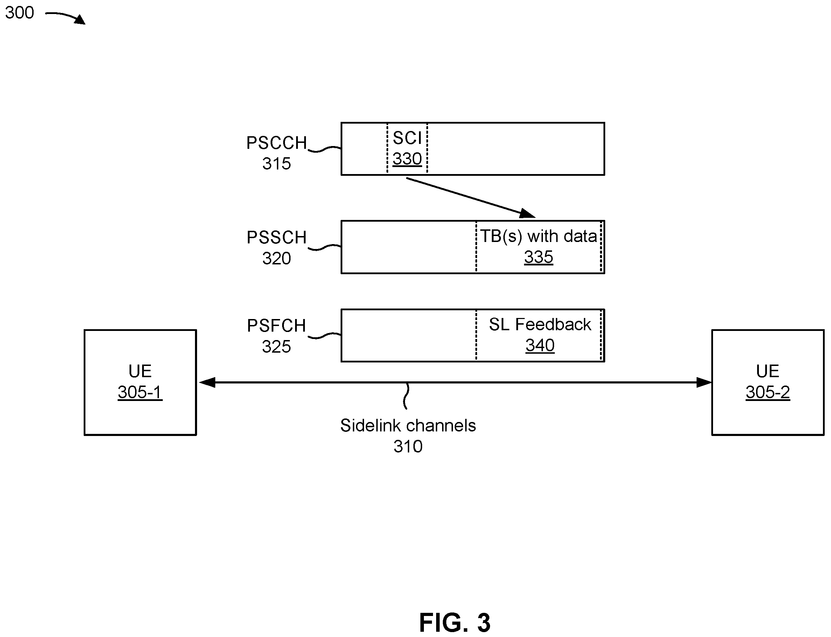

Fig. 3 is a diagram illustrating an example 300 of sidelink communications, in accordance with the present disclosure.

As shown in Fig. 3, a first UE 305-1 may communicate with a second UE 305-2 (and one or more other UEs 305) via one or more sidelink channels 310. The UEs 305-1 and 305-2 may communicate using the one or more sidelink channels 310 for P2P communications, D2D communications, V2X communications (e.g., which may include V2V communications, V2I communications, and/or V2P communications) and/or mesh networking. In some aspects, the UEs 305 (e.g., UE 305-1 and/or UE 305-2) may correspond to one or more other UEs described elsewhere herein, such as UE 120. In some aspects, the one or more sidelink channels 310 may use a PC5 interface and/or may operate in a high frequency band (e.g., the 5.9 GHz band). Additionally, or alternatively, the UEs 305 may synchronize timing of transmission time intervals (TTIs) (e.g., frames, subframes, slots, or symbols) using global navigation satellite system (GNSS) timing.

As further shown in Fig. 3, the one or more sidelink channels 310 may include a physical sidelink control channel (PSCCH) 315, a physical sidelink shared channel (PSSCH) 320, and/or a physical sidelink feedback channel (PSFCH) 325. The PSCCH 315 may be used to communicate control information, similar to a physical downlink control channel (PDCCH) and/or a physical uplink control channel (PUCCH) used for cellular communications with a base station 110 via an access link or an access channel. The PSSCH 320 may be used to communicate data, similar to a physical downlink shared channel (PDSCH) and/or a physical uplink shared channel (PUSCH) used for cellular communications with a base station 110 via an access link or an access channel. For example, the PSCCH 315 may carry sidelink control information (SCI) 330, which may indicate various control information used for sidelink communications, such as one or more resources (e.g., time resources, frequency resources, and/or spatial resources) where a transport block (TB) 335 may be carried on the PSSCH 320. The TB 335 may include data. The PSFCH 325 may be used to communicate sidelink feedback 340, such as hybrid automatic repeat request (HARQ) feedback (e.g., acknowledgement or negative acknowledgement (ACK/NACK) information), transmit power control (TPC), and/or a scheduling request (SR).

Although shown on the PSCCH 315, in some aspects, the SCI 330 may include multiple communications in different stages, such as a first stage SCI (SCI-1) and a second stage SCI (SCI-2). The SCI-1 may be transmitted on the PSCCH 315. The SCI-2 may be transmitted on the PSSCH 320. The SCI-1 may include, for example, an indication of one or more resources (e.g., time resources, frequency resources, and/or spatial resources) on the PSSCH 320, information for decoding sidelink communications on the PSSCH, a quality of service (QoS) priority value, a resource reservation period, a PSSCH DMRS pattern, an SCI format for the SCI-2, a beta offset for the SCI-2, a quantity of PSSCH DMRS ports, and/or an MCS. The SCI-2 may include information associated with data transmissions on the PSSCH 320, such as a HARQ process ID, a new data indicator (NDI), a source identifier, a destination identifier, and/or a channel state information (CSI) report trigger.

In some aspects, the one or more sidelink channels 310 may use resource pools. For example, a scheduling assignment (e.g., included in SCI 330) may be transmitted in subchannels using specific resource blocks (RBs) across time. In some aspects, data transmissions (e.g., on the PSSCH 320) associated with a scheduling assignment may occupy adjacent RBs in the same subframe as the scheduling assignment (e.g., using frequency division multiplexing). In some aspects, a scheduling assignment and associated data transmissions are not transmitted on adjacent RBs.

In some aspects, a UE 305 may operate using a sidelink resource allocation mode (e.g., Mode 1) where resource selection and/or scheduling is performed by a base station 110. For example, the UE 305 may receive a grant (e.g., in downlink control information (DCI) or in a radio resource control (RRC) message, such as for configured grants) from the base station 110 for sidelink channel access and/or scheduling. In some aspects, a UE 305 may operate using a resource allocation mode (e.g., Mode 2) where resource selection and/or scheduling is performed by the UE 305 (e.g., rather than a base station 110). In some aspects, the UE 305 may perform resource selection and/or scheduling by sensing channel availability for transmissions. For example, the UE 305 may measure an RSSI parameter (e.g., a sidelink-RSSI (S-RSSI) parameter) associated with various sidelink channels, may measure an RSRP parameter (e.g., a PSSCH-RSRP parameter) associated with various sidelink channels, and/or may measure an RSRQ parameter (e.g., a PSSCH-RSRQ parameter) associated with various sidelink channels, and may select a channel for transmission of a sidelink communication based at least in part on the measurement(s).

Additionally, or alternatively, the UE 305 may perform resource selection and/or scheduling using SCI 330 received in the PSCCH 315, which may indicate occupied resources and/or channel parameters. Additionally, or alternatively, the UE 305 may perform resource selection and/or scheduling by determining a channel busy rate (CBR) associated with various sidelink channels, which may be used for rate control (e.g., by indicating a maximum number of resource blocks that the UE 305 can use for a particular set of subframes).

In the resource allocation mode where resource selection and/or scheduling is performed by a UE 305, the UE 305 may generate sidelink grants, and may transmit the grants in SCI 330. A sidelink grant may indicate, for example, one or more parameters (e.g., transmission parameters) to be used for an upcoming sidelink transmission, such as one or more resource blocks to be used for the upcoming sidelink transmission on the PSSCH 320 (e.g., for TBs 335), one or more subframes to be used for the upcoming sidelink transmission, and/or an MCS to be used for the upcoming sidelink transmission. In some aspects, a UE 305 may generate a sidelink grant that indicates one or more parameters for semi-persistent scheduling (SPS), such as a periodicity of a sidelink transmission. Additionally, or alternatively, the UE 305 may generate a sidelink grant for event-driven scheduling, such as for an on-demand sidelink message.

As indicated above, Fig. 3 is provided as an example. Other examples may differ from what is described with respect to Fig. 3.

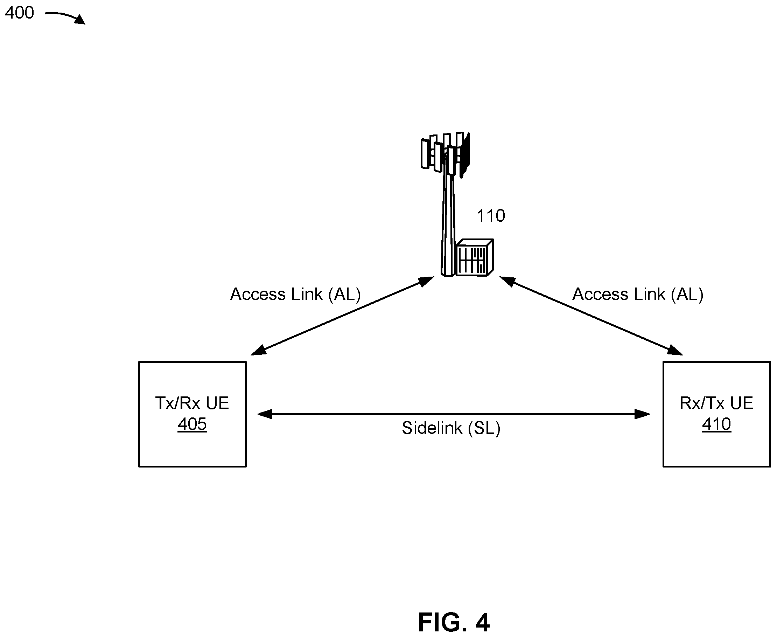

Fig. 4 is a diagram illustrating an example 400 of sidelink communications and access link communications, in accordance with the present disclosure.

As shown in Fig. 4, a transmitter (Tx)/receiver (Rx) UE 405 and an Rx/Tx UE 410 may communicate with one another via a sidelink, as described above in connection with Fig. 3. As further shown, in some sidelink modes, a base station 110 may communicate with the Tx/Rx UE 405 via a first access link. Additionally, or alternatively, in some sidelink modes, the base station 110 may communicate with the Rx/Tx UE 410 via a second access link. The Tx/Rx UE 405 and/or the Rx/Tx UE 410 may correspond to one or more UEs described elsewhere herein, such as the UE 120 of Fig. 1. Thus, a direct link between UEs 120 (e.g., via a PC5 interface) may be referred to as a sidelink, and a direct link between a base station 110 and a UE 120 (e.g., via a Uu interface) may be referred to as an access link. Sidelink communications may be transmitted via the sidelink, and access link communications may be transmitted via the access link. An access link communication may be either a downlink communication (from a base station 110 to a UE 120) or an uplink communication (from a UE 120 to a base station 110).

As indicated above, Fig. 4 is provided as an example. Other examples may differ from what is described with respect to Fig. 4.

Various types of scheduling modes (or resource allocation modes) may be used to schedule resources for UEs that communicate on a sidelink. In an example scheduling mode (Mode 1), resource allocation is handled by a scheduling entity other than the UEs in a wireless network, such as by a base station 110. In another example scheduling mode (Mode 2) resource allocation is handled by the UEs (e.g., with or without assistance from a scheduling entity). While Mode 2 sidelink scheduling enables the UEs to flexibly schedule and/or allocate sidelink resources and reduces reliance on network entities in the wireless network (which also reduces resource consumption for the network entities), scheduling and/or resource allocation issues can occur. For example, in a Mode 2 scheduling mode, there may be no network entity that is tracking sidelink resource usage and/or sidelink channel conditions between the UEs. As a result, the UEs may inefficiently schedule and/or allocate sidelink resources in a manner that causes sidelink resource allocation conflicts and/or non-ideal sidelink resource selection, among other examples. This can lead to reduced sidelink communication reliability, reduced sidelink communication performance, and/or increased resource consumption for the UEs (e.g., increased consumption of memory resources, processing resources, and/or network resources due to increased sidelink retransmissions).

Some aspects described herein provide inter-UE sidelink scheduling. In some aspects, UEs (e.g., UEs 120) that communicate on a sidelink use inter-UE coordination communications to efficiently coordinate sidelink resource allocation and scheduling. A transmitter UE that is to transmit on the sidelink may request IUC information from a receiver UE. The receiver UE may provide the IUC information, which may be used by the transmitter UE to determine, identify, and/or select sidelink resources based at least in part on the IUC information. This sidelink resource allocation and/or scheduling may increase sidelink communication reliability, may increase sidelink communication performance, and/or may reduce resource consumption for the transmitter UE and the receiver UE.

Sidelink communication reliability and performance may further be increased in aspects described herein in that specific types of IUC information may be provided by the receiver UE to further enhance sidelink resource allocation and/or scheduling. For example, the transmitter UE may request (and the receiver UE may provide) IUC information for one or more sidelink carriers, one or more sidelink BWPs, and/or one or more sidelink resource pools, among other examples. This may further facilitate efficient sidelink resource allocation and/or selection for the transmitter UE. Some aspects described herein provide medium access control (MAC) control element (MAC-CE) that are configured for requesting and providing these specific types of IUC information.

Some aspects described herein provide timer-based IUC operations to further increase reliability and efficiency in sidelink resource allocation and/or scheduling. In some aspects, the transmitter UE and the receiver UE may initiate an IUC request timer after transmission and reception of an IUC request, respectively. The transmitter UE and the receiver UE may each use the IUC request timer to respectively determine when to transmit a new IUC request and when to monitor for a new IUC request. This provides increased efficiency and reliability for IUC while supporting latency requirements on the sidelink.

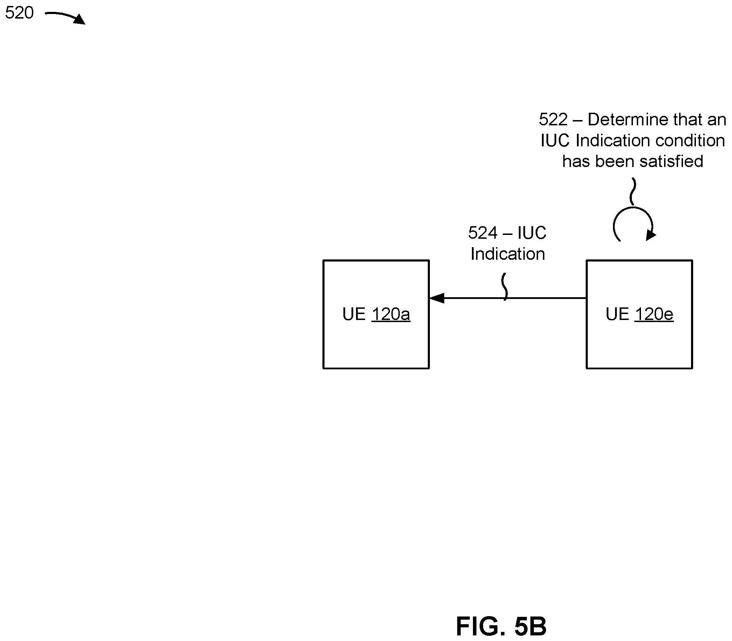

Figs. 5A and 5B are diagrams illustrating examples of IUC, in accordance with the present disclosure. As shown in Figs. 5A and 5B, a first UE (e.g., UE 120a of Fig. 1) exchanges inter-UE coordination signaling with a second UE (e.g., UE 120e of Fig. 1). The UE 120a and the UE 120a may operate in an in-coverage mode, a partial coverage mode, or an out-of-coverage mode with a base station 110 or another type of network entity in the wireless network 100. The UE 120e may determine a set of sidelink resources that available for a resource allocation or scheduling (e.g., based on resource usage, based on available resources, based on network conditions, and/or based on another parameters). The UE 120e may determine the set of sidelink resources based at least in part on determining that the set of sidelink resources are to be selected or based at least in part on a request, referred to herein as an IUC response, received from the UE 120e.

Fig. 5A illustrates an example 510 in which the UE 120e transmits an IUC response to the UE 120a based at least in part on the UE 120a transmitting (and the UE 120e receiving) an IUC request. For example, at 512, the UE 120a transmits (and the UE 120e receives) an IUC request, and at 514, the UE 120e transmits (and the UE 120a receives) an IUC response based at least in part on receiving the IUC request.

The UE 120a may determine to transmit the IUC request based at least in part on having data and/or control information to transmit to the UE 120e. For example, the UE 120a may have application information, data, voice, and/or another type of upper-layer information to transmit to the UE 120e, and the UE 120a may determine to transmit the IUC request to the UE 120e based at least in part on receiving the application information at a MAC layer or a modem of the UE 120a.

The IUC response may indicate one or more sidelink resources to assist the UE 120a with scheduling and/or allocating sidelink resources for transmission on a sidelink to the UE 120e. For example, the IUC response may indicate one or more sidelink time domain resources (e.g., sidelink slots, sidelink mini-slot, sidelink symbols, etc.) and/or one or more sidelink frequency domain resources (e.g., sidelink subcarriers, sidelink resource blocks, sidelink subchannels, etc.). The sidelink resource(s) indicated in the IUC response may be preferred sidelink resource(s) for the sidelink transmission or non-preferred sidelink resource(s). "Preferred sidelink resource(s)" refers to sidelink resource(s) that are preferred by the UE 120e for the sidelink transmission. "Non-preferred sidelink resource(s)" refers to sidelink resource(s) that the UE 120a should avoid using for the sidelink transmission. The UE 120e may determine the sidelink resource(s) (e.g., either preferred or non-preferred) based at least in part on a configuration for the UE 120e, based at least in part on results of one or more sidelink measurements, based at least in part on communication performance on the sidelink resource(s), and/or based at least in part on another factor.

The UE 120a may configure or generate the IUC request for supporting sidelink resource allocation and/or scheduling where multiple sidelink carriers and/or multiple BWPs are configured or allocated for sidelink communication to the UE 120a and/or to the UE 120e. For example, the IUC request may indicate one or more of the sidelink carriers (e.g., multiple frequency carriers that are configured or allocated for sidelink communication with carrier aggregation for the UE 120a and/or for the UE 120e) on which the UE 120e is to identify the sidelink resource(s). As another example, the IUC request may indicate one or more of the sidelink BWPs on one or more sidelink carriers respectively (e.g., BWP(s) that are configured or allocated for sidelink communication for the UE 120a and/or for the UE 120e) in which the UE 120e is to identify the sidelink resource(s). As another example, the IUC request may indicate one or more sidelink resource pools (e.g., sidelink resource pool(s) that are allocated for the configured or indicated sidelink carrier(s) and/or the configured or indicated sidelink BWP(s)) in which the UE 120e is to identify the sidelink resource(s). The one or more sidelink resource pools may include pools or groups of sidelink resources that are associated with respective sidelink resource pool identifiers. Each sidelink resource pool may include one or more sidelink time domain resources and/or one or more frequency domain resources. In some aspects, the UE 120 determines or generates the IUC request to include a combination of sidelink carrier(s), sidelink BWP(s), and/or sidelink resource pool(s).

The UE 120e may determine or generate the IUC response for supporting sidelink resource allocation and/or scheduling where multiple sidelink carriers and/or multiple BWPs are configured or allocated for sidelink communication to the UE 120a and/or to the UE 120e. For example, the IUC response may indicate one or more sidelink time domain resources and/or one or more frequency domain resources in a sidelink carrier that was configured or indicated in the IUC request or selected by the UE 120e. As another example, the IUC response may indicate one or more sidelink time domain resources and/or one or more frequency domain resources in a sidelink BWP on a sidelink carrier that was configured or indicated in the IUC request or selected by the UE 120e. As another example, the IUC response may indicate one or more sidelink time domain resources and/or one or more frequency domain resources in a sidelink resource pool within a sidelink BWP on a sidelink carrier that was configured or indicated in the IUC request or selected by the UE 120e.

Moreover, if the IUC request does not indicate a sidelink carrier, the UE 120a may configure, or generate the IUC response to indicate the selected sidelink carrier, with the sidelink BWP, and the sidelink resource pool in which the one or more sidelink time domain resources and/or one or more frequency domain resources are included. If the IUC request indicates a sidelink carrier but not a sidelink BWP, the UE 120a may configure or generate the IUC response to indicate the sidelink BWP, on a selected sidelink carrier, a the sidelink resource pool in which the one or more sidelink time domain resources and/or one or more frequency domain resources are included. Here, the UE 120a may omit the indication of the sidelink carrier (since the UE 120e already knows the sidelink carrier with the configuration) from the IUC response, which reduces the size of the IUC response and conserves network resources. If the IUC request indicates a selected sidelink carrier and a selected sidelink BWP but not a sidelink resource pool, the UE 120a may configure or generate the IUC response to indicate a sidelink resource pool in which the one or more sidelink time domain resources and/or one or more frequency domain resources are included. Here, the UE 120a may omit the indication of the sidelink carrier and the sidelink BWP (since the UE 120e already knows the sidelink carrier and the sidelink BWP with the configuration) from the IUC response, which reduces the size of the IUC response and conserves network resources.

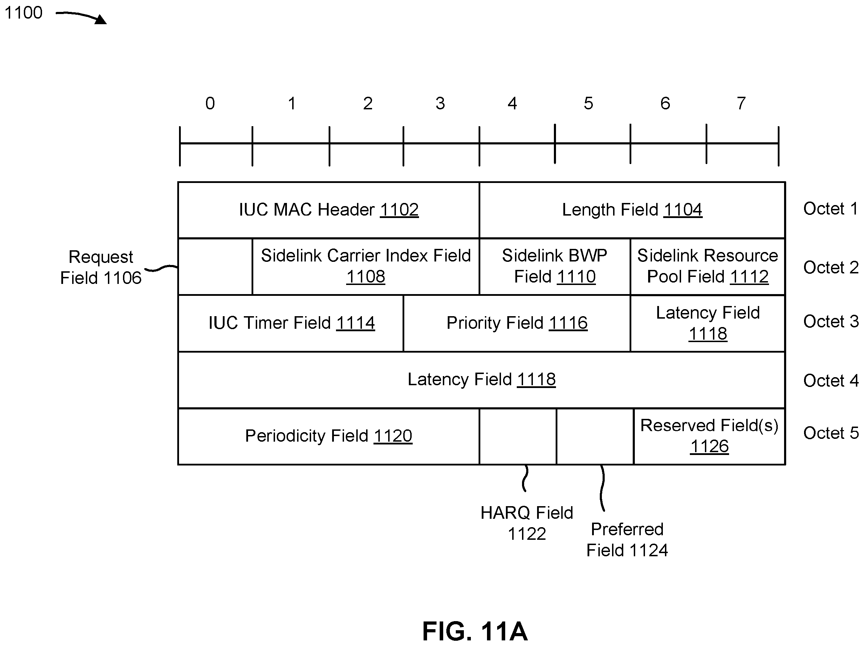

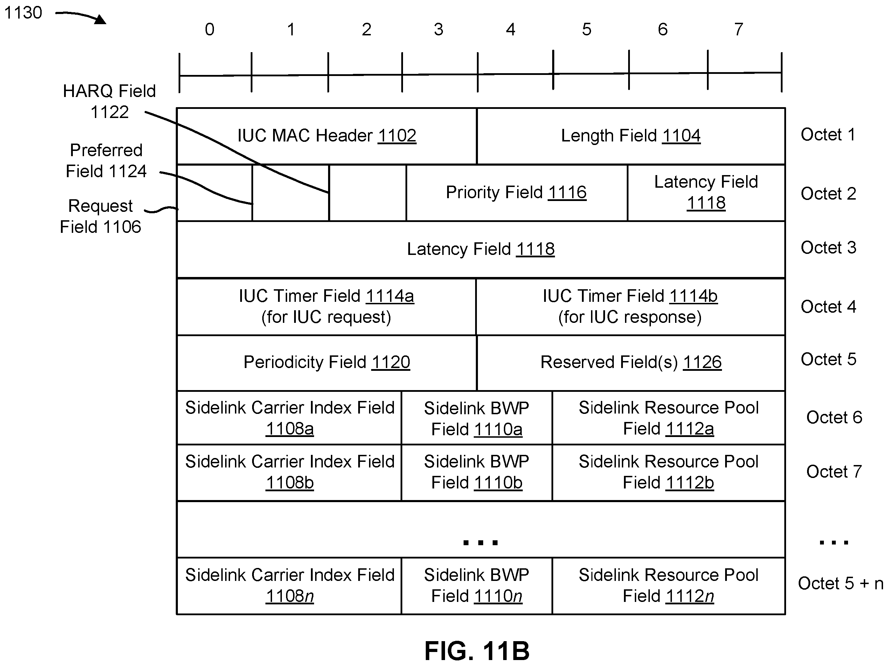

In some aspects, the UE 120a transmits the IUC request in a sidelink communication, such as a MAC-CE communication and/or an SCI communication, among other examples. The MAC-CE communication may include a MAC-CE format that is specific to IUC requests, such as the MAC-CE format described in connection with Fig. 11A and/or 11B. The SCI communication may include an SCI-1 communication, an SCI-2 communication, and/or another type of SCI communication.

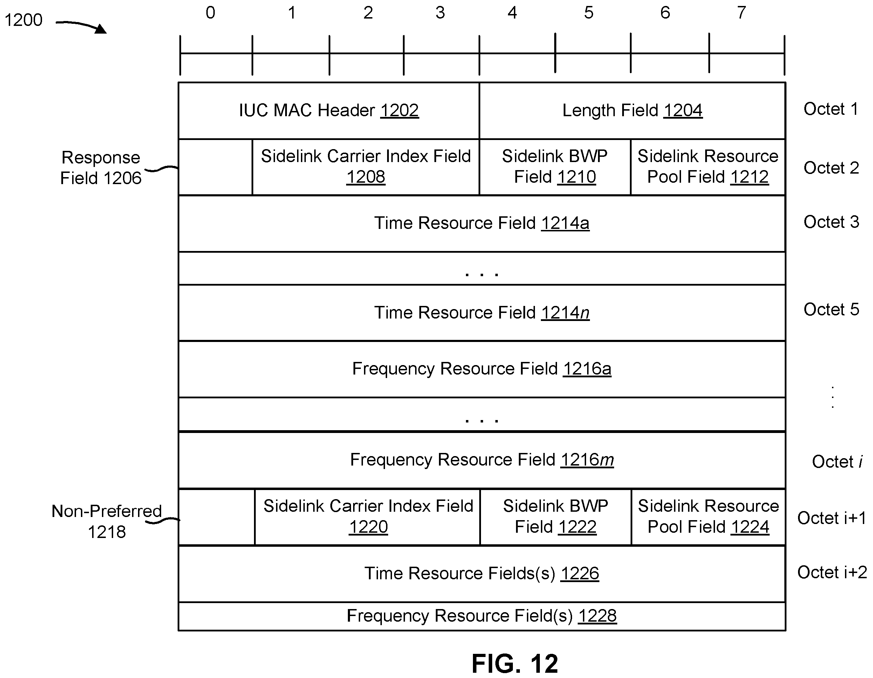

In some aspects, the UE 120e transmits the IUC response in a sidelink communication, such as a MAC-CE communication and/or an SCI communication, among other examples. The MAC-CE communication may include a MAC-CE format that is specific to IUC responses, such as the MAC-CE format described in connection with Fig. 12. The SCI communication may include an SCI-1 communication, an SCI-2 communication, and/or another type of SCI communication.

In some aspects, the IUC request and IUC response may be exchanged in a sidelink resource pool within a sidelink BWP on a sidelink carrier which is same as the sidelink carrier, the sidelink BWP and the sidelink resource pool for the preferred or non-preferred resources to be used for the UE 120a's transmission(s). In this case, no indication of a sidelink carrier, a sidelink BWP or a sidelink resource pool is indicated in either IUC request or IUC response.

In some aspects, the IUC request and IUC response may be exchanged in a sidelink resource pool within a sidelink BWP on a sidelink carrier where at least one of the sidelink carrier, the sidelink BWP, or the sidelink resource pool is different from the sidelink carrier, the sidelink BWP or the sidelink resource pool determined or selected by either the UE 120a (e.g., a sidelink carrier, a sidelink BWP or a sidelink resource pool selected and indicated in the IUC request) or the UE 120e ( e.g., a sidelink carrier, a sidelink BWP or a sidelink resource pool selected and indicated in the IUC response) for the preferred or non-preferred resources to be used for the UE 120a's transmission(s). For example, the IUC request and IUC response may be exchanged on an anchor sidelink carrier (e.g., with the IUC request and response on an FR1 carrier or a licensed carrier and the preferred or non-preferred resources on an FR2 carrier or unlicensed carrier, etc.). For example, the IUC request and IUC response may be exchanged within a common or initial sidelink BWP (e.g., with the IUC request and response within a small sidelink BWP and the preferred or non-preferred resources within a large sidelink BWP). For example, the IUC request and IUC response may be exchanged in a resource pool configured or allocated for IUC operations.

Fig. 5B illustrates an alternative example 520 in which the UE 120e transmits an IUC indication to the UE 120a based at least in part on a condition being satisfied. For example, at 522, the UE 120e determines that an IUC response condition has been satisfied and, at 524, the UE 120e transmits (and the UE 120a receives) an IUC response based at least in part on the UE 120a determining that the IUC response condition has been satisfied.

The UE 120e may transmit the IUC indication in the example 520 to provide preferred and/or non-preferred sidelink resource(s) to the UE 120e for sidelink resource allocation and/or scheduling. The IUC indication condition may include, for example, one or more sidelink measurements satisfying one or more associated thresholds such as a sidelink RSRP measurement threshold, a sidelink RSRQ measurement threshold, a sidelink CQI measurement threshold, a sidelink signal-to-interference-plus-noise ratio (SINR) measurement threshold, a sidelink CBR measurement threshold, a latency measurement threshold, a pathloss measurement threshold, and/or another type of measurement threshold. As another example, the IUC indication condition may include a change in a preferred sidelink carrier for the UE 120e. As another example, the IUC indication condition may include a change in a preferred sidelink BWP for the UE 120e. As another example, the IUC indication condition may include a change in a preferred sidelink resource pool for the UE 120. As another example, the IUC indication condition may include an indication whether the UE 120e is available for receiving one or more transmissions on one or more resources in a resource pool within a sidelink BWP on a sidelink carrier. In some aspects, the 120e may transmit the IUC indication based at least in part on determining that a plurality of IUC indication conditions have been satisfied.

The UE 120a may select one or more sidelink resources for the sidelink transmission (which may include a unicast sidelink transmission, for example) to the UE 120e based at least in part on the sidelink resource(s) indicated in an IUC response (e.g., IUC Response 514 in Fig. 5A) or IUC indication (e.g., IUC indication 524 in Fig. 5B). In this way, the UE 120a selects preferred (and/or avoids non-preferred) sidelink resource(s) indicated in the IUC response or IUC indication, which may reduce collisions between the UE 120a and the UE 120e (e.g., half duplex issue for UE 120e) or collisions with other UE(s) 120 (e.g., hidden node issue for UE 120e) and/or may reduce a power consumption for the UE 120a and/or the UE 120e (e.g., due to fewer retransmissions as a result of fewer collisions), among other examples.

Although Figs. 5A and 5B show a single UE (e.g., the UE 120e) transmitting an IUC response or an IUC indication to the UE 120a, in some aspects, one or more other UEs 120 may transmit IUC responses or IUC indications to the UE 120a to assist the UE 120a in selecting sidelink resource(s) for groupcast and/or broadcast sidelink transmissions. In this way, the UE 120a may receive the IUC responses or IUC indications and may use that information to select sidelink resources that reduce the likelihood of conflict or collision with the UE 120 or other UEs 120 as many as possible.

As indicated above, Figs. 5A and 5B are provided as examples. Other examples may differ from what is described with respect to Figs. 5A and 5B.

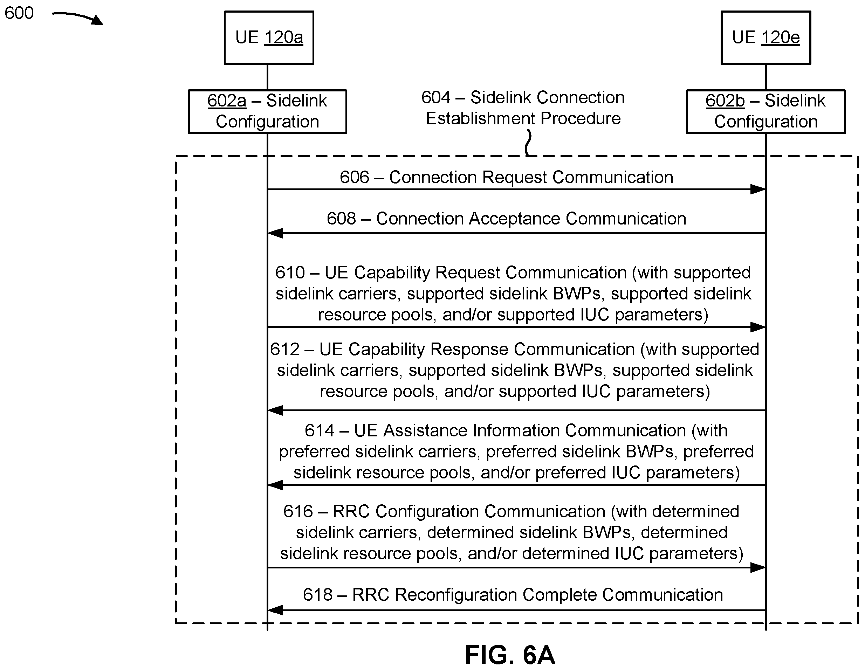

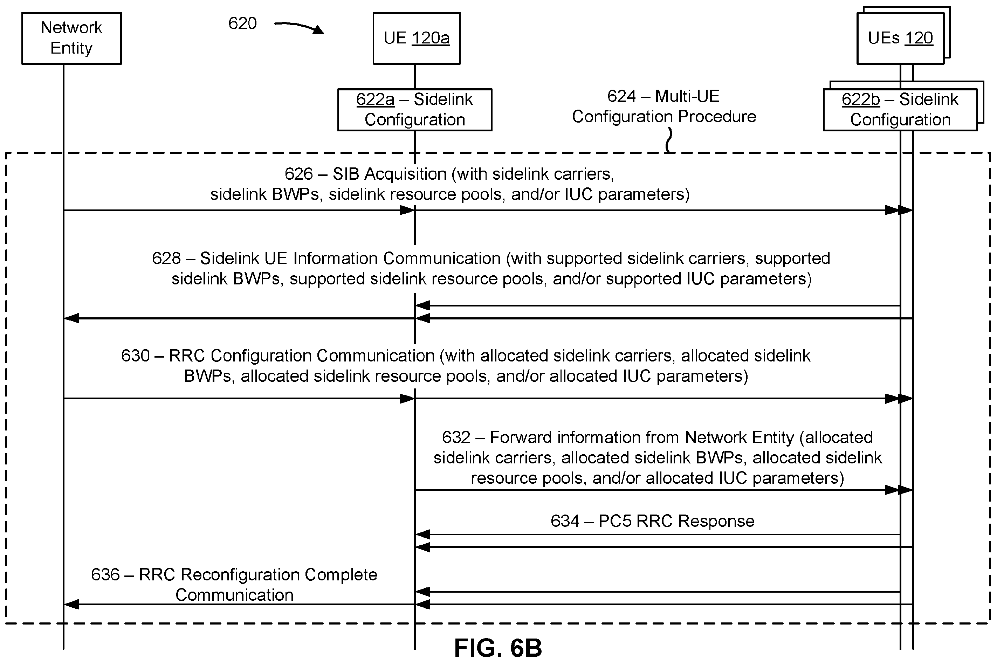

Figs. 6A and 6B are diagrams illustrating examples associated with IUC configuration, in accordance with the present disclosure. In Fig. 6A, an example 600 includes an example of exchanging sidelink information and/or IUC configuration in a sidelink connection establishment procedure for enabling and supporting IUC operations on a sidelink between the UE 120a and the UE 120e (e.g., for sidelink unicast communication). In Fig. 6B, an example 620 includes an example of RRC configuration for a plurality of UEs 120 in a multi-UE configuration procedure for sidelink groupcast, and/or sidelink broadcast.

As shown in Fig. 6A, and at 602a and 602b, the UE 120a and the UE 120e may be respectively configured (e.g., configured by manufacturer or service provider or configured by a base station while under the base station's coverage) or configured (e.g., configured under a base station's coverage) with a sidelink configuration (e.g., *SL-config*) for sidelink communication services. The sidelink communication configuration (e,g., *SL-config*) for the UE 120a may identify one or more supported sidelink carriers for the UE 120a (e.g., sidelink carrier(s) that are to be supported by the UE 120a for different services with different QoS profiles), one or more supported sidelink BWPs on each sidelink carrier for the UE 120a (e.g., sidelink BWP(s) that are to be supported by the UE 120a), and/or one or more supported sidelink resource pools within each sidelink BWP for the UE 120a (e.g., sidelink resource pool(s) that are to be supported by the UE 120a).

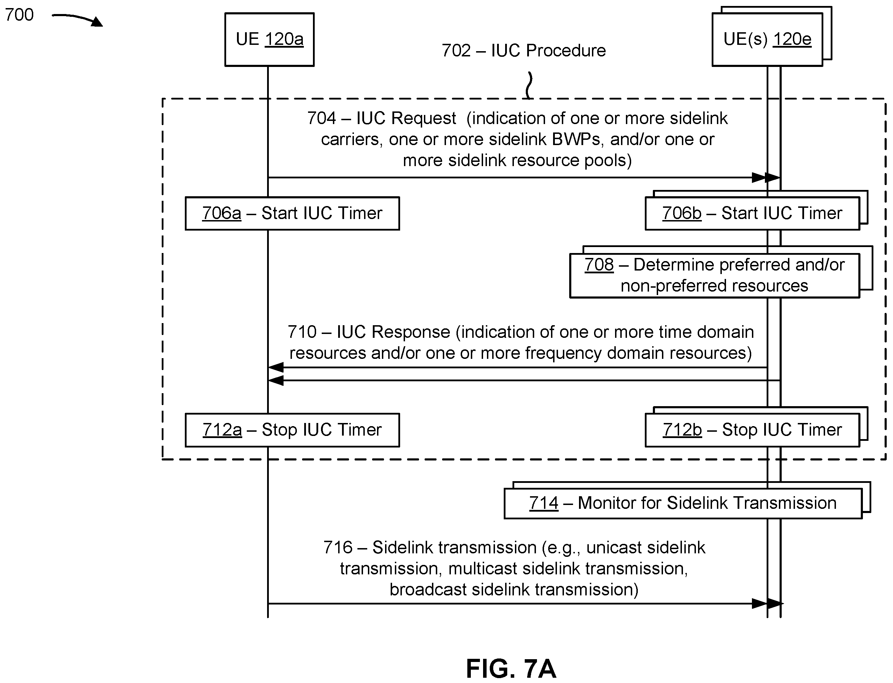

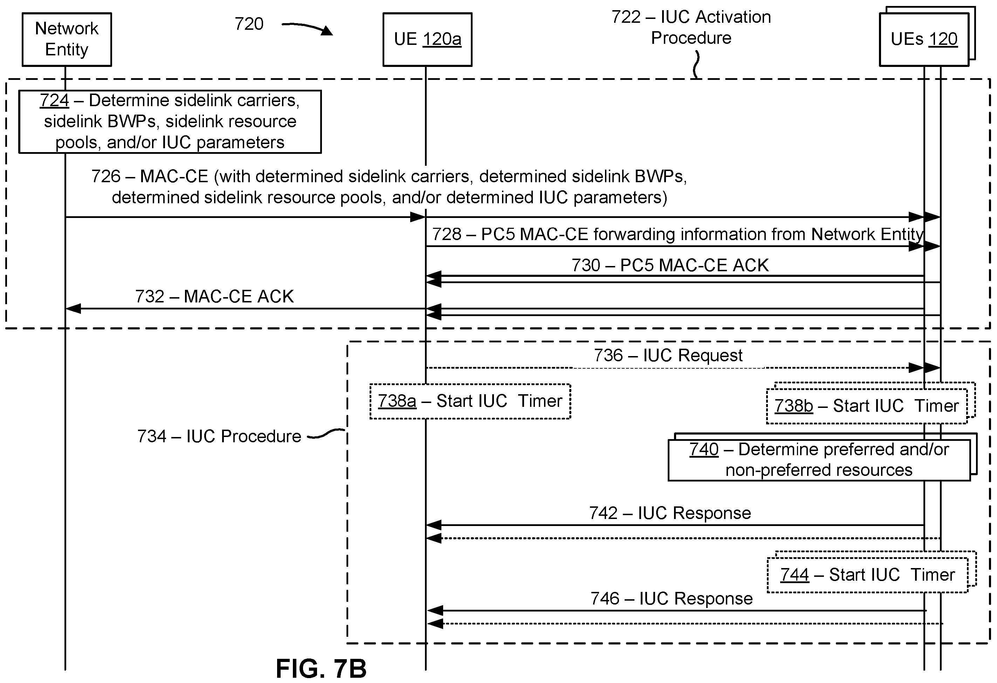

Moreover, the sidelink configuration (e.g., *SL-config*) for the UE 120a may identify one or more IUC parameters for supporting IUC on a sidelink (e.g., for Mode 2 resource allocation and/or scheduling on the sidelink). The one or more IUC parameters may include, for example, whether the UE 120a supports request-based IUC (e.g., as illustrated in the example 510 in Fig. 5A) and/or condition-based IUC (e.g., as illustrated in the example 520 of Fig. 5B). The one or more IUC parameters may include, for example, whether the UE 120a supports indicating and/or receiving preferred sidelink resources and/or non-preferred sidelink resources. The one or more IUC parameters may include, for example, whether the UE 120a supports a latency bound for IUC operations (e.g., the latency between the IUC request 512 and the IUC response 514 indicated in Fig. 5A). The one or more IUC parameters may include, for example, whether the UE 120a supports IUC timer based IUC operations (e.g., as described in connection with Figs. 7-10) and/or IUC timer parameters such as supported IUC timer durations (e.g., based on the latency bound for IUC). The one or more IUC parameters may include, for example, whether the UE 120a retransmissions (or subsequent new transmissions) of IUC requests, IUC responses or IUC indications are enabled and respectively the associated number of retransmissions for the UE 120a. The one or more IUC parameters may include, for example, an indication of one or more sidelink resources (e.g., one or more time and frequency resources in a sidelink resource pool within a sidelink BWP on a sidelink carrier) that are dedicated for IUC request (e.g., IUC request 512 in Fig. 5A) transmission/reception and/or IUC response (e.g., IUC response 514 in Fig. 5A) or IUC indication (e.g., IUC indication 524 in Fig. 5B) transmission/reception. The one or more IUC parameters may include, for example, an indication of one or more conditions for IUC indication as described in Fig. 5B.

The sidelink communication (SL-*config*) for the UE 120e may identify one or more supported sidelink carriers for the UE 120e (e.g., sidelink carrier(s) that are to be supported by the UE 120e for different services with different QoS profiles), one or more supported sidelink BWPs (e.g., for different services with different QoS profiles) on each sidelink carrier for the UE 120e (e.g., sidelink BWP(s) that are to be supported by the UE 120e), and/or one or more supported sidelink resource pools within each sidelink BWP for the UE 120e (e.g., sidelink resource pool(s) that are to be supported by the UE 120e).

Moreover, the sidelink configuration (e,g., *SL-config*) for the UE 120e may identify one or more IUC parameters for supporting IUC on a sidelink (e.g., for Mode 2 resource allocation and/or scheduling on the sidelink). The one or more IUC parameters may include, for example, whether the UE 120e supports request-based IUC (e.g., as illustrated in the example 510 in Fig. 5A) and/or condition-based IUC (e.g., as illustrated in the example 520 of Fig. 5B). The one or more IUC parameters may include, for example, whether the UE 120e supports indicating and/or receiving preferred sidelink resources and/or non-preferred sidelink resources. The one or more IUC parameters may include, for example, whether the UE 120e supports a latency bound for IUC operations (e.g., the latency between the IUC request 512 and the IUC response 514 indicated in Fig. 5A). The one or more IUC parameters may include, for example, whether the UE 120e supports IUC timer based IUC operations (e.g., as described in connection with Figs. 7-10) and/or IUC timer parameters such as supported IUC timer durations (e.g., based on the latency bound for IUC). The one or more IUC parameters may include, for example, whether the UE 120e retransmissions (or subsequent new transmissions) of IUC requests or IUC responses or IUC indications are enabled and respectively the associated number of retransmissions for the UE 120e. The one or more IUC parameters may include, for example, an indication of one or more sidelink resources (e.g., one or more time and frequency resources in a sidelink resource pool within a sidelink BWP on a sidelink carrier) that are dedicated for IUC request (e.g., IUC request 512 in Fig. 5A) transmission/reception and/or IUC response (e.g., IUC response 514 in Fig. 5A) or IUC indication (e.g., IUC indication 524 in Fig. 5B) transmission/reception. The one or more IUC parameters may include, for example, an indication of one or more conditions for IUC indication as described in Fig. 5B.

At 604, the UE 120a and the UE 120e may perform a sidelink connection establishment procedure (e.g., a PC5 RRC connection establishment procedure) to establish a sidelink connection between the UE 120a and the UE 120e. In some aspects, the sidelink connection may be established to support IUC between the UE 120a and the UE 120e. In some aspects, the UE 120a may initiate the sidelink connection establishment procedure to transmit a sidelink transmission to the UE 120e.

At 606, as part of the sidelink connection establishment procedure, the UE 120a may transmit (and the UE 120e may receive) a connection request communication (e.g., a Direct Communication Request message). At 608, the UE 120e may transmit (and the UE 120a may receive) a connection acceptance communication (e.g., a Direct Communication Accept message) based at least in part on the connection request communication (e.g., the received Direct Communication Request message). The connection acceptance communication may indicate that the connection request is accepted by the UE 120e.

At 610 and 612 the UE 120a and the UE 120e exchange communications to provide indications of the sidelink parameters and/or the IUC parameters indicated in their respective sidelink configurations. For example, at 610, the UE 120a may transmit (and the UE 120e may receive) a UE capability enquiry sidelink communication (e.g., *UECapabilityEnquirySidelink* message) that indicates the one or more supported sidelink carriers for the UE 120a, the one or more supported sidelink BWPs for the UE 120a, the one or more supported sidelink resource pools for the UE 120a, and/or the one or more IUC parameters for the UE 120a. This information may be included in the UE capability enquiry sidelink communication (e.g., in a *ue-CapabilityInformationSidelink* information element (IE) of the *UECapabilityEnquirySidelink* message). As another example, at 612, the UE 120e may transmit (and the UE 120a may receive) a UE capability information sidelink communication (e.g., *UECapabilityInformationSidelink* message) that indicates the one or more supported sidelink carriers for the UE 120e, the one or more supported sidelink BWPs for the UE 120e, the one or more supported sidelink resource pools for the UE 120e, and/or the one or more IUC parameters for the UE 120e. The UE 120e may transmit the UE capability information sidelink communication (e.g., *UECapabilityInformationSidelink* message) to the UE 120a based at least in part on receiving the UE capability enquiry sidelink communication (e.g., *UECapabilityEnquirySidelink* message) from the UE 120a. This information may be included in an IE (e.g. the *ueCapabilityInformationSidelink* IE of the *UECapabilityInformationSidelink* message).

Additionally or alternatively, at 614, the UE 120a may transmit (and the UE 120e may receive) a UE assistance information sidelink communication (e.g., a *UEAssistanceInformationSidelink* message). The UE assistance information sidelink communication may indicate one or more preferred sidelink carriers for the UE 120a, one or more preferred sidelink BWPs for the UE 120a, one or more preferred sidelink resource pools for the UE 120a, and/or one or more preferred IUC parameters for the UE 120a. The UE 120a may determine and/or select preferred sidelink carriers, preferred sidelink BWPs for each preferred sidelink carrier, preferred sidelink resource pools within each preferred sidelink BWP, or preferred IUC parameters based at least in part on the supported services or QoS profiles for the UE 120a, sidelink signal measurements, sidelink resource usage and scheduling, channel conditions, and/or other parameters.

At 616, the UE 120a may determine and transmit (and the UE 120e may receive) a sidelink RRC configuration communication (e.g., *RRCReconfigurationSidelink* message at PC5 interface). The sidelink RRC configuration communication may include an indication of one or more determined sidelink carriers that are to be used by the UE 120a and the UE 120e on the sidelink, one or more determined sidelink BWPs for each indicated sidelink carrier that are to be used by the UE 120a and the UE 120e on the sidelink, one or more determined sidelink resource pools for each indicated sidelink BWP that are to be used by the UE 120a and the UE 120e on the sidelink, and/or one or more determined IUC parameters that are to be used by the UE 120a and the UE 120e on the sidelink.

The UE 120a may determine these determined parameters based at least in part on the preferred parameters indicated by the UE 120e (e.g., the received *UEAssistanceInformationSidelink* message at 612) the supported parameters of the UE 120a (e.g., the transmitted *UECapabilityEnquirySidelink* message at 610 or the received sidelink configuration *SL-config* at 602a), and/or the supported parameters of the UE 120e (e.g., the received *UECapabilityInformationSidelink* message at 612 or the received sidelink configuration *SL-config* at 602b, among other examples. For example, the one or more determined sidelink carriers may be included in the one or preferred sidelink carriers, in the one or more supported sidelink carriers for the UE 120a, and/or in the one or more supported sidelink carriers for the UE 120e. As another example, the one or more determined sidelink BWPs may be included in the one or preferred sidelink BWPs, in the one or more supported sidelink BWPs for the UE 120a, and/or in the one or more supported sidelink BWPs for the UE 120e. As another example, the one or more determined sidelink resource pools may be included in the one or preferred sidelink resource pools, in the one or more supported sidelink resource pools for the UE 120a, and/or in the one or more supported sidelink resource pools for the UE 120e. As another example, the one or more determined IUC parameters may be included in the one or preferred IUC parameters, in the one or more supported IUC parameters for the UE 120a, and/or in the one or more supported IUC parameters for the UE 120e.

At 618, the UE 120e may transmit (and the UE 120a may receive) an RRC reconfiguration complete communication (e.g., an *RRCReconfigurationCompleteSidelink* message). The RRC reconfiguration complete communication may indicate that the determined parameters are accepted and configured at the UE 120e. Alternatively, the UE 120e may transmit (and the UE 120a may receive) an RRC reconfiguration failure or rejection communication (e.g., an *RRCReconifugrationFailureSidelink* message or an *RRCReconifugrationCompleteSidelink* message with an error code or rejection cause) that indicates that the determined parameters are not accepted. Additionally, the UE 120e may indicate preferred configuration with the RRC reconfiguration failure or rejection communication (e.g., an *RRCReconifugrationFailureSidelink* message or an *RRCReconifugrationCompleteSidelink* message) or another UE assistance information sidelink communication (e.g., a *UEAssistanceInformationSidelink* message) In this case, the UE 120a may select another set of determined parameters for acceptance by the UE 120e based on the UE 120e's preference.

If the UE 120e accepts the determined parameters, the UE 120a and the UE 120e may have established the sidelink connection.

As shown in Fig. 6B, at 622a and 622b, the UE 120a and a plurality of sidelink UEs 120 may be configured or configured with a sidelink configuration (e.g., *SL-config*) as described above in connection with Fig. 6A. At 624, the UE 120 and the UEs 120 may perform a multi-UE configuration procedure (e.g., an RRC configuration procedure for groupcast/broadcast/multicast) with a network entity such as a base station 110 (e.g., RRC configuration at Uu interface) or a "special UE 120" (e.g., a group lead UE, a cluster head UE, a scheduling UE, or a roadside unit (RSU) (e.g., sidelink RRC configuration at PC5 interface), among other examples).

At 626, the UE 120a and the UEs 120 may perform system information block (SIB) acquisition where the UE 120a and the UEs 120 each receive a system information (SI) communication from the network entity. The SI communication may be transmitted on an access link (e.g., SIB12 at Uu interface) that includes an uplink and a downlink, on a sidelink (e.g., sidelink master information block (MIB) or SIB at PC5 interface), and/or on another wireless link. The SI communication may include system information associated with the network entity. Moreover, the SI communication may include an indication for multi-UE (e.g., all UEs under the network entity for different broadcasts with different services or QoS profiles or one or more groups of UEs for different groupcasts or multicasts with different services or QoS profiles) sidelink parameters, such as one or more multi-UE sidelink carriers, one or more multi-UE sidelink BWPs for each indicated multi-UE sidelink carrier, one or more multi-UE sidelink resource pools for each indicated multi-UE sidelinksidelink BWP, and/or one or more multi-UE IUC parameters, among other examples.

At 628, the UE 120a and the UEs 120 may transmit, to the network entity, an indication respective with supported sidelink carriers, respective supported sidelink BWPs per each sidelink carriers, respective supported sidelink resource pools per each sidelink BWP, and/or respective supported IUC parameters (e.g., as described above in connection with Fig. 6A), among other examples. The UE 120a and the UEs 120 may transmit this information in a sidelink UE information communication (e.g., a *SidelinkUEInformationNR* to the base station 110 on the access link at Uu interface), a UE capability sidelink communication (e.g., a *UECapabilitySidelink* message to the base station 110), a UE sidelink assistance communication (e.g., a *SidelinkUEAssistance* to the special UE 120 on the sidelink at PC5 interface), and/or another type of communication. In some examples, the UE 120a may forward the UEs' 120 sidelink UE information communication (e.g., the *SidelinkUEInformationNR* message) or UE capability sidelink communication (e.g., the *UECapabilitySidelink* message) to the base station 110 if the UEs 120 are out of the base station's coverage, or forward the UEs' 120 UE sidelink assistance communication (e.g., a *SidelinkUEAssistance* message) to the special UE 120 if the UEs 120 are out of the special UE's coverage.

At 630, the network entity may transmit, to the UE 120a, an RRC configuration communication (e.g., an *RRCReconfiguration* from base station 110 on the access link at Uu interface or an *RRCReconfigurationSidelink* message from the special UE 120 on the sidelink at PC5 interface) that includes an indication of supported or allocated sidelink carriers for the network entity, supported or allocated sidelink BWPs per each sidelink carrier for the network entity, supported or allocated sidelink resource pools per each sidelink BWP for the network entity, and/or supported or allocated IUC parameters (e.g., as described above in connection with Fig. 6A) for the network entity, among other examples.

At 632, the UE 120a forwards, relays, and/or otherwise transmits the indication of supported or allocated sidelink carriers for the network entity, supported or allocated sidelink BWPs per each sidelink carrier for the network entity, supported or allocated sidelink resource pools per each sidelink BWP for the network entity, and/or supported IUC parameters for the network entity, to the UEs 120. The UE 120a may transmit this information to the UEs 120 in a groupcast communication (e.g., using group common control logical channel or group dedicated control logical channel on a group signaling radio bearer (for example, *SRBg*) for groupcast or multicast) or a broadcast communication (e.g., using common control logical channel on a common signaling radio bearer (for example, *SRB0-like*) for broadcast), and/or a unicast communication (e.g. using UE dedicated control logical channel on *SRB3*) as described in Fig. 6A, among other examples.

At 634, the UEs 120 may transmit an RRC response to the UE 120a based at least in part on receiving the communication from the UE 120 (e.g., using groupcast on *SRBg* or broadcast on *SBR0-like* or unicast on *SBR3*). At 636, the UE 120a and the UEs 120 may transmit an RRC reconfiguration complete communication to the network entity (e.g., an *RRCReconfigurationComplete* message to the base station 110 on access link at Uu interface or an *RRCReconfigurationCompleteSidelink* message to the special UE 120 on sidelink at PC5 interface) to indicate that the UE 120a (and the UEs 120) have received the information from the network entity. In some examples, the UE 120a may forward the UEs 120's RRC reconfiguration complete communication (e.g., the *RRCReconfigurationComplete* message) to the base station 110 if the UEs 120 are out of the base station's coverage, or forward the UEs 120's RRC reconfiguration complete communication (e.g., a *RRCReconfigurationCompleteSidelink* message) to the special UE 120 if the UEs 120 are out of the special UE's coverage.

As indicated above, Figs. 6A and 6B are provided as examples. Other examples may differ from what is described with respect to Figs. 6A and 6B.

Figs. 7A and 7B are diagrams illustrating examples associated with inter-UE sidelink scheduling, in accordance with the present disclosure. In Fig. 7A, an example 700 includes an example of a timer-based IUC procedure on a sidelink between the UE 120a and the UE 120e (e.g., for sidelink unicast communication). As indicated above, timer-based IUC operations may increase reliability and efficiency in sidelink resource allocation and/or scheduling. The UE 120a and the UE 120e may each use an IUC timer to respectively determine when to transmit a new IUC request and when to monitor for a new IUC request respectively. This provides increased efficiency and reliability for IUC operations while supporting latency requirements on the sidelink.

As shown in Fig. 7A, and at 702, the UE 120a and the UE 120e for unicast or the UEs 120e for groupcast or broadcast may perform an IUC procedure to schedule and/or allocate sidelink resource(s) for a sidelink transmission from the UE 120a to the UE(s) 120e on the sidelink.

At 704, the UE 120a may transmit (and the UE 120e may receive) an IUC request. The IUC request may include an indication of one or more sidelink carriers, one or more sidelink BWPs per each sidelink carrier, and/or one or more sidelink resource pools with each sidelink BWP, as described above in connection with Figs. 5A and 5B. The IUC request may further indicate an IUC timer duration and/or an indication of whether the UE 120a is to provide preferred sidelink resource(s) and/or non-preferred sidelink resource(s) in the indicated sidelink carrier(s), in the indicated sidelink BWP(s), and/or in the indicated sidelink resource pool(s). Moreover, the UE 120a may determine and/or select the indicated sidelink carrier(s), in the indicated sidelink BWP(s), and/or in the indicated sidelink resource pool(s) from the supported and/or preferred sidelink carrier(s) for the UE 120e and/or the supported sidelink carrier(s) for the UE 120a, the supported and/or preferred sidelink BWP(s) for the UE 120e and/or the supported sidelink BWP(s) for the UE 120a, and/or the supported and/or preferred sidelink resource pools(s) for the UE 120e and/or the supported sidelink resource pools(s) for the UE 120a, as described above in connection with Fig. 6A.

At 706a, and as part of the IUC procedure, the UE 120a may start an IUC timer based at least in part on the configuration or on the transmitted the IUC request. The UE 120a may start the IUC timer at the time the IUC request is transmitted or some time after the IUC request is transmitted (e.g., after an offset time). At 706b, and as a part of the IUC procedure, the UE(s) 120e may start an IUC timer based at least in part on receiving the IUC request. The UE(s) 120e may start the IUC timer(s) at the time the IUC request is received or some time after the IUC request is received (e.g., after an offset time).

While the IUC timer is running, the UE 120a may monitor for an IUC response from the UE(s) 120e in the IUC procedure. Similarly, the UE(s) 120e may detemine the IUC response(s) to the UE 120a while the IUC timer(s) is running. The IUC timers may run for the duration indicated in the configuration or in the IUC request, or until the IUC timer is stopped (e.g., IUC timer is stopped after IUC response is formed or transmitted at 712b at UE(s) 120e or after IUC response is received at 712a at UE 120a).

At 708, in some aspects, the UE(s) 120e may determine to transmit the IUC response based on the measurement of the received IUC request (e.g., the RSSI of the received IUC request satisfies a threshold configured, the RSRP of the received IUC request satisfies a threshold configured, the RSRQ of the received IUC request satisfies a threshold configured, the SINR of the received IUC request satisfies a threshold configured, and/or another threshold for a service or QoS profile), based on the measurement of the channel (e.g., the RSSI or RSRP or RSSQ or SINR measurement over the resources is below a threshold for a service or for a QoS profile, the CBR measurement satisfies a threshold for a service or for a QoS profile), based on the distance from the UE 120a (e.g., if the distance from the UE 120a is within a communication range configured or indicated in the received IUC request based on the UE 120a's location indicated in the received IUC request), or based on the priority (e.g., selecting and transmitting to the layer 2 destination identifier with higher IUC priority when multiple IUC responses with same or different priorities need to be transmitted) or latency (e.g., selecting and transmitting to the layer 2 destination identifier with short packet delay budget (PDB) or remaining PDB or early resource selection window configured or indicated in the IUC request) for a service or QoS profile configured or indicated in the received IUC request for one or more transmissions. Based on the at least one received IUC response from one of UE(s) 120e, the UE 120a may determine the time and frequency resources for one or more transmissions to UE(s) 120e. Alternatively, with no-IUC response received, the UE 120a may determine to transmit another IUC request after the IUC timer expires if enabled (e.g., via configuration) or may determine the time and frequency resources for one or more transmissions based on the configuration or indication for supported, preferred, or allocated sidelink carrier(s), sidelink BWP(s), or sidelink resource pool(s) as described in detail in Fig. 6A and Fig. 6B.

In some aspects, the UE(s) 120e may determine to transmit the IUC response with preferred or non-preferred resources based on the sidelink measurement (e.g., for non-preferred resources if the sidelink RSSI over the resources satisfies a threshold configured, the sidelink RSRP over the resources satisfies a threshold configured, the RSRQ over the resources of the received IUC request satisfies a threshold configured, the SINR over the resources of the received IUC request satisfies a threshold configured, the CBR measurement over the resources satisfies threshold, etc., or for preferred resources if the RSSI, RSRP, RSRQ, or SINR over the resources of the received IUC request satisfies a threshold configured or the CBR over the resources satisfies a threshold) for a service or QoS profile, based on the distance from the UE 120a and the UE(s) 120e's transmission resource allocation or scheduling (e.g., if the UE(s) 120e is within the communication range with the UE 120a and if the UE(s) 120e's transmission resources have been allocated or reserved, so that to avoid transmission collisions and/or interference to each other). Based on the preferred resources and/or non-preferred resources received IUC response from UE(s) 120e (e.g., some UE(s) 120e transmits the IUC response with preferred resources, some UE(s) 120e transmits the IUC response with non-preferred resources, and some UE(s) 120e transmits the IUC response with both preferred and non-preferred resources), the UE 120a may determine the time and frequency resources for one or more transmissions to UE(s) 120e. Alternatively, with no received IUC response with preferred or non-preferred resources, the UE 120a may determine to transmit another IUC request after the IUC timer expires or may determine the time and frequency resources for one or more transmissions based on the configuration or indication for supported, preferred, or allocated sidelink carrier(s), sidelink BWP(s), or sidelink resource pool(s) as described in details in Fig. 6A and Fig. 6B.

In some aspects, the UE(s) 120e may determine to transmit the IUC response with preferred resources on some of one or more sidelink carriers, one or more sidelink BWPs, or one or more sidelink resource pools and/or non-preferred resources on the other one or more sidelink carriers, one or more sidelink BWPs, or one or more sidelink resource pools, where the one or more sidelink carriers, sidelink BWPs, or sidelink resource pools may be configured (e.g., configured as described in Fig. 6A and Fig. 6B) or indicated in the IUC request by the UE 120a (e.g., indicated at 704) or selected by the UE(s) 120e (e.g., at 708) based on sidelink measurement or UE(s) 120e's transmission resources reserved or scheduled.

In some aspects, with multiple IUC requests or IUC responses or IUC indications, a UE 120 (e.g., the UE 120s for IUC request and the UE(s) 120e for IUC response or IUC indication) may determine and transmit the IUC MAC CE(s) based on the priority value for an IUC MAC CE. For example, the UE 120 may select and transmit to the layer 2 destination identifier with higher priority IUC MAC CE for IUC request or IUC response or IUC indication among multiple IUC MAC CEs for IUC request or IUC response or IUC indication with different priority values.

In some aspects, with multiple IUC requests or IUC responses or IUC indications, a UE 120 (e.g., the UE 120s for IUC request and the UE(s) 120e for IUC response or IUC indication) may determine and transmit the IUC MAC CE(s) based on the latency for an IUC MAC CE. For example, the UE 120 may select and transmit to the layer 2 destination identifier with short PDB or remaining PDB or early resource selection window IUC MAC CE for IUC request or IUC response or IUC indication among multiple IUC MAC CEs for IUC request or IUC response or IUC indication with different latency values. For another example, the UE 120 may select and transmit to the layer 2 destination identifier with IUC request or IUC response or IUC indication indicated in SCI part 2 (e.g., for short latency).

In some aspects, with multiple IUC requests or IUC responses or IUC indications, a UE 120 (e.g., the UE 120s for IUC request and the UE(s) 120e for IUC response or IUC indication) may determine and transmit the IUC MAC CE(s) based on the priority order for an IUC MAC CE. For example, the UE 120 may select and transmit to the layer 2 destination identifier with higher priority order IUC MAC CE among multiple IUC MAC CEs for IUC request or IUC response or IUC indication with same priority values. For example, IUC MAC CE for IUC response with preferred resources may be ranked higher than the IUC MAC CE for IUC response with non-preferred resources for the priority order even though both MAC CEs may have the same priority value configured or indicated, and therefore the IUC MAC CE for IUC response with preferred resources may be selected and transmitted. For example, IUC MAC CE for IUC response or IUC indication may be ranked higher than the IUC MAC CE for IUC request for the priority order even though they may have the same priority value configured or indicated, and therefore the IUC MAC CE for IUC response or IUC indication may be selected and transmitted. For another example, IUC MAC CE for IUC response or IUC indication may be ranked lower than the IUC MAC CE for IUC request for the priority order even though they may have the same priority value configured or indicated, and therefore the IUC MAC CE for IUC request may be selected and transmitted.

At 710, the UE(s) 120e transmits (and the UE 120a receives) an IUC response(s) that indicates one or more preferred or non-preferred sidelink time domain resources and/or one or more sidelink frequency domain resources included in the sidelink carrier(s), the sidelink BWP(s), and/or the sidelink resource pool(s) configured or indicated in the IUC request. The UE(s) 120e may determine the one or more preferred or non-preferred sidelink time domain resources and/or one or more sidelink frequency domain resources based at least in part on the availability of the one or more sidelink time domain resources and the availability of the one or more sidelink frequency domain resources (e.g., based on if the UE(s) 120e is available for receiving a transmission at the time and frequency resources), channel conditions for the one or more sidelink time domain resources and/or channel conditions for the one or more sidelink frequency domain resources (e.g., based on sidelink measurement such as sidelink RSSI, sidelink RSRP, sidelink RSRQ, sidelink CQI, sidelink SINR, CBR, etc.), among other examples.

In some example, if no IUC response transmission(s) received from the UE(s) 120e while the IUC timer expires, the UE 120a may determine and transmit a second IUC request to the UE(s) 120e at 746. In some example, the UE 120a may transmit (and the UE9s) 120a may receive) the second IUC request(s) if the priority or reliability of the one or more transmissions is higher than a threshold configured. In some example, the UE120a may transmit (and the UE(s) 120a may receive) the second IUC request if the latency or PDB or remaining PDB or resource selection window of the one or more transmissions is below a threshold configured. In some example, the UE 120a may transmit (and the UE(s) 120a may receive) the second IUC request(s) if IUC request retransmission(s) is enabled and the number of IUC request retransmissions is below a threshold configured.

At 714, the UE(s) 120e may monitor for a sidelink transmission from the UE 120a based at least in part on transmitting the IUC response prior to expiration of the IUC timer(s). The UE(s) 120e may monitor the one or more preferred sidelink time domain resources and the associated sidelink frequency domain resources indicated in the IUC response for the sidelink transmission or may avoid monitoring the one or more non-preferred sidelink time domain resources and the associated sidelink frequency domain resources indicated in the IUC response for the sidelink transmission.

At 716, the UE 120a may transmit (and the UE 120e may receive) the sidelink transmission based at least in part on receiving the IUC response(s) prior to expiration of the IUC request timer. The sidelink transmission may include one or more transport blocks of data and/or control information, among other examples. The sidelink transmission may include a unicast sidelink transmission from the UE 120a to only the UE 120e, a multicast sidelink transmission from the UE 120a to the UEs 120e, a groupcast sidelink transmission from the UE 120a to the UEs 120e, a broadcast sidelink transmission from the UE 120a to the UEs 120e and one or more other UEs, or another type of sidelink transmission.

In Fig. 7B, an example 720 includes an example of IUC activation and operation for a plurality of UEs 120 in a multi-UE configuration procedure for sidelink multicast or groupcast (e.g., group(s) of UEs 120), and/or sidelink broadcast (e.g., all UEs 120). In some aspects, the operations described in the example 720 are performed after the operations described above in the example 620 of Fig. 6B (e.g., activate one or more sidelink carriers, one or more sidelink BWPs, one or more sidelink resource pools, or one or more IUC parameter values as a subset respectively of the one or more sidelink carriers, one or more sidelink BWPs, one or more sidelink resource pools, or IUC parameters configured in example 620 of Fig. 6B).

At 722, the network entity, the UE 120a, and the UEs 120 may perform an IUC activation procedure in which the network entity activates one or more sidelink carriers, one or more sidelink BWPs, one or more sidelink resource pools, or one or more IUC parameter values, based on the one or more side sidelink carriers, one or more sidelink BWPs, one or more sidelink resource pools, or IUC parameter values configured in example 620 of Fig. 6B for the UE 120a and the UEs 120.

At 724, and as part of the IUC activation procedure, the network entity determines one or more determined sidelink carriers that are to be used by the UE 120a and the UEs 120 on a sidelink, one or more determined sidelink BWPs on a sidelink carrier that are to be used by the UE 120 and the UEs 120 on the sidelink, one or more determined sidelink resource pools within a sidelink BWP that are to be used by the UE 120a and the UEs 120 on the sidelink, and/or one or more determined IUC parameters that are to be used by the UE 120a and the UEs 120 on the sidelink.

The network entity may determine these determined sidelink carrier(s), sidelink BWP(s), sidelink resource pool(s), and/or IUC parameters based at least in part on the supported sidelink carrier(s), supported sidelink BWP(s), supported sidelink resource pool(s), and/or supported IUC parameters configured at 622 or indicated by the UE 120a and the UEs 120 at 628, as described above in the example 620 of Fig. 6B. In some aspects, the network entity determines these determined sidelink carrier(s), determined sidelink BWP(s), determined sidelink resource pool(s), and/or determined IUC parameters based at least in part on sidelink channel conditions, system loading in the wireless network, measurement reports received from the UE 120a and/or the UEs 120, and/or based at least in part on one or more other factors.

At 726, the network entity transmits a MAC-CE communication (e.g., an IUC activation MAC CE transmitted with a data packet or transmitted alone if no data available to transmit) to the UE 120a (and in some cases, to the UEs 120) to activate the one or more determined sidelink carriers, one or more determined sidelink BWPs, one or more determined sidelink resource pools, and/or one or more determined IUC parameters.

At 728, the UE 120a may forward, relay, and/or otherwise transmit the MAC-CE communication to the UEs 120 (e.g., the MAC-CE communication including the indication to activate the one or more determined sidelink carriers, one or more determined sidelink BWPs, one or more determined sidelink resource pools, and/or one or more determined IUC parameters) to forward the information from the network entity to the UEs 120.

At 730, the UEs 120 may respond to the UE 120a by transmitting a MAC-CE acknowledgement (ACK) or negative acknowledgement (NACK) to the UE 120a. The MAC-CE ACK or NACK may include an ACK or NACK of the MAC-CE communication received from the UE 120a indicating that reception and/or decoding of the MAC-CE communication was successful or failed.

At 732, the UE 120a (and in some cases, the UEs 120) may respond to the network entity by transmitting a MAC-CE ACK or NACK to the network entity. The MAC-CE ACK or NACK may include an ACK or NACK of the MAC-CE communication received from the network entity (e.g., directly or via the UE 120a) indicating that reception and/or decoding of the MAC-CE communication was successful or failed. In some examples, the UE 120a may forward UEs 120's ACK or NACK to the network entity. In some examples, the UE 120a may aggregate UEs 120's ACK or NACK to the network entity. In some examples, the UE 120a may send an ACK or NACK to the network entity based on the received UEs 120's ACK or NACK (e.g., an ACK if all ACKs received from UEs 120, a NACK if at least a NACK received from UEs 120, or a ACK or NACK if the number of ACKs satisfies a threshold or if the number of NACKs satisfies a threshold respectively). In some examples, only NACK is transmitted by UE 120a and/or UEs 120 to reduce the ACK/NACK feedback overhead. Additionally, the network entity may decide to retransmit the IUC activation MAC CE or not based on the received ACK or NACK feedback.

At 734, the UE 120a and the UEs 120 may perform an IUC procedure based at least in part on the network entity activating IUC for the UE 120a and the UEs 120 in the IUC activation procedure.

In some aspects, the IUC procedure includes operations similar to those described in connection with the example 510 of Fig. 5A, where the UE 120a transmits an IUC request (e.g., at 736) to the UEs 120, UE120 and UEs 120 may start the IUC timers respectively after transmitting or receiving the IUC request (e.g., at 738a/738b), UEs 120 may determine the preferred or non-preferred resources (e.g., at 740, as described in details for 708 of Fig. 7A) and the UEs 120 respond (e.g., at 742) with IUC responses in MAC-CE communications. The IUC responses may indicate respective sidelink resource(s) selected and/or determined by each of the UEs 120.

In some aspects, the IUC procedure includes operations similar to the example 520 of Fig. 5B, where the UEs 120 determine an IUC indication condition has been satisfied and determine preferred or non-preferred resources (e.g., at 740, as described in details for 708 of Fig. 7A) and transmit the IUC responses (at 742) based at least in part on determining that the IUC response condition has been satisfied.

At 742, the UE 120a may transmit (and the UEs 120 may receive) a sidelink transmission based at least in part on receiving the IUC responses from the UEs 120. The sidelink transmission may include one or more transport blocks of data and/or control information, among other examples. The sidelink transmission may include a multicast sidelink transmission from the UE 120a to the UEs 120, a groupcast sidelink transmission from the UE 120a to the UEs 120, a broadcast sidelink transmission from the UE 120a to the UEs 120, or another type of multi-UE sidelink transmission.

In some examples, the UE(s) 120 may start the IUC timer e.g., at 744) for IUC response retransmissions after transmitting the IUC response(s) at 742. If no transmission(s) received from the UE 120a while the IUC timer expires, the UE(s) 120 may determine another set of preferred or non-preferred resources (e.g., same as or different from the preferred or non-preferred resources transmitted at 742, for example, based on the latency or the resource selection window) and transmit the second IUC response to the UE 120a at 746. In some examples, the IUC timer used for the IUC indication here may be the same timer or timer value (e.g., the IUC timer as used through the descriptions in Figs. 7A, 7B, 8, 9, and 10) used for the second transmission of the IUC request by the UE 120a and for the second transmission of the IUC response(s) by the UE(s) 120e. In some examples, the IUC timer used for the IUC indication here may be different timers or timer values used for the second transmission of the IUC request by the UE 120a and for the second transmission of the IUC response(s) by the UE(s) 120e. In some examples, the UE(s) 120e may transmit (and the UE 120e may receive) the second IUC response(s) if the priority or reliability of the one or more transmissions satisfies a threshold configured. In some examples, the UE(s) 120e may transmit (and the UE 120e may receive) the second IUC response if the latency or PDB or remaining PDB or resource selection window of the one or more transmissions satisfies a threshold configured. In some examples, the UE(s) 120e may transmit (and the UE 120e may receive) the second IUC response(s) if IUC response retransmission(s) is enabled and the number of IUC response retransmissions satisfies a threshold configured.

As indicated above, Figs. 7A and 7B are provided as examples. Other examples may differ from what is described with respect to Figs. 7A and 7B.

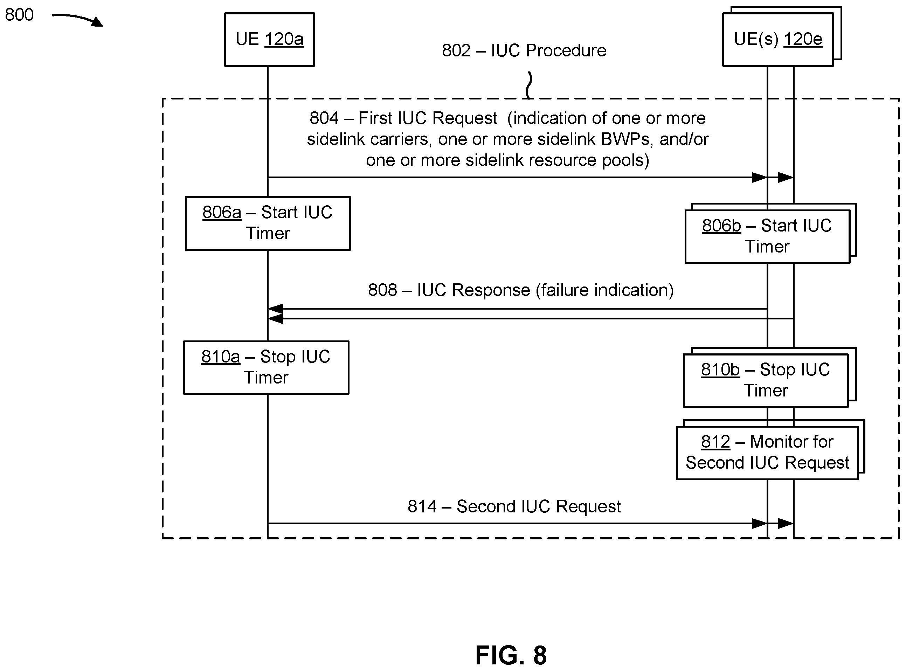

Fig. 8 is a diagram illustrating an example 800 associated with inter-UE sidelink scheduling, in accordance with the present disclosure. In particular, the example 800 includes an example of a timer-based IUC procedure on a sidelink between the UE 120a and the UE 120e.

As shown in Fig. 8, and at 802, the UE 120a and the UE 120e may perform an IUC procedure to schedule and/or allocate sidelink resource(s) for a sidelink transmission from the UE 120a to the UE 120e on the sidelink. At 804, the UE 120a may transmit (and the UE 120e may receive) a first IUC request, which may be similar to the IUC request described above at 704 in Fig. 7A. At 806a, and as part of the IUC procedure, the UE 120a may start an IUC timer based at least in part on transmitting the first IUC request. At 806b, and as part of the IUC procedure, the UE(s) 120e may start an IUC timer(s) based at least in part on receiving the first IUC request.

While the IUC timer is running, the UE 120a may monitor for an IUC response from the UE(s) 120e in the IUC procedure. Similarly, the UE 120e may transmit the IUC response to the UE 120a while the IUC timer is running. The IUC timers may run for the duration indicated in the IUC request, or until a response is transmitted by the UE 120e and/or received by the UE 120a (e.g., at 810, stopped by the UE(s) 120e and/or the UE 120a after transmitting or receiving the IUC response(s) respectively).

At 808, the UE(s) 120e transmits (and the UE 120a receives) an IUC response(s) that indicates a failure and, in some cases, a failure reason. For example, the IUC response may indicate that the UE(s) 120e could not identify one or more sidelink time domain resources and/or the one or more sidelink frequency domain resources in the sidelink carrier(s), in the sidelink BWP(s), and/or in the sidelink resource pool(s) indicated in the first IUC request. As another example, the IUC response may indicate that decoding of the first IUC request was not successful.

At 812, the UE 120e may monitor for a second IUC request from the UE 120a in the IUC procedure based at least in part on transmitting the IUC response with the failure indication prior to expiration of the IUC request timer.

At 814, the UE 120a may transmit (and the UE 120e may receive) the second IUC request based at least in part on receiving the IUC response with the failure indication(s) prior to expiration of the IUC request timer. In some aspects, the second IUC request may be a retransmission of the first IUC request. In other words, the second IUC request may include the same configuration and information as the first IUC request. Alternatively, the second IUC request may include a new IUC request that identifies sidelink carrier(s) different from the sidelink carrier(s) indicated in the first IUC request, that identifies sidelink BWP(s) different from the sidelink BWP(s) indicated in the first IUC request, that identifies sidelink resource pool(s) different from the sidelink resource pool(s) indicated in the first IUC request and/or that identifies IUC parameters different from the IUC parameters indicated in the first IUC request, based on the received failure indication. This may increase the likelihood of the UE 120e successfully identifying one or more sidelink time domain resources and/or one or more frequency domain resources. In some examples, the UE 120a may transmit (and the UE 120e may receive) the second IUC request if at least one failure indication is received from the UE(s) 120e. In some examples, the UE 120a may transmit (and the UE 120e may receive) the second IUC request if the number of received failure indications from the UE(s) 120e satisfies a threshold configured. In some examples, the UE 120a may transmit (and the UE 120e may receive) the second IUC request if the received failure indication from the UE(s) 120e within a communication range (e.g., based on the UE(s) 120e's location indicated in the IUC response). In some examples, the UE 120a may transmit (and the UE 120e may receive) the second IUC request if the priority or reliability of the one or more transmissions satisfies a threshold configured. In some examples, the UE 120a may transmit (and the UE 120e may receive) the second IUC request if the latency or PDB or remaining PDB or resource selection window of the one or more transmissions satisfies a threshold configured. In some examples, the UE 120a may transmit (and the UE 120e may receive) the second IUC request if IUC request retransmission(s) is enabled and the number of IUC request retransmissions satisfies a threshold configured.

The UE 120a and the UE(s) 102e may proceed in a similar manner in the IUC procedure until the UE(s) 120e successfully identifies one or more sidelink time domain resources and/or one or more frequency domain resources in an IUC response, or until a transport block latency requirement is no longer satisfied (at which time the UE 120a and the UE 120e may terminate the IUC procedure).

As indicated above, Fig. 8 is provided as an example. Other examples may differ from what is described with respect to Fig. 8.

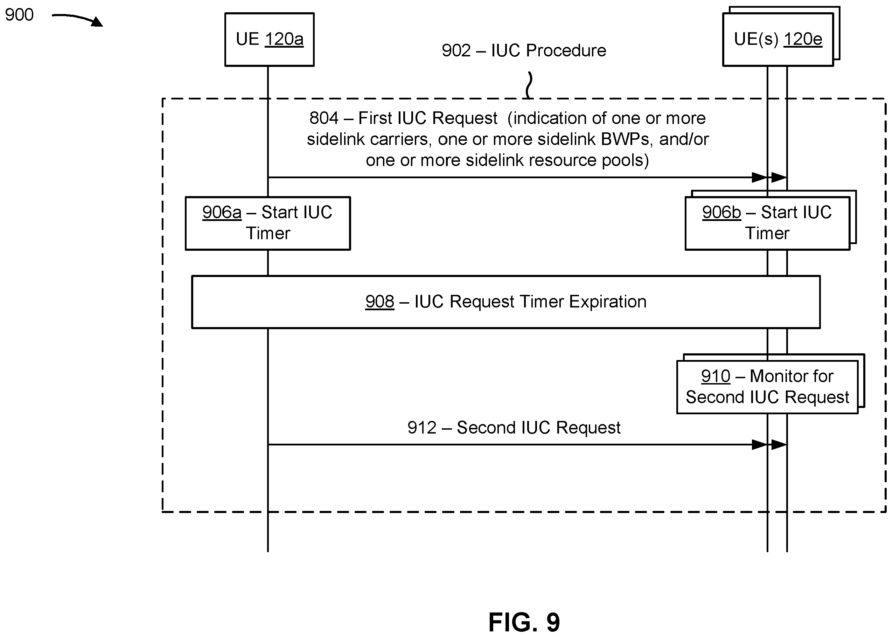

Fig. 9 is a diagram illustrating an example 900 associated with inter-UE sidelink scheduling, in accordance with the present disclosure. In particular, the example 900 includes an example of a timer-based IUC procedure on a sidelink between the UE 120a and the UE 120e.

As shown in Fig. 9, and at 902, the UE 120a and the UE(s) 120e may perform an IUC procedure to schedule and/or allocate sidelink resource(s) for a sidelink transmission from the UE 120a to the UE(s) 120e on the sidelink. At 904, the UE 120a may transmit (and the UE(s) 120e may receive) a first IUC request, which may be similar to the IUC request described above at 704 in Fig. 7A. At 906a, and as part of the IUC procedure, the UE 120a may start an IUC timer based at least in part on transmitting the first IUC request. At 906b, and as part of the IUC procedure, the UE(s) 120e may start an IUC timer based at least in part on receiving the first IUC request.

While the IUC timer is running, the UE 120a may monitor for an IUC response from the UE(s) 120e in the IUC procedure. Similarly, the UE(s) 120e may transmit the IUC response(s) to the UE 120a while the IUC timer(s) is running. The IUC timers may run for the duration indicated in the IUC request, or until a response is formed or transmitted by the UE 120e and/or received by the UE 120a.

At 908, the UE 120a may determine that the IUC request timer has expired prior to reception of an IUC response from the UE(s) 120e in the IUC procedure. Similarly, the UE(s) 120e may determine that the IUC request timer has expired prior to transmission of an IUC response from the UE(s) 120e in the IUC procedure (e.g., the IUC response process may be stopped or the IUC response transmission may be dropped). This may occur, for example, when the UE(s) 120e has higher priority transmissions and or receptions that prevent the UE(s) 120e from transmitting an IUC response prior to expiration of the IUC request timer.

At 910, the UE(s) 120e may monitor for a second IUC request from the UE 120a in the IUC procedure based at least in part on determining that no IUC response was transmitted to the UE 120a in the IUC procedure prior to expiration of the IUC request timer and that IUC retransmission(s) is enabled per the configuration in Fig 6A and Fig. 6B. or IUC activation 722 in Fig. 7B.

At 912, the UE 120a may transmit (and the UE 120e may receive) a second IUC request based at least in part on determining that no IUC response was received from the UE 120e in the IUC procedure prior to expiration of the IUC request timer and that IUC retransmission(s) is enabled per the configuration in Fig 6A and Fig. 6B. or IUC activation 722 in Fig. 7B. In some aspects, the second IUC request may be a retransmission of the first IUC request. In other words, the second IUC request may include the same configuration and information as the first IUC request. Alternatively, the second IUC request may include a new IUC request that identifies sidelink carrier(s) different from the sidelink carrier(s) indicated in the first IUC request, that identifies sidelink BWP(s) different from the sidelink BWP(s) indicated in the first IUC request, that identifies sidelink resource pool(s) different from the sidelink resource pool(s) indicated in the first IUC request, and/or that identifies IUC parameters different from the IUC parameters indicated in the first IUC request. This may increase the likelihood of the UE 120e successfully identifying one or more sidelink time domain resources and/or one or more frequency domain resources. In some examples, determining the second IUC request transmission may be based on the priority or reliability of the one or more transmissions from UE 120a to UE(s) 120e. In some examples, determining the second IUC request transmission may be based on the latency or PDB or remaining PDB or resource selection window of the one or more transmissions from UE 120a to UE(s) 120e. In some examples, determining the second IUC request transmission may be based on the sidelink measurements (e.g., sidelink RSSI, RSRP, RSRQ, or SINR) or channel condition (e.g., CBR measurement).

The UE 120a and the UE 120e may proceed in a similar manner in the IUC procedure until the UE(s) 120e successfully identifies one or more sidelink time domain resources and/or one or more frequency domain resources in an IUC response, or until a transport block latency requirement is no longer satisfied (at which time the UE 120a and the UE 120e may terminate the IUC procedure).

As indicated above, Fig. 9 is provided as an example. Other examples may differ from what is described with respect to Fig. 9.

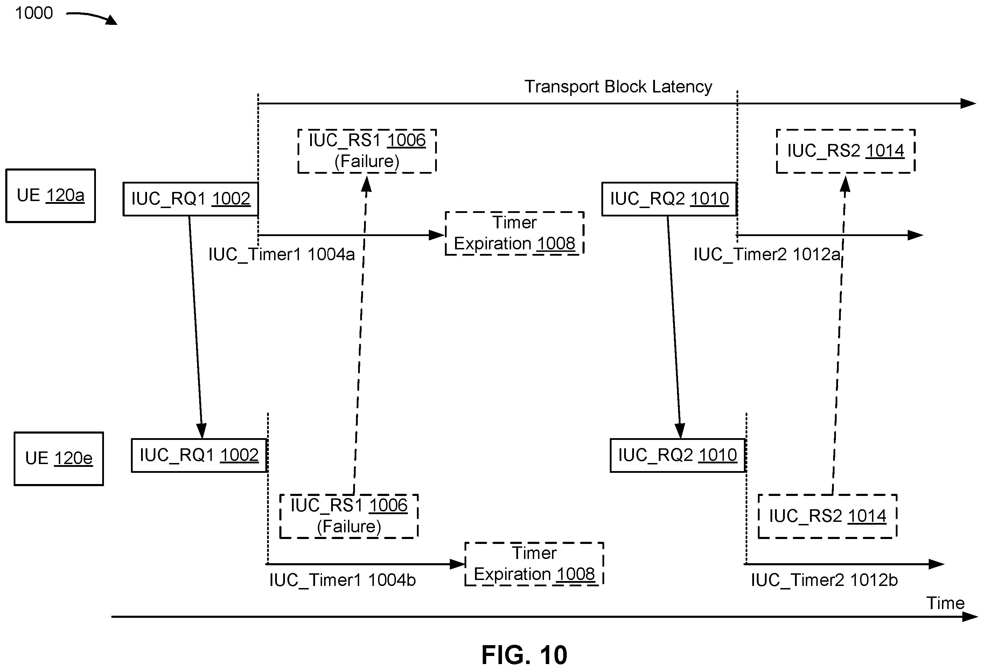

Fig. 10 is a diagram illustrating an example 1000 associated with inter-UE sidelink scheduling, in accordance with the present disclosure. In particular, the example 1000 includes an example of a timer-based IUC procedure on a sidelink between the UE 120a and the UE(s) 120e.

As shown in the example 1000, the UE 120a may transmit (and the UE 120e may receive) a first IUC request (IUC_RQ1) 1002. The UE 120a may start a first IUC timer (IUC_ Timer1) 1004a based at least in part on transmitting the first IUC request 1002. The UE 120e may start a first IUC timer (IUC_ Timer1) 1004b based at least in part on receiving the first IUC request 1002.

While the first IUC timer 1004a is running, the UE 120a may monitor for an IUC response from the UE 120e. Similarly, the UE 120e may monitor for transmitting the IUC response to the UE 120a while the first IUC timer 1004b is running. The first IUC timers 1004a, 1004b may run for the duration indicated in the first IUC request 1002, or until a response is transmitted by the UE 120e and/or received by the UE 120a.

For example, the UE 120e may transmit (and the UE 120a may receive) a first IUC response (IUC_RS1) 1006 prior to expiration of the first IUC timers 1004a, 1004b. Here, the UE 120a may stop the first IUC timer 1004a based at least in part on receiving the first IUC response 1006 and may transmit a second IUC request to the UE 120e based at least in part on the first IUC response 1006 indicating a failure. The UE 120e may stop the first IUC timer 1004b based at least in part on transmitting the first IUC response 1006 and may monitor for a second IUC request from the UE 120a based at least in part on the first IUC response 1006 indicating a failure.

Alternatively, after expiration of the first IUC timer 1004a at 1008, the UE 120a may determine to transmit a second IUC request (IUC_RQ2) 1010 to the UE 120e based at least in part on no IUC response being received prior to expiration of the first IUC timer 1004a. Similarly, after expiration of the first IUC timer 1004b at 1008, the UE 120e may determine to monitor for the second IUC request 1010 from the UE 120e based at least in part on no IUC response being transmitted prior to expiration of the first IUC timer 1004b.

The UE 120a may start a second IUC timer (IUC_ Timer2) 1012a based at least in part on transmitting the second IUC request 1010. The UE 120e may start a second IUC timer (IUC_RQ_Timer1) 1012b based at least in part on receiving the second IUC request 1010.

While the second IUC timer 1012a is running, the UE 120a may monitor for an IUC response from the UE 120e. Similarly, the UE 120e may monitor for transmitting an IUC response to the UE 120a while the second IUC timer 1012b is running. The second IUC timers 1012a, 1012b may run for the duration indicated in the second IUC request 1010, or until a response is transmitted by the UE 120e and/or received by the UE 120a.

In some cases, the UE 120e may transmit (and the UE 120a may receive) a second IUC response (IUC_RS2) 1014 prior to expiration of the second IUC timers 1012a, 1012b. The UE 120a and the UE 102e may proceed in a similar manner until the UE 120e successfully identifies one or more sidelink time domain resources and/or one or more frequency domain resources in an IUC response, or until a transport block latency requirement is no longer satisfied. The transport block latency may include a time duration that is initiated at the time of transmission of an IUC request (e.g., a first IUC request). The transport block latency for a sidelink transmission may be based at least in part on a latency parameter for the sidelink transmission, a priority for the sidelink transmission, and/or another parameter for the sidelink transmission.

As indicated above, Fig. 10 is provided as an example. Other examples may differ from what is described with respect to Fig. 10.

Figs. 11A and 11B are diagrams illustrating example MAC-CE formats for an IUC request, in accordance with the present disclosure. Fig. 11A illustrates an example MAC-CE format 1100. Fig. 11B illustrates an example MAC-CE format 1130. The MAC-CE formats 1100, 1130 may be used for a MAC-CE communication that includes one or more of the IUC requests described herein.

As shown in Figs. 11A and 11B, the MAC-CE format 1100 and the MAC-CE format 1130 may include a plurality of bits (e.g., bits 0-7) arranged in octets (e.g., Octets 1-5). The quantities of bits and octets illustrated in Figs. 11A and 11B are a examples, and other quantities are within the scope of the present disclosure.

As further shown in Figs. 11A and 11B, the MAC-CE format 1100 and the MAC-CE format 1130 may include a plurality of fields. In some aspects, the MAC-CE format 1100 and the MAC-CE format 1130 may include an IUC MAC header 1102. This field may be used to indicate a sender and recipient of the associated MAC-CE, among other examples. In some aspects, the MAC-CE format 1100 and the MAC-CE format 1130 may include a length field 1104. This field may be used to indicate a length in quantity of bits of the associated MAC-CE, among other examples.

In some aspects, the MAC-CE format 1100 and the MAC-CE format 1130 may include a request field 1106. This field may be used to indicate whether the associated MAC-CE is for an IUC request. For example, a first value in the request field 1106 may indicate that the associated MAC-CE includes an IUC request. As another example, a second value in the request field 1106 may indicate that the associated MAC-CE is for another purpose (e.g., for IUC response).

In some aspects, the MAC-CE format 1100 may include a sidelink carrier index field 1108 as shown in Fig, 11A. In some aspects, the MAC-CE format 1130 may include a plurality of sidelink carrier index fields 1108a - 1108*n* as shown in Fig. 11B. This field may be used to indicate one or more sidelink carriers on which an IUC response is to indicate preferred or no preferred sidelink resource(s), as described herein. The sidelink carrier(s) may be indicated in the sidelink carrier index field 1108 by associated sidelink carrier indexes. In some cases, the sidelink carrier index field 1108 may be unused, which reduces the size of the associated MAC-CE. In some cases, the sidelink carrier index field 1108 may be referred to as an SL-Carrier-Index field or IE.

In some aspects, the MAC-CE format 1100 may include a sidelink BWP field 1110 as shown in Fig, 11A. In some aspects, the MAC-CE format 1130 may include a plurality of sidelink BWP fields 1110a - 1110*n* as shown in Fig, 11B. This field may be used to indicate one or more sidelink BWPs in which an IUC response is to indicate sidelink resource(s), as described herein. The sidelink BWP(s) may be indicated in the sidelink BWP field 1110 by associated sidelink BWP identifiers (IDs). In some cases, the sidelink BWP field 1110 may be unused, which reduces the size of the associated MAC-CE. In some cases, the sidelink BWP field 1110 may be referred to as an SL-BWP-ID field or IE.

In some aspects, the MAC-CE format 1100 may include a sidelink resource pool field 1112 as shown in Fig, 11A. In some aspects, the MAC-CE format 1130 may include a plurality of sidelink resource pool fields 1112a- 1112*n* as shown in Fig, 11B. This field may be used to indicate one or more sidelink resource pools in which an IUC response is to indicate sidelink resource(s), as described herein. The sidelink resource pool(s) may be indicated in the sidelink resource pool field 1112 by associated sidelink resource pool IDs. In some cases, the sidelink resource pool field 1112 may be unused, which reduces the size of the associated MAC-CE. In some cases, the sidelink resource pool field 1112 may be referred to as an SL-Resource-Pool-ID field or IE.

In some aspects, the MAC-CE format 1100 may include one IUC timer field 1114 as shown in Fig, 11A. In some aspects, the MAC-CE format 1130 may include two IUC timer fields 1114a and 1114b as shown in Fig. 11B. This field may be used to indicate a duration for an IUC request timer or an IUC response timer, as described herein. Additionally and/or alternatively, the IUC timer field 1114 may indicate whether an IUC request timer is activated.

In some aspects, the MAC-CE format 1100 and the MAC-CE format 1130 may include a priority field 1116. This field may be used to indicate a priority of a sidelink transmission associated with the IUC request. In some aspects, the MAC-CE format 1100 and the MAC-CE format 1130 may include a latency field 1118 (e.g., PDB or remaining PDB or resource selection window for one or more transmissions from the UE 120a). This field may be used to indicate a latency parameter of a sidelink transmission associated with the IUC request. In some aspects, the MAC-CE format 1100 and the MAC-CE format 1130 may include a periodicity field 1120. This field may be used to indicate a periodicity of sidelink transmissions (e.g., for semi-persistent resource reservation or scheduling). In some aspects, the MAC-CE format 1100 may include a HARQ field 1122. This field may be used to indicate if HARQ feedback is enabled or not for the one or more transmissions from UE 120a or UE(s) 120e (e.g., the HARQ feedback resource allocation needs to be considered for determining preferred resources, for example, the selected resource pool(s) needs to contain suitable HARQ feedback resources). In some aspects, the MAC-CE format 1100 and the MAC-CE format 1130 may include a preferred field 1124. This field may be used to indicate whether preferred sidelink resource(s) or non-preferred sidelink resource(s) are to be indicated in an IUC response. In some aspects, the MAC-CE format 1100 and the MAC-CE format 1130 includes provisions for one or more reserved fields 1126.

As indicated above, Figs. 11A and 11B are provided as examples. Other examples may differ from what is described with respect to Figs. 11A and 11B.

Fig. 12 is a diagram illustrating example MAC-CE format for an IUC response, in accordance with the present disclosure. The MAC-CE format 1200 may be used for a MAC-CE communication that includes one or more of the IUC responses described herein.

As shown in Fig. 12, the MAC-CE format 1200 may include a plurality of bits (e.g., bits 0-7) arranged in octets (e.g., Octets 1-*i*). The quantities of bits and octets illustrated in Fig. 12 are an example, and other quantities are within the scope of the present disclosure.

As further shown in Fig. 12, the MAC-CE format 1200 includes a plurality of fields. In some aspects, the MAC-CE format 1200 may include an IUC MAC header 1202. This field may be used to indicate a sender and recipient of the associated MAC-CE, among other examples. In some aspects, the MAC-CE format 1200 may include a length field 1204. This field may be used to indicate a length in quantity of bits of the associated MAC-CE, among other examples.

In some aspects, the MAC-CE format 1200 may include a response field 1206. This field may be used to indicate whether the associated MAC-CE is for an IUC response. For example, a first value in the response field 1206 may indicate that the associated MAC-CE includes the IUC response. As another example, a second value in the response field 1206 may indicate that the associated MAC-CE is for another purpose.

In some aspects, the MAC-CE format 1200 may include a sidelink carrier index field 1208 (or a plurality of sidelink carrier index fields 1208). This field may be used to indicate one or more sidelink carriers on which sidelink resource(s) indicated in the IUC response are included, as described herein. The sidelink carrier(s) may be indicated in the sidelink carrier index field 1208 by associated sidelink carrier indexes. In some cases, the sidelink carrier index field 1208 may be unused, which reduces the size of the associated MAC-CE (e.g., where an associated IUC request indicates the sidelink carrier(s)). In some cases, the sidelink carrier index field 1208 may be referred to as an SL-Carrier-Index field or IE.

In some aspects, the MAC-CE format 1200 may include a sidelink BWP field 1210 (or a plurality of sidelink BWP fields 1210). This field may be used to indicate one or more sidelink BWPs in which sidelink resource(s) indicated in the IUC response are included, as described herein. The sidelink BWP(s) may be indicated in the sidelink BWP field 1210 by associated sidelink BWP IDs. In some cases, the sidelink BWP field 1210 may be unused (e.g., where an associated IUC request indicates the sidelink BWP(s)), which reduces the size of the associated MAC-CE. In some cases, the sidelink BWP field 1210 may be referred to as an SL-BWP-ID field or IE.

In some aspects, the MAC-CE format 1200 may include a sidelink resource pool field 1212 (or a plurality of sidelink resource pool fields 1212). This field may be used to indicate one or more sidelink resource pools in which sidelink resource(s) indicated in the IUC response are included, as described herein. The sidelink resource pool(s) may be indicated in the sidelink resource pool field 1212 by associated sidelink resource pool IDs. In some cases, the sidelink resource pool field 1212 may be unused (e.g., where an associated IUC request indicates the sidelink resource pool(s)), which reduces the size of the associated MAC-CE. In some cases, the sidelink resource pool field 1212 may be referred to as an SL-Resource-Pool-ID field or IE.

As further shown in Fig. 12, the remaining octets in the MAC-CE format 1200 may be configured for indicating the sidelink resource(s) (e.g., preferred to non-preferred) for IUC. For example, one or more octets may be configured for time resource fields 1214a-1214*n*, and one or more octets may be configured for frequency resource fields 1216a-1216*m*. The quantities of time resource fields 1214a-1214*n* and frequency resource fields 1216a-1216*m* are examples, and other quantities are within the scope of the present disclosure. The order of time resource fields 1214a-1214*n* and frequency resource fields 1216a-1216*m* in the MAC-CE format 1200 is an example, and other orders are within the scope of the present disclosure.

As further shown in Fig. 12, the MAC-CE format 1200 may enable indications of both preferred and non-preferred sidelink resources. The fields 1208-1216 may be used to indicate preferred sidelink resources, and fields 1218-1228 may be used to indicate non-preferred sidelink resources. A non-preferred field 1218 may be used to indicate whether non-preferred resources are indicated in the MAC-CE communication. Fields 1220 through 1228 respectively perform similar functions as the fields 1208-1216, except that the fields 1208-1216 may be used to indicate preferred sidelink resources (and the associated sidelink carrier index(es), the associated sidelink BWP(s), and/or the associated sidelink resource pool(s)), and fields 1220-1228 may be used to indicate non-preferred sidelink resources (and the associated sidelink carrier index(es), the associated sidelink BWP(s), and/or the associated sidelink resource pool(s)).

In some aspects, the IUC request or response may be indicated with SCI part 2 which is transmitted with the IUC MAC CE for request or response with the same fields as described for IUC MAC CE in Fig. 11A, 11B and 12.

In some aspects, the resource reservation(s) in SCI part 1 transmitted with the IUC request in MAC CE and/or SCI part 2 may be used for indicating one or more retransmissions of the IUC request as described in Figs. 7A, 7B, 8, 9 or 10.

In some aspects, the resource reservation(s) in SCI part 1 transmitted with the IUC response in MAC CE and/or SCI part 2 may be used for indicating one or more retransmissions of the IUC request as described in Figs. 7A, 7B, 8, 9 or 10.

In some aspects, the resource reservation(s) in SCI part 1 transmitted with the IUC indication in MAC CE and/or SCI part 2 may be used for indicating one or more retransmissions of the IUC request as described in Figs. 7A, 7B, 8, 9 or 10.

As indicated above, Fig. 12 is provided as an example. Other examples may differ from what is described with respect to Fig. 12.

Fig. 13 is a diagram illustrating an example process 1300 performed, for example, by a first UE, in accordance with the present disclosure. Example process 1300 is an example where the first UE (e.g., a first UE 120) performs operations associated with inter-UE sidelink scheduling.

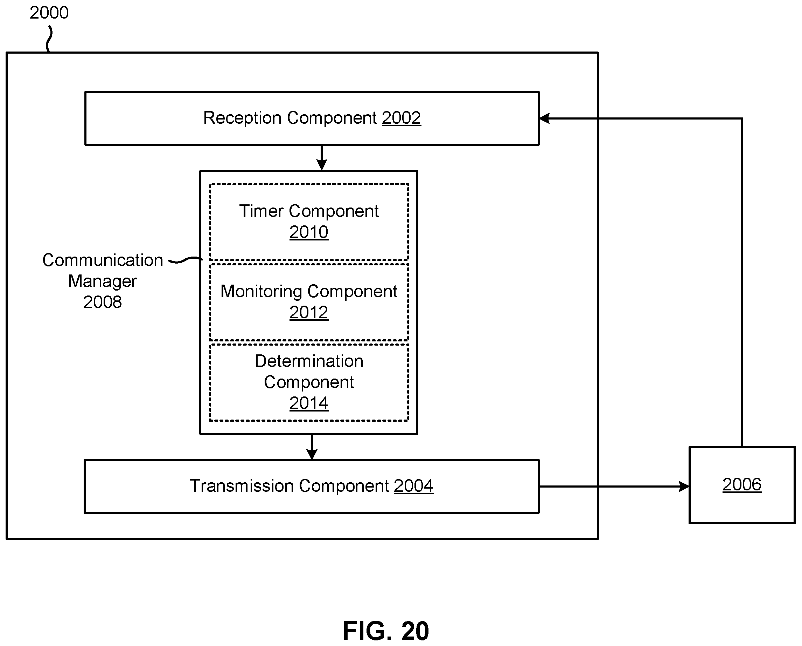

As shown in Fig. 13, in some aspects, process 1300 may include transmitting, to a second UE, an IUC request, wherein the IUC request indicates at least one of one or more sidelink carriers, one or more BWPs, or one or more sidelink resource pools (block 1310). For example, the first UE (e.g., using communication manager 140 and/or transmission component 2004, depicted in Fig. 20) may transmit, to a second UE, an IUC request, as described above. In some aspects, the IUC request indicates at least one of one or more sidelink carriers, one or more sidelink BWPs, or one or more sidelink resource pools.

As further shown in Fig. 13, in some aspects, process 1300 may include receiving, from the second UE, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools (block 1320). For example, the first UE (e.g., using communication manager 140 and/or reception component 2002, depicted in Fig. 20) may receive, from the second UE, an IUC response that indicates at least one of one or more sidelink time domain resources associated with at least one of the one or more sidelink carriers, the one or more sidelink BWPs or the one or more sidelink resource pools, or one or more sidelink frequency domain resources associated with at least one of the one or more sidelink carriers, the one or more sidelink BWPs, or the one or more sidelink resource pools, as described above.

Process 1300 may include additional aspects, such as any single aspect or any combination of aspects described below and/or in connection with one or more other processes described elsewhere herein.

In a first aspect, transmitting the IUC request comprises transmitting the IUC request in a MAC-CE. In a second aspect, alone or in combination with the first aspect, the IUC request indicates the one or more sidelink carriers, and the one or more sidelink carriers are indicated in the MAC-CE in one or more sidelink carrier index fields in the MAC-CE. In a third aspect, alone or in combination with one or more of the first and second aspects, the IUC request indicates the one or more sidelink BWPs, and the one or more sidelink BWPs are indicated in the MAC-CE in one or more sidelink BWP identifier fields in the MAC-CE.

In a fourth aspect, alone or in combination with one or more of the first through third aspects, the IUC request indicates the one or more sidelink resource pools, and the one or more sidelink resource pools are indicated in the MAC-CE in one or more sidelink resource pools identifier fields in the MAC-CE. In a fifth aspect, alone or in combination with one or more of the first through fourth aspects, receiving the IUC response comprises receiving the IUC response in a MAC-CE. In a sixth aspect, alone or in combination with one or more of the first through fifth aspects, the IUC request indicates the one or more sidelink carriers, and at least one of a sidelink BWP identifier field in the MAC-CE indicates a sidelink BWP in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included.

In a seventh aspect, alone or in combination with one or more of the first through sixth aspects, the IUC request indicates the one or more sidelink BWPs, and at least one of a sidelink carrier index field in the MAC-CE indicates a sidelink carrier in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included. In an eighth aspect, alone or in combination with one or more of the first through seventh aspects, the IUC request indicates the one or more sidelink resource pools, and at least one of a sidelink carrier index field in the MAC-CE indicates a sidelink carrier in which at least one of the one or more sidelink time domain resources are included or the one or more sidelink frequency domain resources are included, or a sidelink BWP identifier field in the MAC-CE indicates a sidelink BWP in which at least one of the one or more sidelink time domain resources are included or the one or more sidelink frequency domain resources are included.

Although Fig. 13 shows example blocks of process 1300, in some aspects, process 1300 may include additional blocks, fewer blocks, different blocks, or differently arranged blocks than those depicted in Fig. 13. Additionally, or alternatively, two or more of the blocks of process 1300 may be performed in parallel.

Fig. 14 is a diagram illustrating an example process 1400 performed, for example, by a first UE, in accordance with the present disclosure. Example process 1400 is an example where the first UE (e.g., a first UE 120) performs operations associated with inter-UE sidelink scheduling.

As shown in Fig. 14, in some aspects, process 1400 may include receiving, from a second UE, an IUC request, wherein the IUC request indicates at least one of one or more sidelink carriers, one or more sidelink BWPs, or one or more sidelink resource pools (block 1410). For example, the first UE (e.g., using communication manager 140 and/or reception component 2002, depicted in Fig. 20) may receive, from a second UE, an IUC request, as described above. In some aspects, the IUC request indicates at least one of one or more sidelink carriers, one or more sidelink BWPs, or one or more sidelink resource pools.

As further shown in Fig. 14, in some aspects, process 1400 may include transmitting, to the second UE, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools (block 1420). For example, the first UE (e.g., using communication manager 140 and/or transmission component 2004, depicted in Fig. 20) may transmit, to the second UE, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools, as described above.

Process 1400 may include additional aspects, such as any single aspect or any combination of aspects described below and/or in connection with one or more other processes described elsewhere herein.

In a first aspect, receiving the IUC request comprises receiving the IUC request in a MAC-CE. In a second aspect, alone or in combination with the first aspect, the IUC request indicates the one or more sidelink carriers, and the one or more sidelink carriers are indicated in the MAC-CE in one or more sidelink carrier index fields in the MAC-CE.

In a third aspect, alone or in combination with one or more of the first and second aspects, the IUC request indicates the one or more sidelink BWPs, and the one or more sidelink BWPs are indicated in the MAC-CE in one or more sidelink BWP identifier fields in the MAC-CE. In a fourth aspect, alone or in combination with one or more of the first through third aspects, the IUC request indicates the one or more sidelink resource pools, and the one or more sidelink resource pools are indicated in the MAC-CE in one or more sidelink resource pools identifier fields in the MAC-CE.

In a fifth aspect, alone or in combination with one or more of the first through fourth aspects, transmitting the IUC response comprises transmitting the IUC response in a MAC-CE. In a sixth aspect, alone or in combination with one or more of the first through fifth aspects, the IUC request indicates the one or more sidelink carriers, and at least one of a sidelink BWP identifier field in the MAC-CE indicates a sidelink BWP in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included.

In a seventh aspect, alone or in combination with one or more of the first through sixth aspects, the IUC request indicates the one or more sidelink BWPs, and at least one of a sidelink carrier index field in the MAC-CE indicates a sidelink carrier in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included. In an eighth aspect, alone or in combination with one or more of the first through seventh aspects, the IUC request indicates the one or more sidelink resource pools, and at least one of a sidelink carrier index field in the MAC-CE indicates a sidelink carrier in which at least one of the one or more sidelink time domain resources are included or the one or more sidelink frequency domain resources are included, or a sidelink BWP identifier field in the MAC-CE indicates a sidelink BWP in which at least one of the one or more sidelink time domain resources are included or the one or more sidelink frequency domain resources are included.

Although Fig. 14 shows example blocks of process 1400, in some aspects, process 1400 may include additional blocks, fewer blocks, different blocks, or differently arranged blocks than those depicted in Fig. 14. Additionally, or alternatively, two or more of the blocks of process 1400 may be performed in parallel.

Fig. 15 is a diagram illustrating an example process 1500 performed, for example, by a first UE, in accordance with the present disclosure. Example process 1500 is an example where the first UE (e.g., a first UE 120) performs operations associated with inter-UE sidelink scheduling.

As shown in Fig. 15, in some aspects, process 1500 may include transmitting, to a second UE, a first IUC request (block 1510). For example, the first UE (e.g., using communication manager 140 and/or transmission component 2004, depicted in Fig. 20) may transmit, to a second UE, a first IUC request, as described above.

As further shown in Fig. 15, in some aspects, process 1500 may include initiating an IUC request timer based at least in part on transmitting the first IUC request (block 1520). For example, the first UE (e.g., using communication manager 140 and/or timer component 2010, depicted in Fig. 20) may initiate an IUC request timer based at least in part on transmitting the first IUC request, as described above.

Process 1500 may include additional aspects, such as any single aspect or any combination of aspects described below and/or in connection with one or more other processes described elsewhere herein.

In a first aspect, process 1500 may include selectively transmitting, to the second UE, a second IUC request based at least in part on whether the IUC request timer expires prior to the first UE receiving an IUC response from the second UE for the first IUC request.

In a second aspect, alone or in combination with the first aspect, selectively transmitting the second IUC request comprises transmitting the second IUC request based at least in part on the IUC request timer expiring prior to receiving an IUC response from the second UE for the first IUC request. In a third aspect, alone or in combination with the one or more of the first or second aspects, process 1500 includes receiving, from the second UE, an IUC response prior to expiration of the IUC request timer. In some aspects, the IUC response indicates at least one of a failure indication, or a failure reason, selectively transmitting the second IUC request comprises transmitting the second IUC request based at least in part on receiving the IUC response. In a fourth aspect, alone or in combination with one or more of the first through third aspects, the second IUC request indicates at least one of a different sidelink carrier than a sidelink carrier indicated in the first IUC request, a different sidelink BWP than a sidelink BWP indicated in the first IUC request, or a different resource pool than a resource pool indicated in the first IUC request.

In a fifth aspect, alone or in combination with one or more of the first through fourth aspects, the IUC response indicates at least one of one or more preferred sidelink resources, or one or more non-preferred sidelink resources, and selectively transmitting the second IUC request comprises refraining from transmitting the second IUC request based at least in part on receiving the IUC response prior to expiration of the IUC request timer. In a sixth aspect, alone or in combination with one or more of the first through fifth aspects, process 1500 includes transmitting, based at least in part on receiving the IUC response prior to expiration of the IUC request timer, at least one of a unicast sidelink transmission to the second UE, a multicast sidelink transmission to the second UE and one or more third UEs, or a broadcast sidelink transmission to the second UE and the one or more third UEs. In a seventh aspect, alone or in combination with one or more of the first through sixth aspects, process 1500 includes transmitting, to the second UE, a sidelink configuration that indicates one or more parameters associated with the IUC request timer.

Although Fig. 15 shows example blocks of process 1500, in some aspects, process 1500 may include additional blocks, fewer blocks, different blocks, or differently arranged blocks than those depicted in Fig. 15. Additionally, or alternatively, two or more of the blocks of process 1500 may be performed in parallel.

Fig. 16 is a diagram illustrating an example process 1600 performed, for example, by a first UE, in accordance with the present disclosure. Example process 1600 is an example where the first UE (e.g., a first UE 120) performs operations associated with inter-UE sidelink scheduling.

As shown in Fig. 16, in some aspects, process 1600 may include receiving, from a second UE, a first IUC request (block 1610). For example, the first UE (e.g., using communication manager 140 and/or reception component 2002, depicted in Fig. 20) may receive, from a second UE, a first IUC request, as described above.

As further shown in Fig. 16, in some aspects, process 1600 may include initiating an IUC request timer based at least in part on receiving the first IUC request (block 1620). For example, the first UE (e.g., using communication manager 140 and/or timer component 2010, depicted in Fig. 20) may initiate an IUC request timer based at least in part on receiving the first IUC request, as described above.

Process 1600 may include additional aspects, such as any single aspect or any combination of aspects described below and/or in connection with one or more other processes described elsewhere herein.

In a first aspect, process 1600 may include selectively monitoring for a second IUC request from the second UE based at least in part on whether the IUC request timer expires prior to transmitting an IUC response to the second UE for the first IUC request. In a second aspect, along or in combination with the first aspect, selectively monitoring for the second IUC request comprises monitoring for the second IUC request based at least in part on the IUC request timer expiring prior to the first UE transmitting an IUC response to the second UE for the first IUC request. In a third aspect, alone or in combination with the first or second aspects, process 1600 includes transmitting, to the second UE, an IUC response prior to expiration of the IUC request timer, wherein the IUC response indicates at least one of a failure indication, or a failure reason, selectively monitoring for the second IUC request comprises monitoring for the second IUC request based at least in part on transmitting the IUC response.

In a fourth aspect, alone or in combination with one or more of the first through third aspects, process 1600 includes transmitting, to the second UE, an IUC response prior to expiration of the IUC request timer. In some aspects, the IUC response indicates at least one of one or more preferred sidelink resources, or one or more non-preferred sidelink resources, and selectively monitoring for the second IUC request comprises refraining from monitoring for the second IUC request based at least in part on transmitting the IUC response prior to expiration of the IUC request timer. In a fifth aspect, alone or in combination with one or more of the first through fourth aspects, process 1600 includes monitoring, based at least in part on transmitting the IUC response prior to expiration of the IUC request timer, for at least one of a unicast sidelink transmission from the second UE, a multicast sidelink transmission from the second UE, or a broadcast sidelink transmission from the second UE. In a sixth aspect, alone or in combination with one or more of the first through fifth aspects, process 1600 includes receiving, from the second UE, a sidelink configuration that indicates one or more parameters associated with the IUC request timer.

Although Fig. 16 shows example blocks of process 1600, in some aspects, process 1600 may include additional blocks, fewer blocks, different blocks, or differently arranged blocks than those depicted in Fig. 16. Additionally, or alternatively, two or more of the blocks of process 1600 may be performed in parallel.

Fig. 17 is a diagram illustrating an example process 1700 performed, for example, by a first UE, in accordance with the present disclosure. Example process 1700 is an example where the UE (e.g., a first UE 120) performs operations associated with inter-UE sidelink scheduling.

As shown in Fig. 17, in some aspects, process 1700 may include transmitting, to a second UE and as part of a sidelink connection establishment procedure, a first sidelink communication indicating at least one of one or more supported sidelink carriers for the first UE, one or more supported sidelink BWPs for the first UE, or one or more supported sidelink resource pools for the first UE (block 1710). For example, the first UE (e.g., using communication manager 140 and/or transmission component 2004, depicted in Fig. 20) may transmit, to a second UE and as part of a sidelink connection establishment procedure, a first sidelink communication indicating at least one of one or more supported sidelink carriers for the first UE, one or more supported sidelink BWPs for the first UE, or one or more supported sidelink resource pools for the first UE, as described above.

As further shown in Fig. 17, in some aspects, process 1700 may include receiving, from the second UE and as part of the sidelink connection establishment procedure, a second sidelink communication indicating at least one of one or more supported sidelink carriers for the second UE, one or more supported sidelink BWPs for the second UE, or one or more supported sidelink resource pools for the second UE (block 1720). For example, the first UE (e.g., using communication manager 140 and/or reception component 2002, depicted in Fig. 20) may receive, from the second UE and as part of the sidelink connection establishment procedure, a second sidelink communication indicating at least one of one or more supported sidelink carriers for the second UE, one or more supported sidelink BWPs for the second UE, or one or more supported sidelink resource pools for the second UE, as described above.

As further shown in Fig. 17, in some aspects, process 1700 may include receiving, from the second UE and as part of the sidelink connection establishment procedure, a third sidelink communication indicating at least one of one or more preferred sidelink carriers for the second UE, one or more preferred sidelink BWPs for the second UE, or one or more preferred sidelink resource pools for the second UE (block 1730). For example, the first UE (e.g., using communication manager 140 and/or reception component 2002, depicted in Fig. 20) may receive, from the second UE and as part of the sidelink connection establishment procedure, a third sidelink communication indicating at least one of one or more preferred sidelink carriers for the second UE, one or more preferred sidelink BWPs for the second UE, or one or more preferred sidelink resource pools for the second UE, as described above.

As further shown in Fig. 17, in some aspects, process 1700 may include transmitting, to the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE (block 1740). For example, the first UE (e.g., using communication manager 140 and/or transmission component 2004, depicted in Fig. 20) may transmit, to the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE, as described above.

Process 1700 may include additional aspects, such as any single aspect or any combination of aspects described below and/or in connection with one or more other processes described elsewhere herein.

In a first aspect, process 1700 includes determining at least one of the one or more determined sidelink carriers based at least in part on at least one of the one or more supported sidelink carriers for the first UE, the one or more supported sidelink carriers for the second UE, or the one or more preferred sidelink carriers for the second UE, the one or more determined sidelink BWPs based at least in part on at least one of the one or more supported sidelink BWPs for the first UE, the one or more supported sidelink BWPs for the second UE, or the one or more preferred sidelink BWPs for the second UE, or the one or more determined sidelink resource pools based at least in part on at least one of the one or more supported sidelink resource pools for the first UE, the one or more supported sidelink resource pools for the second UE, or the one or more preferred sidelink resource pools for the second UE. In a second aspect, alone or in combination with the first aspect, the first sidelink communication indicates one or more supported IUC parameters for the first UE, wherein the second sidelink communication indicates one or more supported IUC parameters for the second UE, wherein the third sidelink communication indicates one or more preferred IUC parameters for the second UE, and wherein the fourth sidelink communication indicates one or more determined IUC parameters for sidelink communication between the first UE and the second UE.

In a third aspect, alone or in combination with one or more of the first and second aspects, process 1700 includes determining the one or more determined IUC parameters based at least in part on at least one of the one or more supported IUC parameters for the first UE, the one or more supported IUC parameters for the second UE, or the one or more preferred IUC parameters for the second UE. In a fourth aspect, alone or in combination with one or more of the first through third aspects, the one or more determined IUC parameters comprise at least one of an IUC configuration type parameter indicating whether a condition-based IUC configuration is to be used by the first UE and the second UE or a request-based IUC configuration is to be used by the first UE and the second UE, an IUC resource reporting parameter indicating whether the second UE is to indicate preferred sidelink resources or non-preferred sidelink resources for IUC, an IUC response timer parameter indicating a duration for an IUC response timer that is to be used by the first UE and the second UE, an IUC retransmission parameter indicating whether IUC retransmissions are enabled or are disabled for the first UE and the second UE, or an IUC resource parameter indicating at least one of one or more dedicated time domain resources or one or more dedicated frequency domain resources that are to be used by the first UE and the second UE for IUC.

Although Fig. 17 shows example blocks of process 1700, in some aspects, process 1700 may include additional blocks, fewer blocks, different blocks, or differently arranged blocks than those depicted in Fig. 17. Additionally, or alternatively, two or more of the blocks of process 1700 may be performed in parallel.

Fig. 18 is a diagram illustrating an example process 1800 performed, for example, by a first UE, in accordance with the present disclosure. Example process 1800 is an example where the first UE (e.g., a first UE 120) performs operations associated with inter-UE sidelink scheduling.

As shown in Fig. 18, in some aspects, process 1800 may include receiving, from a second UE and as part of a sidelink connection establishment procedure, a first sidelink communication indicating at least one of one or more supported sidelink carriers for the second UE, one or more supported sidelink BWPs for the second UE, or one or more supported sidelink resource pools for the second UE (block 1810). For example, the first UE (e.g., using communication manager 140 and/or reception component 2002, depicted in Fig. 20) may receive, from a second UE and as part of a sidelink connection establishment procedure, a first sidelink communication indicating at least one of one or more supported sidelink carriers for the second UE, one or more supported sidelink BWPs for the second UE, or one or more supported sidelink resource pools for the second UE, as described above.

As further shown in Fig. 18, in some aspects, process 1800 may include transmitting, to the second UE and as part of the sidelink connection establishment procedure, a second sidelink communication indicating at least one of one or more supported sidelink carriers for the first UE, one or more supported sidelink BWPs for the first UE, or one or more supported sidelink resource pools for the first UE (block 1820). For example, the first UE (e.g., using communication manager 140 and/or transmission component 2004, depicted in Fig. 20) may transmit, to the second UE and as part of the sidelink connection establishment procedure, a second sidelink communication indicating at least one of one or more supported sidelink carriers for the first UE, one or more supported sidelink BWPs for the first UE, or one or more supported sidelink resource pools for the first UE, as described above.

As further shown in Fig. 18, in some aspects, process 1800 may include transmitting, to the second UE and as part of the sidelink connection establishment procedure, a third sidelink communication indicating at least one of one or more preferred sidelink carriers for the first UE, one or more preferred sidelink BWPs for the first UE, or one or more preferred sidelink resource pools for the first UE (block 1830). For example, the first UE (e.g., using communication manager 140 and/or transmission component 2004, depicted in Fig. 20) may transmit, to the second UE and as part of the sidelink connection establishment procedure, a third sidelink communication indicating at least one of one or more preferred sidelink carriers for the first UE, one or more preferred sidelink BWPs for the first UE, or one or more preferred sidelink resource pools for the first UE, as described above.

As further shown in Fig. 18, in some aspects, process 1800 may include receiving, from the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE (block 1840). For example, the first UE (e.g., using communication manager 140 and/or reception component 2002, depicted in Fig. 20) may receive, from the second UE and as part of the sidelink connection establishment procedure, a fourth sidelink communication indicating at least one of one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE, as described above.

Process 1800 may include additional aspects, such as any single aspect or any combination of aspects described below and/or in connection with one or more other processes described elsewhere herein.

In a first aspect, at least one of the one or more determined sidelink carriers are based at least in part on at least one of the one or more supported sidelink carriers for the first UE, the one or more supported sidelink carriers for the second UE, or the one or more preferred sidelink carriers for the second UE, the one or more determined sidelink BWPs are based at least in part on at least one of the one or more supported sidelink BWPs for the first UE, the one or more supported sidelink BWPs for the second UE, or the one or more preferred sidelink BWPs for the second UE, or the one or more determined sidelink resource pools are based at least in part on at least one of the one or more supported sidelink resource pools for the first UE, the one or more supported sidelink resource pools for the second UE, or the one or more preferred sidelink resource pools for the second UE. In a second aspect, alone or in combination with the first aspect, the first sidelink communication indicates one or more supported IUC parameters for the second UE, wherein the second sidelink communication indicates one or more supported IUC parameters for the second UE, wherein the third sidelink communication indicates one or more preferred IUC parameters for the second UE, and wherein the fourth sidelink communication indicates one or more determined IUC parameters for sidelink communication between the first UE and the second UE.

In a third aspect, alone or in combination with one or more of the first and second aspects, the one or more determined IUC parameters are based at least in part on at least one of the one or more supported IUC parameters for the first UE, the one or more supported IUC parameters for the second UE, or the one or more preferred IUC parameters for the second UE. In a fourth aspect, alone or in combination with one or more of the first through third aspects, the one or more determined IUC parameters comprise at least one of an IUC configuration type parameter indicating whether a condition-based IUC configuration is to be used by the first UE and the second UE or a request-based IUC configuration is to be used by the first UE and the second UE, an IUC resource reporting parameter indicating whether the second UE is to indicate preferred sidelink resources or non-preferred sidelink resources for IUC, an IUC response timer parameter indicating a duration for an IUC response timer that is to be used by the first UE and the second UE, an IUC retransmission parameter indicating whether IUC retransmissions are enabled or are disabled for the first UE and the second UE, or an IUC resource parameter indicating at least one of one or more dedicated time domain resources or one or more dedicated frequency domain resources that are to be used by the first UE and the second UE for IUC.

Although Fig. 18 shows example blocks of process 1800, in some aspects, process 1800 may include additional blocks, fewer blocks, different blocks, or differently arranged blocks than those depicted in Fig. 18. Additionally, or alternatively, two or more of the blocks of process 1800 may be performed in parallel.

Fig. 19 is a diagram illustrating an example process 1900 performed, for example, by a first UE, in accordance with the present disclosure. Example process 1900 is an example where the first UE (e.g., first UE 120) performs operations associated with inter-UE sidelink scheduling.

As shown in Fig. 19, in some aspects, process 1900 may include determining that an IUC response condition has been satisfied (block 1910). For example, the first UE (e.g., using communication manager 140 and/or determination component 2014, depicted in Fig. 20) may determine that an IUC response condition has been satisfied, as described above.

As further shown in Fig. 19, in some aspects, process 1900 may include transmitting, to a second UE and based at least in part on determining that the IUC response condition has been satisfied, an IUC response that indicates at least one of one or more sidelink carriers, one or more sidelink BWPs, or one or more sidelink resource pools; and at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools (block 1920). For example, the first UE (e.g., using communication manager 140 and/or transmission component 2004, depicted in Fig. 20) may transmit, to a second UE and based at least in part on determining that the IUC response condition has been satisfied, an IUC response that indicates at least one of one or more sidelink carriers, one or more sidelink BWPs, or one or more sidelink resource pools; and at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools, as described above.

Process 1900 may include additional aspects, such as any single aspect or any combination of aspects described below and/or in connection with one or more other processes described elsewhere herein.

In an aspect, the IUC response condition comprises at least one of one or more sidelink measurements satisfying one or more associated thresholds, a change in a preferred sidelink carrier for the first UE, a change in a preferred sidelink BWP for the first UE, or a change in a preferred sidelink resource pool for the first UE.

Although Fig. 19 shows example blocks of process 1900, in some aspects, process 1900 may include additional blocks, fewer blocks, different blocks, or differently arranged blocks than those depicted in Fig. 19. Additionally, or alternatively, two or more of the blocks of process 1900 may be performed in parallel.

Fig. 20 is a diagram of an example apparatus 2000 for wireless communication. The apparatus 2000 may be a UE (e.g., a UE 120), or a UE may include the apparatus 2000. In some aspects, the apparatus 2000 includes a reception component 2002 and a transmission component 2004, which may be in communication with one another (for example, via one or more buses and/or one or more other components). As shown, the apparatus 2000 may communicate with another apparatus 2006 (such as a UE, a base station, or another wireless communication device) using the reception component 2002 and the transmission component 2004. As further shown, the apparatus 2000 may include a communication manager 2008, which may include or may be included in the communication manager 140. The communication manager 140 may include one or more of a timer component 2010, a monitoring component 2012, or a determination component 2014, among other examples.

In some aspects, the apparatus 2000 may be configured to perform one or more operations described herein in connection with Figs. 5A-12. Additionally, or alternatively, the apparatus 2000 may be configured to perform one or more processes described herein, such as process 1300 of Fig. 13, process 1400 of Fig. 14, process 1500 of Fig. 15, process 1600 of Fig. 16, process 1700 of Fig. 17, process 1800 of Fig. 18, process 1900 of Fig. 19, or a combination thereof. In some aspects, the apparatus 2000 and/or one or more components shown in Fig. 20 may include one or more components of the UE described in connection with Fig. 2. Additionally, or alternatively, one or more components shown in Fig. 20 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2002 may receive communications, such as reference signals, control information, data communications, or a combination thereof, from the apparatus 2006. The reception component 2002 may provide received communications to one or more other components of the apparatus 2000. In some aspects, the reception component 2002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2000. In some aspects, the reception component 2002 may include one or more antennas, a modem, a demodulator, a MIMO detector, a receive processor, a controller/processor, a memory, or a combination thereof, of the UE described in connection with Fig. 2.

The transmission component 2004 may transmit communications, such as reference signals, control information, data communications, or a combination thereof, to the apparatus 2006. In some aspects, one or more other components of the apparatus 2000 may generate communications and may provide the generated communications to the transmission component 2004 for transmission to the apparatus 2006. In some aspects, the transmission component 2004 may perform signal processing on the generated communications (such as filtering, amplification, modulation, digital-to-analog conversion, multiplexing, interleaving, mapping, or encoding, among other examples), and may transmit the processed signals to the apparatus 2006. In some aspects, the transmission component 2004 may include one or more antennas, a modem, a modulator, a transmit MIMO processor, a transmit processor, a controller/processor, a memory, or a combination thereof, of the UE described in connection with Fig. 2. In some aspects, the transmission component 2004 may be co-located with the reception component 2002 in a transceiver.

In some aspects, the transmission component 2004 may transmit, to the apparatus 2006, an IUC request, wherein the IUC request indicates at least one of one or more sidelink carriers, one or more sidelink BWPs, or one or more sidelink resource pools. In some aspects, the reception component 2002 may receive, from the apparatus 2006, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.

In some aspects, the reception component 2002 may receive, from the apparatus 2006, an IUC request, wherein the IUC request indicates at least one of one or more sidelink carriers, one or more sidelink BWPs, or one or more sidelink resource pools. In some aspects, the transmission component 2004 may transmit, to the apparatus 2006, an IUC response that indicates at least one of one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.

In some aspects, transmission component 2004 may transmit, to the apparatus 2006, a first IUC request. In some aspects, the timer component 2010 may initiate an IUC request timer based at least in part on the transmission component 2004 transmitting the first IUC request. In some aspects, transmission component 2004 may selectively transmit, to the apparatus 2006, a second IUC request based at least in part on whether the IUC request timer expires prior to the reception component 2002 of the apparatus 2000 receiving an IUC response from the apparatus 2006 for the first IUC request.

In some aspects, the reception component 2002 may receive, from the apparatus 2006, an IUC response prior to expiration of the IUC request timer, wherein the IUC response indicates at least one of a failure indication or a failure reason.

In some aspects, reception component 2002 may receive, from the apparatus 2006, an IUC response prior to expiration of the IUC request timer, wherein the IUC response indicates at least one of one or more preferred sidelink resources, or one or more non-preferred sidelink resources.

In some aspects, the transmission component 2004 may transmit, based at least in part on receiving the IUC response prior to expiration of the IUC request timer, at least one of a unicast sidelink transmission to the apparatus 2006, a multicast sidelink transmission to the apparatus 2006 and one or more other apparatuses 2006, or a broadcast sidelink transmission to the apparatus 2006 and the one or more other apparatuses 2006.

In some aspects, reception component 2002 may receive, from the apparatus 2006, a first IUC request. In some aspects, the timer component 2010 may initiate an IUC request timer based at least in part on the reception component 2002 receiving the first IUC request. In some aspects, the monitoring component 2012 may selectively monitor for a second IUC request from the apparatus 2006 based at least in part on whether the IUC request timer expires prior to the transmission component 2004 transmitting an IUC response to the apparatus 2006 for the first IUC request.

In some aspects, the transmission component 2004 may transmit, to the apparatus 2006, an IUC response prior to expiration of the IUC request timer, wherein the IUC response indicates at least one of a failure indication, or a failure reason.

In some aspects, the transmission component 2004 may transmit, to the apparatus 2006, an IUC response prior to expiration of the IUC request timer, wherein the IUC response indicates at least one of one or more preferred sidelink resources or one or more non-preferred sidelink resources.

In some aspects, the monitoring component 2012 may monitor, based at least in part on the transmission component 2004 transmitting the IUC response prior to expiration of the IUC request timer, for at least one of a unicast sidelink transmission from the apparatus 2006, a multicast sidelink transmission from the apparatus 2006, or a broadcast sidelink transmission from the apparatus 2006.

In some aspects, the transmission component 2004 may transmit, to the apparatus 2006 and as part of a sidelink connection establishment procedure, a first sidelink communication indicating at least one of one or more supported sidelink carriers for the apparatus 2000, one or more supported sidelink BWPs for the apparatus 2000, or one or more supported sidelink resource pools for the apparatus 2000. In some aspects, the reception component 2002 may receive, from the apparatus 2006 and as part of the sidelink connection establishment procedure, a second sidelink communication indicating at least one of one or more supported sidelink carriers for the apparatus 2006, one or more supported sidelink BWPs for the apparatus 2006, or one or more supported sidelink resource pools for the apparatus 2006. In some aspects, the reception component 2002 may receive, from the apparatus 2006 and as part of the sidelink connection establishment procedure, a third sidelink communication indicating at least one of one or more preferred sidelink carriers for the apparatus 2006, one or more preferred sidelink BWPs for the apparatus 2006, or one or more preferred sidelink resource pools for the apparatus 2006. In some aspects, transmission component 2004 may transmit, to the apparatus 2006 and as part of the sidelink connection establishment procedure, a fourth sidelink communication indicating at least one of one or more determined sidelink carriers for sidelink communication between the apparatus 2000 and the apparatus 2006, one or more determined sidelink BWPs for sidelink communication between the apparatus 2000 and the apparatus 2006, or one or more determined sidelink resource pools for sidelink communication between the apparatus 2000 and the apparatus 2006.

In some aspects, the determination component 2014 may determine at least one of the one or more determined sidelink carriers based at least in part on at least one of the one or more supported sidelink carriers for the apparatus 2000, the one or more supported sidelink carriers for the apparatus 2006, or the one or more preferred sidelink carriers for the apparatus 2006, the one or more determined sidelink BWPs based at least in part on at least one of the one or more supported sidelink BWPs for the apparatus 2000, the one or more supported sidelink BWPs for the apparatus 2006, or the one or more preferred sidelink BWPs for the apparatus 2006, or the one or more determined sidelink resource pools based at least in part on at least one of the one or more supported sidelink resource pools for the apparatus 2000, the one or more supported sidelink resource pools for the apparatus 2006, or the one or more preferred sidelink resource pools for the apparatus 2006.

In some aspects, the determination component 2014 may determine the one or more determined IUC parameters based at least in part on at least one of the one or more supported IUC parameters for the apparatus 2000, the one or more supported IUC parameters for the apparatus 2006, or the one or more preferred IUC parameters for the apparatus 2006.

In some aspects, the reception component 2002 may receive, from the apparatus 2006 and as part of a sidelink connection establishment procedure, a first sidelink communication indicating at least one of one or more supported sidelink carriers for the apparatus 2006, one or more supported sidelink BWPs for the apparatus 2006, or one or more supported sidelink resource pools for the apparatus 2006. In some aspects, the transmission component 2004 may transmit, to the apparatus 2006 and as part of the sidelink connection establishment procedure, a second sidelink communication indicating at least one of one or more supported sidelink carriers for the apparatus 2000, one or more supported sidelink BWPs for the apparatus 2000, or one or more supported sidelink resource pools for the apparatus 2000. In some aspects, the transmission component 2004 may transmit, to the apparatus 2006 and as part of the sidelink connection establishment procedure, a third sidelink communication indicating at least one of one or more preferred sidelink carriers for the apparatus 2000, one or more preferred sidelink BWPs for the apparatus 2000, or one or more preferred sidelink resource pools for the apparatus 2000. In some aspects, reception component 2002 may receive, from the apparatus 2006 and as part of the sidelink connection establishment procedure, a fourth sidelink communication indicating at least one of one or more determined sidelink carriers for sidelink communication between the apparatus 2000 and the apparatus 2006, one or more determined sidelink BWPs for sidelink communication between the apparatus 2000 and the apparatus 2006, or one or more determined sidelink resource pools for sidelink communication between the apparatus 2000 and the apparatus 2006.

In some aspects, the determination component 2014 may determine that an IUC response condition has been satisfied. In some aspects, the transmission component 2004 may transmit, to the apparatus 2006 and based at least in part on the determination of the determination component 2014 that the IUC response condition has been satisfied, an IUC response that indicates at least one of one or more sidelink carriers, one or more sidelink BWPs, or one or more sidelink resource pools; and at least one of one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools.

The number and arrangement of components shown in Fig. 20 are provided as an example. In practice, there may be additional components, fewer components, different components, or differently arranged components than those shown in Fig. 20. Furthermore, two or more components shown in Fig. 20 may be implemented within a single component, or a single component shown in Fig. 20 may be implemented as multiple, distributed components. Additionally, or alternatively, a set of (one or more) components shown in Fig. 20 may perform one or more functions described as being performed by another set of components shown in Fig. 20.

The following provides an overview of some Aspects of the present disclosure:
Aspect 1: A method of wireless communication performed by a first user equipment (UE), comprising: transmitting, to a second UE, an inter-UE coordination (IUC) request, wherein the IUC request indicates at least one of: one or more sidelink carriers, one or more sidelink bandwidth parts (BWPs), or one or more sidelink resource pools; and receiving, from the second UE, an IUC response that indicates at least one of: one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.
Aspect 2: The method of Aspect 1, wherein the IUC request indicates at least one of one or more preferred sidelink resource, one or more non-preferred sidelink resources, a priority, a resource selection window, or a periodicity.
Aspect 3: The method of Aspect 2, wherein transmitting the IUC request comprises: transmitting the IUC request in a medium access control (MAC) control element (MAC-CE); wherein the IUC request indicates the one or more sidelink carriers; and wherein the one or more sidelink carriers are indicated in the MAC-CE in one or more sidelink carrier index fields in the MAC-CE.
Aspect 4: The method of Aspect 2 or 3, wherein transmitting the IUC request comprises: transmitting the IUC request in a medium access control (MAC) control element (MAC-CE); wherein the IUC request indicates the one or more sidelink BWPs; and wherein the one or more sidelink BWPs are indicated in the MAC-CE in one or more sidelink BWP identifier fields in the MAC-CE.
Aspect 5: The method of one or more of Aspects 2-4, wherein transmitting the IUC request comprises: transmitting the IUC request in a medium access control (MAC) control element (MAC-CE); wherein the IUC request indicates the one or more sidelink resource pools; and wherein the one or more sidelink resource pools are indicated in the MAC-CE in one or more sidelink resource pools identifier fields in the MAC-CE.
Aspect 6: The method of one or more of Aspects 1-5, wherein receiving the IUC response comprises: receiving the IUC response in a medium access control (MAC) control element (MAC-CE).
Aspect 7: The method of Aspect 6, wherein the IUC request indicates the one or more sidelink carriers; and wherein at least one of: a sidelink BWP identifier field in the MAC-CE indicates a sidelink BWP in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included.
Aspect 8: The method of Aspect 6 or 7, wherein the IUC request indicates the one or more sidelink BWPs; and wherein at least one of: a sidelink carrier index field in the MAC-CE indicates a sidelink carrier in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included.
Aspect 9: The method of one or more of Aspects 6-8, wherein the IUC request indicates the one or more sidelink resource pools; and wherein at least one of: a sidelink carrier index field in the MAC-CE indicates a sidelink carrier in which at least one of the one or more sidelink time domain resources are included or the one or more sidelink frequency domain resources are included, or a sidelink BWP identifier field in the MAC-CE indicates a sidelink BWP in which at least one of the one or more sidelink time domain resources are included or the one or more sidelink frequency domain resources are included.
Aspect 10: A method of wireless communication performed by a first user equipment (UE), comprising: receiving, from a second UE, an inter-UE coordination (IUC) request, wherein the IUC request indicates at least one of: one or more sidelink carriers, one or more sidelink bandwidth parts (BWPs), or one or more sidelink resource pools; and transmitting, to the second UE, an IUC response that indicates at least one of: one or more sidelink time domain resources associated with at least one of the one or more sidelink carriers, the one or more sidelink BWPs, or the one or more sidelink resource pools, or one or more sidelink frequency domain resources associated with at least one of the one or more sidelink carriers, the one or more sidelink BWPs, or the one or more sidelink resource pools.
Aspect 11: The method of Aspect 10, wherein the IUC request indicates at least one of one or more preferred sidelink resource, one or more non-preferred sidelink resources, a priority, a resource selection window, or a periodicity.
Aspect 12: The method of Aspect 11, wherein receiving the IUC request comprises: receiving the IUC request in a medium access control (MAC) control element (MAC-CE); wherein the IUC request indicates the one or more sidelink carriers; and wherein the one or more sidelink carriers are indicated in the MAC-CE in one or more sidelink carrier index fields in the MAC-CE.
Aspect 13: The method of Aspect 11 or 12, wherein receiving the IUC request comprises: receiving the IUC request in a medium access control (MAC) control element (MAC-CE); wherein the IUC request indicates the one or more sidelink BWPs; and wherein the one or more sidelink BWPs are indicated in the MAC-CE in one or more sidelink BWP identifier fields in the MAC-CE.
Aspect 14: The method of one or more of Aspects 11-13, wherein receiving the IUC request comprises: receiving the IUC request in a medium access control (MAC) control element (MAC-CE); wherein the IUC request indicates the one or more sidelink resource pools; and wherein the one or more sidelink resource pools are indicated in the MAC-CE in one or more sidelink resource pools identifier fields in the MAC-CE.
Aspect 15: The method of one or more of Aspects 10-14, wherein transmitting the IUC response comprises: transmitting the IUC response in a medium access control (MAC) control element (MAC-CE).
Aspect 16: The method of Aspect 15, wherein the IUC request indicates the one or more sidelink carriers; and wherein at least one of: a sidelink BWP identifier field in the MAC-CE indicates a sidelink BWP in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included.
Aspect 17: The method of Aspect 15 or 16, wherein the IUC request indicates the one or more sidelink BWPs; and wherein at least one of: a sidelink carrier index field in the MAC-CE indicates a sidelink carrier in which at least one of the one or more sidelink time domain resources are included or the one or more sidelink frequency domain resources are included, or a sidelink resource pool identifier field in the MAC-CE indicates a sidelink resource pool in which at least one of the one or more sidelink time domain resources are included or the one or more sidelink frequency domain resources are included.
Aspect 18: The method of one or more of Aspects 15-17, wherein the IUC request indicates the one or more sidelink resource pools; and wherein at least one of: a sidelink carrier index field in the MAC-CE indicates a sidelink carrier in which at least one of the one or more sidelink time domain resources are included or the one or more sidelink frequency domain resources are included, or a sidelink BWP identifier field in the MAC-CE indicates a sidelink BWP in which at least one of the one or more sidelink time domain resources are included or the one or more sidelink frequency domain resources are included.
Aspect 19: A method of wireless communication performed by a first user equipment (UE), comprising: transmitting, to a second UE, a first inter-UE coordination (IUC) request; and initiating an IUC request timer based at least in part on transmitting the first IUC request. Some aspects may include transmitting, to the second UE, a sidelink configuration that indicates one or more parameters associated with the IUC request timer.
Aspect 20: The method of Aspect 19, further comprising: selectively transmitting, to the second UE, a second IUC request based at least in part on whether the IUC request timer expires prior to the first UE receiving an IUC response from the second UE for the first IUC request. In some aspects, selectively transmitting the second IUC request comprises: transmitting the second IUC request based at least in part on the IUC request timer expiring prior to receiving an IUC response from the second UE for the first IUC request.
Aspect 21: The method of Aspect 19 or 20, further comprising: receiving, from the second UE, an IUC response prior to expiration of the IUC request timer. In some aspects, the IUC response indicates at least one of: a failure indication, or a failure reason; wherein selectively transmitting the second IUC request comprises: transmitting the second IUC request based at least in part on receiving the IUC response. In some aspects, selectively transmitting the second IUC request comprises: transmitting the second IUC request based at least in part on receiving the IUC response.
Aspect 22: The method of Aspect 21, wherein the second IUC request indicates at least one of: a different sidelink carrier than a sidelink carrier indicated in the first IUC request, a different sidelink bandwidth part (BWP) than a sidelink BWP indicated in the first IUC request, or a different resource pool than a resource pool indicated in the first IUC request.
Aspect 23: The method of one or more of Aspects 19-22, further comprising: receiving, from the second UE, an IUC response prior to expiration of the IUC request timer. In some aspects, the IUC response indicates at least one of: one or more preferred sidelink resources, or one or more non-preferred sidelink resources. In some aspects, selectively transmitting the second IUC request comprises: refraining from transmitting the second IUC request based at least in part on receiving the IUC response prior to expiration of the IUC request timer. In some aspects, selectively transmitting the second IUC request comprises: refraining from transmitting the second IUC request based at least in part on receiving the IUC response prior to expiration of the IUC request timer.
Aspect 24: The method of Aspect 23, further comprising: transmitting, based at least in part on receiving the IUC response prior to expiration of the IUC request timer, at least one of: a unicast sidelink transmission to the second UE, a multicast sidelink transmission to the second UE and one or more third UEs, or a broadcast sidelink transmission to the second UE and the one or more third UEs.
Aspect 25: A method of wireless communication performed by a first user equipment (UE), comprising: receiving, from a second UE, a first inter-UE coordination (IUC) request; and initiating an IUC request timer based at least in part on receiving the first IUC request. Some aspects may include receiving, from the second UE, a sidelink configuration that indicates one or more parameters associated with the IUC request timer.
Aspect 26: The method of Aspect 25, further comprising: selectively monitoring for a second IUC request from the second UE based at least in part on whether the IUC request timer expires prior to transmitting an IUC response to the second UE for the first IUC request. In some aspects, selectively monitoring for the second IUC request comprises: monitoring for the second IUC request based at least in part on the IUC request timer expiring prior to the first UE transmitting an IUC response to the second UE for the first IUC request.
Aspect 27: The method of Aspect 25 or 26, further comprising: transmitting, to the second UE, an IUC response prior to expiration of the IUC request timer. In some aspects, the IUC response indicates at least one of: a failure indication, or a failure reason; wherein selectively monitoring for the second IUC request comprises: monitoring for the second IUC request based at least in part on transmitting the IUC response. In some aspects, selectively monitoring for the second IUC request comprises: monitoring for the second IUC request based at least in part on transmitting the IUC response.
Aspect 28: The method of one or more of Aspects 25-27, further comprising: transmitting, to the second UE, an IUC response prior to expiration of the IUC request timer. In some aspects, the IUC response indicates at least one of: one or more preferred sidelink resources, or one or more non-preferred sidelink resources. In some aspects, selectively monitoring for the second IUC request comprises: refraining from monitoring for the second IUC request based at least in part on transmitting the IUC response prior to expiration of the IUC request timer. In some aspects, selectively monitoring for the second IUC request comprises: refraining from monitoring for the second IUC request based at least in part on transmitting the IUC response prior to expiration of the IUC request timer.
Aspect 29: The method of Aspect 28, further comprising: monitoring, based at least in part on transmitting the IUC response prior to expiration of the IUC request timer, for at least one of: a unicast sidelink transmission from the second UE, a multicast sidelink transmission from the second UE, or a broadcast sidelink transmission from the second UE.
Aspect 30: A method of wireless communication performed by a first user equipment (UE), comprising: transmitting, to a second UE and as part of a sidelink connection establishment procedure, a first sidelink communication indicating at least one of: one or more supported sidelink carriers for the first UE, one or more supported sidelink bandwidth parts (BWPs) for the first UE, or one or more supported sidelink resource pools for the first UE; receiving, from the second UE and as part of the sidelink connection establishment procedure, a second sidelink communication indicating at least one of: one or more supported sidelink carriers for the second UE, one or more supported sidelink BWPs for the second UE, or one or more supported sidelink resource pools for the second UE; receiving, from the second UE and as part of the sidelink connection establishment procedure, a third sidelink communication indicating at least one of: one or more preferred sidelink carriers for the second UE, one or more preferred sidelink BWPs for the second UE, or one or more preferred sidelink resource pools for the second UE; and transmitting, to the second UE and as part of the sidelink connection establishment procedure, a fourth sidelink communication indicating at least one of: one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.
Aspect 31: The method of Aspect 30, further comprising: determining at least one of: the one or more determined sidelink carriers based at least in part on at least one of the one or more supported sidelink carriers for the first UE, the one or more supported sidelink carriers for the second UE, or the one or more preferred sidelink carriers for the second UE, the one or more determined sidelink BWPs based at least in part on at least one of the one or more supported sidelink BWPs for the first UE, the one or more supported sidelink BWPs for the second UE, or the one or more preferred sidelink BWPs for the second UE, or the one or more determined sidelink resource pools based at least in part on at least one of the one or more supported sidelink resource pools for the first UE, the one or more supported sidelink resource pools for the second UE, or the one or more preferred sidelink resource pools for the second UE.
Aspect 32: The method of Aspect 30 or 31, wherein the first sidelink communication indicates one or more supported inter-UE coordination (IUC) parameters for the first UE; wherein the second sidelink communication indicates one or more supported IUC parameters for the second UE; wherein the third sidelink communication indicates one or more preferred IUC parameters for the second UE; and wherein the fourth sidelink communication indicates one or more determined IUC parameters for sidelink communication between the first UE and the second UE.
Aspect 33: The method of Aspect 32, further comprising: determining the one or more determined IUC parameters based at least in part on at least one of the one or more supported IUC parameters for the first UE, the one or more supported IUC parameters for the second UE, or the one or more preferred IUC parameters for the second UE.
Aspect 34: The method of Aspect 32 or 33, wherein the one or more determined IUC parameters comprise at least one of: an IUC configuration type parameter indicating whether a condition-based IUC configuration is to be used by the first UE and the second UE or a request-based IUC configuration is to be used by the first UE and the second UE, an IUC resource reporting parameter indicating whether the second UE is to indicate preferred sidelink resources or non-preferred sidelink resources for IUC, an IUC response timer parameter indicating a duration for an IUC response timer that is to be used by the first UE and the second UE, an IUC retransmission parameter indicating whether IUC retransmissions are enabled or are disabled for the first UE and the second UE, or an IUC resource parameter indicating at least one of one or more dedicated time domain resources or one or more dedicated frequency domain resources that are to be used by the first UE and the second UE for IUC.
Aspect 35: A method of wireless communication performed by a first user equipment (UE), comprising: receiving, from a second UE and as part of a sidelink connection establishment procedure, a first sidelink communication indicating at least one of: one or more supported sidelink carriers for the second UE, one or more supported sidelink bandwidth parts (BWPs) for the second UE, or one or more supported sidelink resource pools for the second UE; transmitting, to the second UE and as part of the sidelink connection establishment procedure, a second sidelink communication indicating at least one of: one or more supported sidelink carriers for the first UE, one or more supported sidelink BWPs for the first UE, or one or more supported sidelink resource pools for the first UE; transmitting, to the second UE and as part of the sidelink connection establishment procedure, a third sidelink communication indicating at least one of: one or more preferred sidelink carriers for the first UE, one or more preferred sidelink BWPs for the first UE, or one or more preferred sidelink resource pools for the first UE; and receiving, from the second UE and as part of the sidelink connection establishment procedure, a fourth sidelink communication indicating at least one of: one or more determined sidelink carriers for sidelink communication between the first UE and the second UE, one or more determined sidelink BWPs for sidelink communication between the first UE and the second UE, or one or more determined sidelink resource pools for sidelink communication between the first UE and the second UE.
Aspect 36: The method of Aspect 35, wherein at least one of: the one or more determined sidelink carriers are based at least in part on at least one of the one or more supported sidelink carriers for the first UE, the one or more supported sidelink carriers for the second UE, or the one or more preferred sidelink carriers for the second UE, the one or more determined sidelink BWPs are based at least in part on at least one of the one or more supported sidelink BWPs for the first UE, the one or more supported sidelink BWPs for the second UE, or the one or more preferred sidelink BWPs for the second UE, or the one or more determined sidelink resource pools are based at least in part on at least one of the one or more supported sidelink resource pools for the first UE, the one or more supported sidelink resource pools for the second UE, or the one or more preferred sidelink resource pools for the second UE.
Aspect 37: The method of Aspect 35 or 36, wherein the first sidelink communication indicates one or more supported inter-UE coordination (IUC) parameters for the second UE; wherein the second sidelink communication indicates one or more supported IUC parameters for the second UE; wherein the third sidelink communication indicates one or more preferred IUC parameters for the second UE; and wherein the fourth sidelink communication indicates one or more determined IUC parameters for sidelink communication between the first UE and the second UE.
Aspect 38: The method of Aspect 37, wherein the one or more determined IUC parameters are based at least in part on at least one of the one or more supported IUC parameters for the first UE, the one or more supported IUC parameters for the second UE, or the one or more preferred IUC parameters for the second UE.
Aspect 39: The method of Aspect 37 or 38, wherein the one or more determined IUC parameters comprise at least one of: an IUC configuration type parameter indicating whether a condition-based IUC configuration is to be used by the first UE and the second UE or a request-based IUC configuration is to be used by the first UE and the second UE, an IUC resource reporting parameter indicating whether the second UE is to indicate preferred sidelink resources or non-preferred sidelink resources for IUC, an IUC response timer parameter indicating a duration for an IUC response timer that is to be used by the first UE and the second UE, an IUC retransmission parameter indicating whether IUC retransmissions are enabled or are disabled for the first UE and the second UE, or an IUC resource parameter indicating at least one of one or more dedicated time domain resources or one or more dedicated frequency domain resources that are to be used by the first UE and the second UE for IUC.
Aspect 40: A method of wireless communication performed by a first user equipment (UE), comprising: determining that an inter-UE coordination (IUC) response condition has been satisfied; and transmitting, to a second UE and based at least in part on determining that the IUC response condition has been satisfied, an IUC response that indicates: at least one of: one or more sidelink carriers, one or more sidelink bandwidth parts (BWPs), or one or more sidelink resource pools; and at least one of: one or more time domain resources associated with at least one of the one or more sidelink carriers, the one or more sidelink BWPs, or the one or more sidelink resource pools, or one or more frequency domain resources associated with at least one of the one or more sidelink carriers, the one or more sidelink BWPs, or the one or more sidelink resource pools.
Aspect 41: The method of Aspect 40, wherein the IUC response condition comprises at least one of: one or more sidelink measurements satisfying one or more associated thresholds, a change in a preferred sidelink carrier for the first UE, a change in a preferred sidelink BWP for the first UE, or a change in a preferred sidelink resource pool for the first UE.
Aspect 42: An apparatus for wireless communication at a device, comprising a processor; memory coupled with the processor; and instructions stored in the memory and executable by the processor to cause the apparatus to perform the method of one or more of Aspects 1-9.
Aspect 43: A device for wireless communication, comprising a memory and one or more processors coupled to the memory, the one or more processors configured to perform the method of one or more of Aspects 1-9.
Aspect 44: An apparatus for wireless communication, comprising at least one means for performing the method of one or more of Aspects 1-9.
Aspect 45: A non-transitory computer-readable medium storing code for wireless communication, the code comprising instructions executable by a processor to perform the method of one or more of Aspects 1-9.
Aspect 46: A non-transitory computer-readable medium storing a set of instructions for wireless communication, the set of instructions comprising one or more instructions that, when executed by one or more processors of a device, cause the device to perform the method of one or more of Aspects 1-9.
Aspect 47: An apparatus for wireless communication at a device, comprising a processor; memory coupled with the processor; and instructions stored in the memory and executable by the processor to cause the apparatus to perform the method of one or more of Aspects 10-18.
Aspect 48: A device for wireless communication, comprising a memory and one or more processors coupled to the memory, the one or more processors configured to perform the method of one or more of Aspects 10-18.
Aspect 49: An apparatus for wireless communication, comprising at least one means for performing the method of one or more of Aspects 10-18.
Aspect 50: A non-transitory computer-readable medium storing code for wireless communication, the code comprising instructions executable by a processor to perform the method of one or more of Aspects 10-18.
Aspect 51: A non-transitory computer-readable medium storing a set of instructions for wireless communication, the set of instructions comprising one or more instructions that, when executed by one or more processors of a device, cause the device to perform the method of one or more of Aspects 10-18.
Aspect 52: An apparatus for wireless communication at a device, comprising a processor; memory coupled with the processor; and instructions stored in the memory and executable by the processor to cause the apparatus to perform the method of one or more of Aspects 19-24.
Aspect 53: A device for wireless communication, comprising a memory and one or more processors coupled to the memory, the one or more processors configured to perform the method of one or more of Aspects 19-24.
Aspect 54: An apparatus for wireless communication, comprising at least one means for performing the method of one or more of Aspects 19-24.
Aspect 55: A non-transitory computer-readable medium storing code for wireless communication, the code comprising instructions executable by a processor to perform the method of one or more of Aspects 19-24.
Aspect 56: A non-transitory computer-readable medium storing a set of instructions for wireless communication, the set of instructions comprising one or more instructions that, when executed by one or more processors of a device, cause the device to perform the method of one or more of Aspects 19-24.
Aspect 57: An apparatus for wireless communication at a device, comprising a processor; memory coupled with the processor; and instructions stored in the memory and executable by the processor to cause the apparatus to perform the method of one or more of Aspects 25-29.
Aspect 58: A device for wireless communication, comprising a memory and one or more processors coupled to the memory, the one or more processors configured to perform the method of one or more of Aspects 25-29.
Aspect 59: An apparatus for wireless communication, comprising at least one means for performing the method of one or more of Aspects 25-29.
Aspect 60: A non-transitory computer-readable medium storing code for wireless communication, the code comprising instructions executable by a processor to perform the method of one or more of Aspects 25-29.
Aspect 61: A non-transitory computer-readable medium storing a set of instructions for wireless communication, the set of instructions comprising one or more instructions that, when executed by one or more processors of a device, cause the device to perform the method of one or more of Aspects 25-29.
Aspect 62: An apparatus for wireless communication at a device, comprising a processor; memory coupled with the processor; and instructions stored in the memory and executable by the processor to cause the apparatus to perform the method of one or more of Aspects 30-34.
Aspect 63: A device for wireless communication, comprising a memory and one or more processors coupled to the memory, the one or more processors configured to perform the method of one or more of Aspects 30-34.
Aspect 64: An apparatus for wireless communication, comprising at least one means for performing the method of one or more of Aspects 30-34.
Aspect 65: A non-transitory computer-readable medium storing code for wireless communication, the code comprising instructions executable by a processor to perform the method of one or more of Aspects 30-34.
Aspect 66: A non-transitory computer-readable medium storing a set of instructions for wireless communication, the set of instructions comprising one or more instructions that, when executed by one or more processors of a device, cause the device to perform the method of one or more of Aspects 30-34.
Aspect 67: An apparatus for wireless communication at a device, comprising a processor; memory coupled with the processor; and instructions stored in the memory and executable by the processor to cause the apparatus to perform the method of one or more of Aspects 35-39.
Aspect 68: A device for wireless communication, comprising a memory and one or more processors coupled to the memory, the one or more processors configured to perform the method of one or more of Aspects 35-39.
Aspect 69: An apparatus for wireless communication, comprising at least one means for performing the method of one or more of Aspects 35-39.
Aspect 70: A non-transitory computer-readable medium storing code for wireless communication, the code comprising instructions executable by a processor to perform the method of one or more of Aspects 35-39.
Aspect 71: A non-transitory computer-readable medium storing a set of instructions for wireless communication, the set of instructions comprising one or more instructions that, when executed by one or more processors of a device, cause the device to perform the method of one or more of Aspects 35-39.
Aspect 72: An apparatus for wireless communication at a device, comprising a processor; memory coupled with the processor; and instructions stored in the memory and executable by the processor to cause the apparatus to perform the method of one or more of Aspects 40 or 41.
Aspect 73: A device for wireless communication, comprising a memory and one or more processors coupled to the memory, the one or more processors configured to perform the method of one or more of Aspects 40 or 41.
Aspect 74: An apparatus for wireless communication, comprising at least one means for performing the method of one or more of Aspects 40 or 41.
Aspect 75: A non-transitory computer-readable medium storing code for wireless communication, the code comprising instructions executable by a processor to perform the method of one or more of Aspects 40 or 41.
Aspect 76: A non-transitory computer-readable medium storing a set of instructions for wireless communication, the set of instructions comprising one or more instructions that, when executed by one or more processors of a device, cause the device to perform the method of one or more of Aspects 40 or 41.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").
**In the following, further embodiments are described to facilitate the understanding of the invention:**
1. A first user equipment (UE) for wireless communication, comprising:
   a memory; and
   one or more processors, coupled to the memory, configured to:
      transmit, to a second UE, an inter-UE coordination (IUC) request,
         wherein the IUC request indicates at least one of:
         one or more sidelink carriers,
         one or more sidelink bandwidth parts (BWPs), or
         one or more sidelink resource pools; and
      receive, from the second UE, an IUC response that indicates at least one of:
         one or more sidelink time domain resources associated with at least one of the one or more sidelink carriers, the one or more sidelink BWPs, or the one or more sidelink resource pools, or
         one or more sidelink frequency domain resources associated with at least one of the one or more sidelink carriers, the one or more sidelink BWPs, or the one or more sidelink resource pools.
2. The first UE of embodiment 1, wherein the IUC request indicates at least one of:
   one or more preferred sidelink resource,
   one or more non-preferred sidelink resources,
   a priority,
   a resource selection window, or
   a periodicity.
3. The first UE of embodiment 1, wherein the one or more processors, to transmit the IUC request, are configured to:
   transmit the IUC request in a medium access control (MAC) control element (MAC-CE);
   wherein the IUC request indicates the one or more sidelink carriers; and
   wherein the one or more sidelink carriers are indicated in the MAC-CE in one or more sidelink carrier index fields in the MAC-CE.
4. The first UE of embodiment 1, wherein the one or more processors, to transmit the IUC request, are configured to:
   transmit the IUC request in a medium access control (MAC) control element (MAC-CE);
   wherein the IUC request indicates the one or more sidelink BWPs; and
   wherein the one or more sidelink BWPs are indicated in the MAC-CE in one or more sidelink BWP identifier fields in the MAC-CE.
5. The first UE of embodiment 1, wherein the one or more processors, to transmit the IUC request, are configured to:
   transmit the IUC request in a medium access control (MAC) control element (MAC-CE);
   wherein the IUC request indicates the one or more sidelink resource pools; and
   wherein the one or more sidelink resource pools are indicated in the MAC-CE in one or more sidelink resource pools identifier fields in the MAC-CE.
6. The first UE of embodiment 1, wherein the one or more processors, to receive the IUC response, are configured to:
   receive the IUC response in a medium access control (MAC) control element (MAC-CE).
7. The first UE of embodiment 6, wherein the IUC request indicates the one or more sidelink carriers; and
   wherein at least one of:
   a sidelink BWP identifier field in the MAC-CE indicates a sidelink BWP in which at least one of the one or more sidelink time domain resources are included or the one or more sidelink frequency domain resources are included, or
   a sidelink resource pool identifier field in the MAC-CE indicates a sidelink resource pool in which at least one of the one or more sidelink time domain resources are included or the one or more sidelink frequency domain resources are included.
8. The first UE of embodiment 6, wherein the IUC request indicates the one or more sidelink BWPs; and
   wherein at least one of:
   a sidelink carrier index field in the MAC-CE indicates a sidelink carrier in which at least one of the one or more sidelink time domain resources are included or the one or more sidelink frequency domain resources are included, or
   a sidelink resource pool identifier field in the MAC-CE indicates a sidelink resource pool in which at least one of the one or more sidelink time domain resources are included or the one or more sidelink frequency domain resources are included.
9. The first UE of embodiment 6, wherein the IUC request indicates the one or more sidelink resource pools; and
   wherein at least one of:
   a sidelink carrier index field in the MAC-CE indicates a sidelink carrier in which at least one of the one or more sidelink time domain resources are included or the one or more sidelink frequency domain resources are included, or
   a sidelink BWP identifier field in the MAC-CE indicates a sidelink BWP in which at least one of the one or more sidelink time domain resources are included or the one or more sidelink frequency domain resources are included.
10. A first user equipment (UE) for wireless communication, comprising:
   a memory; and
   one or more processors, coupled to the memory, configured to:
      receive, from a second UE, an inter-UE coordination (IUC) request,
         wherein the IUC request indicates at least one of:
         one or more sidelink carriers,
         one or more sidelink bandwidth parts (BWPs), or
         one or more sidelink resource pools; and
      transmit, to the second UE, an IUC response that indicates at least one of:
         one or more sidelink time domain resources associated with at least one of the one or more sidelink carriers, the one or more sidelink BWPs, or the one or more sidelink resource pools, or
         one or more sidelink frequency domain resources associated with at least one of the one or more sidelink carriers, the one or more sidelink BWPs, or the one or more sidelink resource pools.
11. The first UE of embodiment 10, wherein the IUC request indicates at least one of:
   one or more preferred sidelink resource,
   one or more non-preferred sidelink resources,
   a priority,
   a resource selection window, or
   a periodicity.
12. The first UE of embodiment 11, wherein the one or more processors, to receive the IUC request, are configured to:
   receive the IUC request in a medium access control (MAC) control element (MAC-CE);
   wherein the IUC request indicates the one or more sidelink carriers; and
   wherein the one or more sidelink carriers are indicated in the MAC-CE in one or more sidelink carrier index fields in the MAC-CE.
13. The first UE of embodiment 11, wherein the one or more processors, to receive the IUC request, are configured to:
   receive the IUC request in a medium access control (MAC) control element (MAC-CE);
   wherein the IUC request indicates the one or more sidelink BWPs; and
   wherein the one or more sidelink BWPs are indicated in the MAC-CE in one or more sidelink BWP identifier fields in the MAC-CE.
14. The first UE of embodiment 11, wherein the one or more processors, to receive the IUC request, are configured to:
   receive the IUC request in a medium access control (MAC) control element (MAC-CE);
   wherein the IUC request indicates the one or more sidelink resource pools; and
   wherein the one or more sidelink resource pools are indicated in the MAC-CE in one or more sidelink resource pools identifier fields in the MAC-CE.
15. The first UE of embodiment 10, wherein the one or more processors, to transmit the IUC response, are configured to:
   transmit the IUC response in a medium access control (MAC) control element (MAC-CE).
16. A first user equipment (UE) for wireless communication, comprising:
   a memory; and
   one or more processors, coupled to the memory, configured to:
      transmit, to a second UE, a first inter-UE coordination (IUC) request; and
      initiate an IUC request timer based at least in part on transmitting the first IUC request.
17. The first UE of embodiment 16, wherein the one or more processors are further configured to:
   selectively transmit, to the second UE, a second IUC request based at least in part on whether the IUC request timer expires prior to the first UE receiving an IUC response from the second UE for the first IUC request.
18. The first UE of embodiment 17, wherein the one or more processors, to selectively transmit the second IUC request, are configured to:
   transmit the second IUC request based at least in part on the IUC request timer expiring prior to receiving an IUC response from the second UE for the first IUC request.
19. The first UE of embodiment 16, wherein the one or more processors are further configured to:
   receive, from the second UE, an IUC response prior to expiration of the IUC request timer.
20. The first UE of embodiment 19, wherein the second IUC request indicates at least one of:
   a different sidelink carrier than a sidelink carrier indicated in the first IUC request,
   a different sidelink bandwidth part (BWP) than a sidelink BWP indicated in the first IUC request, or
   a different resource pool than a resource pool indicated in the first IUC request.
21. The first UE of embodiment 19, wherein the wherein the IUC response indicates at least one of:
   one or more preferred sidelink resources, or
   one or more non-preferred sidelink resources.
22. The first UE of embodiment 19, wherein the one or more processors are further configured to:
   transmit, based at least in part on receiving the IUC response prior to expiration of the IUC request timer, at least one of:
   a unicast sidelink transmission to the second UE,
   a multicast sidelink transmission to the second UE and one or more third UEs, or
   a broadcast sidelink transmission to the second UE and the one or more third UEs.
23. The first UE of embodiment 16, wherein the one or more processors are further configured to:
   transmit, to the second UE, a sidelink configuration that indicates one or more parameters associated with the IUC request timer.
24. A first user equipment (UE) for wireless communication, comprising:
   a memory; and
   one or more processors, coupled to the memory, configured to:
      receive, from a second UE, a first inter-UE coordination (IUC) request; and
      initiate an IUC request timer based at least in part on receiving the first IUC request.
25. The first UE of embodiment 24, wherein the one or more processors are further configured to:
   selectively monitor for a second IUC request from the second UE based at least in part on whether the IUC request timer expires prior to transmitting an IUC response to the second UE for the first IUC request.
26. The first UE of embodiment 25, wherein the one or more processors, to selectively monitor for the second IUC request, are configured to:
   monitor for the second IUC request based at least in part on the IUC request timer expiring prior to the first UE transmitting an IUC response to the second UE for the first IUC request.
27. The first UE of embodiment 24, wherein the one or more processors are further configured to:
   form or transmit, to the second UE, an IUC response prior to expiration of the IUC request timer.
28. The first UE of embodiment 27, wherein the IUC response indicates at least one of:
   one or more preferred sidelink resources, or
   one or more non-preferred sidelink resources.
29. The first UE of embodiment 28, wherein the one or more processors are further configured to:
   monitor, based at least in part on transmitting the IUC response prior to expiration of the IUC request timer, for at least one of:
   a unicast sidelink transmission from the second UE,
   a multicast sidelink transmission from the second UE, or
   a broadcast sidelink transmission from the second UE.
30. The first UE of embodiment 24, wherein the one or more processors are further configured to:
   receive, from the second UE, a sidelink configuration that indicates one or more parameters associated with the IUC request timer.

## Claims

1. A method of wireless communication performed by a first user equipment, UE, comprising:
transmitting (1510), to a second UE, a first inter-UE coordination, IUC, request; and
initiating (1520) an IUC request timer based at least in part on transmitting the first IUC request.

2. The method of claim 1, further comprising:
selectively transmitting, to the second UE, a second IUC request based at least in part on whether the IUC request timer expires prior to the first UE receiving an IUC response from the second UE for the first IUC request.

3. The method of claim 2, wherein selectively transmitting the second IUC request comprises:
transmitting the second IUC request based at least in part on the IUC request timer expiring prior to receiving an IUC response from the second UE for the first IUC request.

4. The method of claims 1 or 2, further comprising:
receiving, from the second UE, an IUC response prior to expiration of the IUC request timer.

5. The method of claim 4, wherein the second IUC request indicates at least one of:
a different sidelink carrier than a sidelink carrier indicated in the first IUC request,
a different sidelink bandwidth part, BWP, than a sidelink BWP indicated in the first IUC request, or
a different resource pool than a resource pool indicated in the first IUC request.

6. The method of one or more of claims 1-5, wherein the IUC response indicates at least one of:
one or more preferred sidelink resources, or
one or more non-preferred sidelink resources.

7. The method of claim 6, further comprising:
transmitting, based at least in part on receiving the IUC response prior to expiration of the IUC request timer, at least one of:
a unicast sidelink transmission to the second UE,
a multicast sidelink transmission to the second UE and one or more third UEs, or
a broadcast sidelink transmission to the second UE and the one or more third UEs.

8. The method of one or more of claims 1 to 7, further comprising:
transmitting, to the second UE, a sidelink configuration that indicates one or more parameters associated with the IUC request timer.

9. A method of wireless communication performed by a first user equipment, UE, comprising:
receiving (1610), from a second UE, a first inter-UE coordination, IUC, request;
and
initiating (1620) an IUC request timer based at least in part on receiving the first IUC request.

10. The method of claim 9, further comprising:
selectively monitoring for a second IUC request from the second UE based at least in part on whether the IUC request timer expires prior to transmitting an IUC response to the second UE for the first IUC request.

11. The method of claim 10, wherein selectively monitoring for the second IUC request comprises:
monitoring for the second IUC request based at least in part on the IUC request timer expiring prior to the first UE transmitting an IUC response to the second UE for the first IUC request.

12. The method of one or more of claims 9-11, further comprising:
transmitting, to the second UE, an IUC response prior to expiration of the IUC request timer, wherein the IUC response indicates at least one of:
one or more preferred sidelink resources, or
one or more non-preferred sidelink resources.

13. The method of claim 12, further comprising:
monitoring, based at least in part on transmitting the IUC response prior to expiration of the IUC request timer, for at least one of:
a unicast sidelink transmission from the second UE,
a multicast sidelink transmission from the second UE, or
a broadcast sidelink transmission from the second UE.

14. A first user equipment, UE, comprising:
means for transmitting, to a second UE, a first inter-UE coordination, IUC, request; and
means for initiating an IUC request timer based at least in part on transmitting the first IUC request.

15. A first user equipment, UE, comprising:
means for receiving, from a second UE, a first inter-UE coordination, IUC, request; and
means for initiating an IUC request timer based at least in part on receiving the first IUC request.
